# EUROPÄISCHE PATENTSCHRIFT

(11) **EP 3 114 600 B1**
(45) Veröffentlichungstag und Bekanntmachung des Hinweises auf die Patenterteilung: **02.12.2020**
(21) Anmeldenummer: 15710154.4
(22) Anmeldetag: 06.03.2015
(51) Int. Cl.: G06F 21/33, G06F 21/34

(54) **SICHERHEITSSYSTEM MIT ZUGRIFFSKONTROLLE**
SECURITY SYTEM WITH ACCESS CONTROL
SYSTÈME DE SÉCURITÉ À CONTRÔLE D'ACCÈS

(30) Priorität: 07.03.2014 DE 102014204252
(43) Veröffentlichungstag der Anmeldung: 11.01.2017
(73) Patentinhaber: Bundesdruckerei GmbH, 10969 Berlin (DE)
(72) Erfinder: MORGNER, Frank, 15537 Grünheide (DE)
(74) Vertreter: Richardt Patentanwälte PartG mbB
(86) Internationale Anmeldenummer: PCT/EP2015/054775
(87) Internationale Veröffentlichungsnummer: WO 2015/132403

(56) Entgegenhaltungen:
- EP-A1- 1 811 421
- WO-A1-2006/063935
- US-A1- 2003 172 090
- "Methods for Testing and Specification (MTS); ePassport Readers Interoperability Support; Framework for Developing Conformance Test Specifications; ePassport Testing Framework;DTR-MTS00126 draft 0.12", ETSI DRAFT; DTR-MTS00126 DRAFT 0.12, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. MTS, Nr. V0.0.12, 29. Juli 2011 (2011-07-29), Seiten 1-116, XP014097171, [gefunden am 2011-07-29]
- BSI: "Technische Richtlinie eID-Server", , 1. April 2010 (2010-04-01), Seiten 1-51, XP055001820, Bonn Gefunden im Internet: URL:https://www.bsi.bund.de [gefunden am 2011-07-01]
- BUCHMANN NICOLAS ET AL ABDELZAHER TAREK ZAHERIOTALLINOIS EDU UNIVERSITY OF ILLINOIS AT URBANA CHAMPAIGN DEPARTMENT OF COMPUTER SCI: "Towards a More Secure and Scalable Verifying PKI of eMRTD", 12. September 2013 (2013-09-12), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 102 - 118, XP047267877, ISSN: 0302-9743 das ganze Dokument

## Beschreibung

Die Erfindung betrifft ein Sicherheitssystem mit einer zugriffsbeschränkten Sicherungsanlage, einen Autorisierungsserver, einen Authentifizierungsserver, eine Kontrolleinheit sowie entsprechende Verfahren zur Kontrolle des Zugriffs eines Nutzers zu der Sicherungsanlage.

Sicherungsanlagen, beispielsweise Alarmanlagen oder Verriegelungsanlage, haben sowohl im privaten als auch im gewerblichen Umfeld eine hohe Verbreitung gefunden. Sicherungsanlagen dienen beispielsweise dazu, ausschließlich einem vordefinierten Personenkreis Zutritt zu einem Gebäude oder einem Gebäudeteil zu ermöglichen. Damit eine bestimmte Person Zutritt zu der Sicherungsanlage bekommt, ist eine Authentifizierung der Person gegenüber der Sicherungsanlage erforderlich.

Die Authentifizierung einer Person kann beispielsweise mittels Passworteingabe über ein Terminal oder mittels einer Berechtigungskarte, die mit dem Terminal Daten austauscht, erfolgen.

Dokument "Methods for Testing and Specification (MTS); ePassport Readers InteropE Developing Conformance Test Specifications; ePassport Testing Framework" - ETSI DRAFT DTR-MTS00126 DRAFT 0.12, EUROPEAN TELECOMMUN INSTITUTE (ETSI), 650, ROUTE DES LUCIOLES ; F-06921 SOPHIA-ANT Bd. MTS, Nr. VO.0.12, 29. Juli 2011 (2011-07-29), Seiten 1-116, XP01409i beschreibt in Kapitel 4.5 das Extended Access Control (EAC) Protokoll, das vom deutschen elektronischen Personalausweis unterstützt wird.

Nachteilig an vorbekannten Authentifizierungsverfahren ist zum Einen die oftmals erhebliche Zeit, die zur Eingabe des Passworts, zum Erfassen biometrischer Daten oder zum Datenaustausch zwischen Berechtigungskarte, Terminal und weiteren Komponenten erforderlich ist. Der Authentifizierungsprozess kann mehrere Sekunden, teilweise sogar Minuten erfordern. Dadurch können Warteschlangen am Eingangsbereich von Gebäuden oder Gebäudeteilen entstehen. Ansätze, solche Verfahren zu beschleunigen, gehen i.d.R. mit einer Verringerung der Sicherheit einher.

Ein weiteres Problem besteht darin, dass die von einem Nutzer in Hinblick auf eine bestimmte Sicherungsanlage verwendeten Authentifizierungsdaten nicht für andere Sicherungsanlagen verwendet werden können. Der Nutzer muss unter Umständen also eine Vielzahl von unterschiedlichen Authentifizierungsdaten und/oder entsprechenden Berechtigungskarten sicher verwahren. Dies erweist sich häufig als aufwändig und kostenintensiv und stellt zudem ein Sicherheitsrisiko dar, da Nutzer mit dem Management einer hohen Anzahl an Authentifizierungsdaten und Berechtigungskarten regelmäßig überfordert sind und daher z.B. oftmals das gleiche Passwort für verschiedene Sicherungsanlagen wählen.

Ein weiterer Nachteil bei bekannten Sicherheitssystemen ist, dass die Verwaltung der Zugriffsberechtigungen einer Vielzahl von Nutzern komplex ist und aufgrund von Latenzzeiten unsicher ist. Scheidet beispielsweise ein Angestellter aus einer Firma aus, kann sich dieser u.U. noch längere Zeit Zutritt zu der Sicherungsanlage verschaffen, falls beim Ausscheiden der Berechtigungsausweis nicht eingezogen wurde und die Liste der von der Sicherungsanlage als berechtigt anerkannten Nutzer nicht umgehend aktualisiert wird.

Der Erfindung liegt demgegenüber die Aufgabe zugrunde, ein verbessertes Sicherheitssystem sowie entsprechend verbesserte Verfahren zur Zugriffskontrolle von Personen auf eine Sicherungsanlage bereitzustellen.

Die der Erfindung zugrunde liegende Aufgabe wird jeweils mit den Merkmalen der unabhängigen Patentansprüche gelöst. Vorteilhafte Ausführungsformen der Erfindung sind in den abhängigen Patentansprüchen angegeben.

Eine "elektronische Identifikation" eines Nutzers ist eine Menge aus ein oder mehreren Datenwerten, die die digitale Identität des Nutzers bestimmen oder mitbestimmen. Die elektronische Identifikation kann z.B. aus ein oder mehreren "Attributwerten" bestehen, also aus Werten für personenbezogene Attribute, wie etwa Name, Adresse, Telefonnummer etc. Es kann sich dabei auch um mehr oder weniger "anonymisierte Identitäten" handeln, also um Datenwerte, die ausschließlich Auskunft über eine Gruppenzugehörigkeit (Angestellter einer Firma, Volljährigkeit, Vertrauensniveau) geben, ohne eine Identifikation der Person "im realen Leben" zu ermöglichen.

Ein "Identitätsdokument" ist ein tragbares elektronisches Gerät, zum Beispiel ein USB-Stick, oder ein Dokument, insbesondere ein Wert- oder Sicherheitsdokument, das z.B. in Form einer Chipkarte ausgebildet ist. Ein Identitätsdokument ist einem Nutzer zugeordnet und umfasst einen Prozessor und ein Speichermedium zur sichern Speicherung von Daten, z.B. von personenbezogenen Attributen oder privaten Schlüsseln. Bei dem Identitätsdokument kann es sich um ein papierbasiertes und/oder kunststoffbasiertes Dokument handeln. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Bankkarten und Kreditkarten, Frachtbriefe oder sonstige Berechtigungsnachweise, in die ein Datenspeicher und Prozessor integriert ist.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Ein "Authentifizierungsserver", auch "eID-Provider-Computersystem" genannt, ist ein Datenverarbeitungssystem, welches die Identität eines Nutzers gegenüber Dritten in automatisierter Form bestätigen oder verneinen kann. Ein "Authentifizierungsserver" befindet sich vorzugsweise in einer besonders geschützten Umgebung, insbesondere in einem sogenannten Trust-Center, sodass die Bestätigung einer Identität eines Nutzers durch einen Authentifizierungsserver eine besonders hohe Verlässlichkeit aufweist.

Ein "Register" ist ein Datencontainer, z.B. eine Datei oder eine relationale Datenbank oder eine andere Datenstruktur, welcher eine Vielzahl von Werten, z.B. Nutzerkennungen, und mit diesen verknüpfte weitere Datenwerte gespeichert hat.

Eine "Nutzerkennung" ist ein Identifikator eines Nutzers, welcher zumindest im Hinblick auf sämtliche bei einer bestimmten Sicherungsanlage registrierten Nutzer und deren Nutzerkennungen einzigartig ist.

Bei einem "Terminal" handelt es sich um ein Datenverarbeitungsgerät, das mit einer kontaktlosen oder kontaktbehafteten Schnittstelle zum Datenaustausch mit einem Identitätsdokument ausgestattet ist. Eine Sicherungsanlage kann mehrere Terminals umfassen, die den registrierten Nutzern an geographisch voneinander entfernt gelegenen Zugangspunkten nach erfolgreicher Authentifizierung Zugang oder Zugriff auf geschützte Objekte der Sicherungsanlage ermöglichen. Jedes der Terminals ist mit einer Kontrolleinheit der Sicherungsanlage verbunden.

Eine "Kontrolleinheit" ist eine zentrale Kommunikationsschaltstelle einer Sicherungsanlage, die von jedem der Terminals Authentifizierungsanfragen einzelner Nutzer empfangen, verarbeiten und in verarbeiteter Form an einen Autorisierungsserver der Sicherungsanlage weiterleiten kann, um diesem die Entscheidung zu ermöglichen, ob ein Nutzer als authentifiziert und damit zugriffsberechtigt gilt. Die Kontrolleinheit kann zudem einem Systemoperator erlauben, die Systemauslastung, Log-Dateien über erfolgreiche oder fehlgeschlagene Authentifizierungsversuche etc. einzusehen und ggf. zu manipulieren.

Ein "Autorisierungsserver" ist ein Datenverarbeitungssystem, insbesondere ein Computer, der Bestandteil einer Sicherungsanlage ist oder an diese gekoppelt ist. Der Autorisierungsserver trifft die letztendliche Entscheidung, ob ein Nutzer als authentifiziert und im Hinblick auf die Sicherungsanlage als zugangsberechtigt gilt. Der Autorisierungsserver kann beispielsweise ein Register mit Referenzwerten einer Vielzahl von Nutzern, die sich für den Zugang zu der Sicherungsanlage bereits registriert haben, beinhalten. Der Autorisierungsserver wertet z.B. Authentifizierungsdaten eines Nutzers aus und gewährt oder verweigert in Abhängigkeit vom Ergebnis der Auswertung dem Nutzer den Zugriff.

Ein "Vertrauensanker" besteht aus ein oder mehreren Datenwerten, welche es einem ersten Objekt erlauben, eine Prüfung der Vertrauenswürdigkeit eines zweiten Objekts durchzuführen. Der Vertrauensanker kann z.B. im Besitz des ersten Objekts sein, z.B. in einem Speicher des ersten Objekts gespeichert sein, und dem ersten Objekt erlauben, eine Prüfung von weiteren Daten, die von dem zweiten Objekt zum Nachweis der Vertrauenswürdigkeit des zweiten Objekts bereitgestellt werden, durchzuführen. Diese weiteren Daten können z.B. dem Nachweis der Identität des zweiten Objekts dienen oder dem Nachweis, dass das zweite Objekt einer bestimmten Person mit hinreichender Sicherheit zugeordnet ist. Die weiteren Daten dienen also als Authentifizierungsdaten des zweiten Objekts, also als Daten, die das zweite Objekt dem ersten Objekt zur Verfügung stellt, damit das erste Objekt die Authentifizierungsdaten mittels des Vertrauensankers durch Analyse der zur Verfügung gestellten weiteren Daten prüfen kann. Das erste Objekt kann z.B. aus einer Kontrolleinheit und das zweite Objekt aus einem Identitätsdokument bestehen, oder umgekehrt. Die Kombination eines Vertrauensankers (der sich im Besitz eines ersten Objekts befindet) und korrespondierenden Authentifizierungsdaten (die sich im Besitz des zweiten Objekts befinden und vom zweiten Objekt an das erste Objekt übertragen werden können) ermöglicht also einen Nachweis der Vertrauenswürdigkeit des zweiten Objekts gegenüber dem ersten Objekt, mit anderen Worten, eine einseitige Authentifizierung des zweiten Objekts gegenüber dem ersten Objekt.

In einem Aspekt betrifft die Erfindung ein computerimplementiertes Verfahren zur Kontrolle des Zugriffs eines Nutzers auf eine Sicherungsanlage. Die Sicherungsanlage umfasst eine Kontrolleinheit. Dem Nutzer ist ein elektronisch auslesbares Identitätsdokument zugeordnet. Das Identitätsdokument beinhaltet eine elektronische Identifikation des Nutzers. Das Verfahren beinhaltet:
- Empfang einer Erlaubnisanfrage zum Zugriff des Nutzers auf die Sicherungsanlage. Die Erlaubnisanfrage wird durch die Kontrolleinheit empfangen. Die Erlaubnisanfrage kann beispielsweise dadurch generiert und an die Kontrolleinheit übermittelt werden, dass der Nutzer das Identitätsdokument in eine kontaktlose oder kontaktbehaftete Schnittstelle eines Terminals einbringt bzw. einführt und dadurch das Terminal veranlasst, die Erlaubnisanfrage für den Besitzer des Identitätsdokuments zu generieren und an die Kontrolleinheit zu senden;
- auf den Empfang der Erlaubnisanfrage, Prüfung, durch die Kontrolleinheit, ob ein erster Vertrauensanker in einem geschützten ersten Speicher der Kontrolleinheit gespeichert vorliegt und/oder ob ein zweiter Vertrauensanker in einem geschützten zweiten Speicher des Identitätsdokuments gespeichert vorliegt; ein 'geschützter Speicher' kann z.B. ein Datenspeicher eines Datenverarbeitungsgeräts sein, auf welchen nur ein auf diesem Datenverarbeitungsgerät integrierter Prozessor Zugriff hat. Alternativ oder zusätzlich dazu kann der Speicher durch weitere Sicherheitsmaßnahmen vor unberechtigtem Zugriff auf die darin gespeicherten Daten geschützt sein, etwa durch kryptographische Sicherheitsvorkehrungen oder Mechanismen, die eine mechanische Zerstörung des Speichers im Falle eines unberechtigten Zugriffsversuchs bewirken;
- Falls bei Empfang der Erlaubnisanfrage der erste und der zweite Vertrauensanker gespeichert vorliegen, Verwendung des gespeicherten ersten Vertrauensankers und des zweiten Vertrauensankers zur gegenseitigen Authentifizierung von Kontrolleinheit und Identitätsdokument;
- Im Falle der erfolgreichen gegenseitigen Authentifizierung des Identitätsdokuments und der Kontrolleinheit, Übermittlung der in dem Identitätsdokument gespeicherten elektronischen Identifikation des Nutzers durch die Kontrolleinheit an einen Autorisierungsserver; in diesem Fall erfolgt die Übermittlung der in dem Identitätsdokument gespeicherten elektronischen Identifikation also ohne Zuhilfenahme eines Authentifizierungsservers;
- Falls der erste Vertrauensanker nicht in dem ersten Speicher gespeichert vorliegt und/oder der zweite Vertrauensanker nicht in dem zweiten Speicher gespeichert vorliegt, veranlasst die Kontrolleinheit einen Authentifizierungsserver, den ersten Vertrauensanker zu erzeugen und an die Kontrolleinheit zu übermitteln. Die Übermittlung kann direkt oder indirekt über den Autorisierungsserver erfolge. Der übermittelte erste Vertrauensanker wird durch die Kontrolleinheit in dem ersten Speicher gespeichert. Zusätzlich oder alternativ dazu veranlasst die Kontrolleinheit den Authentifizierungsserver, den zweiten Vertrauensanker zu erzeugen und an das Identitätsdokument zu übermitteln; der übermittelte zweite Vertrauensanker wird durch das Identitätsdokument in dem zweiten Speicher gespeichert; die in dem Identitätsdokument gespeicherte elektronische Identifikation des Nutzers wird an den Autorisierungsserver übermittelt; Die Übermittlung wird durch den Authentifizierungsserver bewirkt oder ermöglicht.
- in Abhängigkeit von der auf einem der oben genannten Wege übermittelten elektronischen Identifikation gewährt oder verweigert der Autorisierungsserver dem Nutzer den Zugriff auf die Sicherungsanlage. Beispielsweise kann der Autorisierungsserver bei einer Übereinstimmung zwischen der ausgelesenen elektronischen Identifikation und einem entsprechenden, für den Nutzer bei dessen Registrierung vorgespeicherten Referenzwert dem Nutzer Zugriff zu der Sicherungsanlage gewähren bzw. bei fehlender Übereinstimmung den Zugriff verweigern.

Dies kann vorteilhaft sein, da das beschriebene Authentifizierungsverfahren ein sehr hohes Sicherheitsniveau in Kombination mit einer sehr kurzen Authentifizierungszeit bietet: dadurch, dass ein externer Authentifizierungsserver, in der Regel also ein spezialisierter, besonders geschützter und vertrauenswürdiger Server, die beiden Vertrauensanker zumindest bei der erstmaligen Durchführung des Authentifizierungsverfahrens bereitstellt und diese in geschützten ersten und zweiten Speichern abgelegt, ist das Authentifizierungsverfahren besonders sicher vor Manipulation der Authentifizierungsdaten (elektronische Identifikation) durch den Nutzer oder Dritte. Dennoch ist es ein ausgesprochen schnelles und ressourcenschonendes Verfahren, denn die Vertrauensanker werden nicht bei jedem einzelnen Authentifizierungsversuch neu generiert. Vielmehr wird geprüft, ob zum Zwecke der Authentifizierung auf bereits vorab berechnete und gespeicherte Vertrauensanker zurückgegriffen werden kann. Falls dies der Fall ist, wird auf diese Vertrauensanker - und nicht auf den Authentifizierungsserver - zurückgegriffen, um "Vertrauen" zwischen Identitätsdokument und Kontrolleinheit herzustellen und um der Kontrolleinheit zu ermöglichen, die elektronische Identifikation direkt auszulesen. Dadurch wird das Verfahren erheblich beschleunigt, da eine Kommunikation des Identitätsdokument des mit dem Authentifizierungsserver über ein Netzwerk nicht mehr erforderlich ist, um die Vertrauensanker zu generieren. Dies reduziert die Anzahl der Anfrage-Antwort Zyklen zwischen dem Identitätsdokument und dem Authentifizierungsserver über ein Netzwerk. Eine Übertragung und Speicherung der Identifikation von dem Identitätsdokument auf den Authentifizierungsserver, der sich hierfür noch zuvor gegenüber dem Identitätsdokument authentifizieren muss, entfällt also. Unter Umständen reicht also eine einmalige Generierung des ersten und zweiten Vertrauensankers im Zuge eines initialen Authentifizierungsversuchs des Nutzers gegenüber der Sicherungsanlage aus, um die Vertrauensanker herzustellen und verteilt zu speichern, so dass bei allen weiteren Authentifizierungsversuchen die gegenseitige Authentifizierung unter alleiniger Verwendung der bereits bestehenden Vertrauensanker und ohne Rückgriff auf den Authentifizierungsserver erfolgen kann. Vorzugsweise erfolgt das oben beschriebene Verfahren voll automatisch, so dass keine Zeit durch das Warten auf eine Benutzereingabe verloren geht.

Die Erlaubnisanfrage ist eine Anfrage, dem Nutzer eines Identitätsdokuments Zugriff auf Objekte zu gewähren, die von der Sicherungsanlage geschützt werden. Die Erlaubnisanfrage kann eine Kennung des Nutzers bzw. des Identitätsdokuments des Nutzers beinhalten. Dies ermöglicht es der Kontrolleinheit, den ersten Vertrauensanker in dem ersten Speicher verknüpft mit der Kennung des Nutzers bzw. des Identitätsdokuments zu speichern. Falls die ersten und zweiten Vertrauensanker also in nutzerspezifischer Weise generiert werden, ermöglicht die besagte Kennung es der Kontrolleinheit, den im Hinblick auf einen bestimmten Nutzer erforderlichen ersten Vertrauensanker aus einer Vielzahl von weiteren ersten Vertrauensankern, die für andere Nutzer generiert und gespeichert wurden, zu identifizieren.

Nach manchen Ausführungsformen veranlasst die Kontrolleinheit den Authentifizierungsserver nicht direkt, den ersten und zweiten Vertrauensanker zu berechnen, sondern sendet zunächst eine Anfrage zur Generierung des ersten und zweiten Vertrauensankers an den Autorisierungsserver. Der Autorisierungsserver wiederum leitet diese Anfrage in identischer oder veränderter Form an den Authentifizierungsserver und veranlasst diesen dadurch zur Generierung der ersten und/oder zweiten Vertrauensanker. Der zweite Vertrauensanker wird von dem Authentifizierungsserver direkt an das Identitätsdokument übertragen und dort gespeichert. Dagegen wird der erste Vertrauensanker von dem Authentifizierungsserver zunächst an den Autorisierungsserver gesendet und von diesem an die Kontrolleinheit zur Speicherung im ersten Speicher weitergeleitet.

Unter einer "Sicherungsanlage" wird im Folgenden jegliches softwarebasierte, firmwarebasierte und/oder hardwarebasierte System bezeichnet, welches einem Nutzer nur nach erfolgreicher Authentifizierung gegenüber diesem System Zugriff auf bestimmte, geschützte Objekte wie etwa Daten, Funktionalitäten oder geographische Bereiche gewährt. Eine Sicherungsanlage kann beispielsweise eine Alarmanlage, eine Verriegelungsanlage, ein Gebäude, einen Raum, ein Gerät, insbesondere ein Datenverarbeitungsgerät, eine Komponente eines Geräts, ein Softwareprogramm und/oder ein Softwaremodul umfassen. Falls die elektronische Identifikation des Nutzers diesen Nutzer gegenüber dem Autorisierungsserver als berechtigt ausweist, unterbindet der Autorisierungsserver in Bezug auf den Nutzer ein Auslösen eines Alarms der Alarmanlage bei Zugriff auf die Sicherungsanlage, entriegelt die Verriegelungsanlage, gewährt Zutritt zu dem Gebäude oder dem Raum und/oder gewährt Zugriff auf das Gerät, auf die Komponente des Geräts, auf das Softwareprogramm und/oder das Softwaremodul.

Falls bei Empfang der Erlaubnisanfrage der erste Vertrauensanker in dem ersten Speicher und der zweite Vertrauensanker in dem zweiten Speicher bereits vorliegt, stellen die gespeichert vorliegenden ersten und zweiten Vertrauensanker vorzugsweise die alleinigen Vertrauensanker für die Authentifizierung der Kontrolleinheit gegenüber dem Identitätsdokument dar. Dies kann vorteilhaft sein, da keine weiteren Datenverarbeitungsschritte erforderlich sind, um zusätzliche Vertrauensanker zu generieren, so dass sich Kontrolleinheit und Identitätsdokument unmittelbar gegenseitig authentifizieren können. Das Authentifizierungsverfahren wird dadurch beschleunigt, Netzwerk-und CPU-Ressourcen werden geschont.

Nach Ausführungsformen umfasst die Prüfung durch die Kontrolleinheit, ob der erste und/oder zweite Vertrauensanker gespeichert vorliegen, eine Prüfung, ob der erste Vertrauensanker in dem ersten Speicher gespeichert ist. Falls dies nicht der Fall ist, wird der erste und zweite Vertrauensanker von der Kontrolleinheit als nicht gespeichert vorliegend betrachtet.

Alternativ oder zusätzlich kann die Kontrolleinheit durch folgende Schritte in Interoperation mit dem Identitätsdokument prüfen, ob der zweite Vertrauensanker in dem zweiten Speicher gespeichert vorliegt: Senden eines Befehls von der Kontrolleinheit an das Identitätsdokument, zu prüfen, ob in dem zweiten Speicher des Identitätsdokuments der zweite Vertrauensanker verknüpft mit einer Kennung der Kontrolleinheit gespeichert vorliegt; der Befehl kann z.B. eine Kennung der Kontrolleinheit beinhalten. Das Identitätsdokument überprüft daraufhin, ob ein zweiter Vertrauensanker in dem zweiten Speicher gespeichert ist. Die Kontrolleinheit empfängt eine Antwort des Identitätsdokuments auf diesen Befehl. Falls die besagte Antwort beinhaltet, dass kein zweiter Vertrauensanker für die Kontrolleinheit in dem zweiten Speicher gespeichert vorliegt, betrachtet die Kontrolleinheit zumindest den zweiten Vertrauensanker und in manchen Ausführungsformen auch den ersten Vertrauensanker als nicht gespeichert vorliegend. Dies kann vorteilhaft sein, wenn z.B. das gleiche Paar von ersten und zweiten Vertrauensankern für eine Vielzahl von Identitätsdokumenten verwendet wird, also mehrere Identitätsdokumente den gleichen Vertrauensanker gespeichert haben. Das Vorliegen des ersten Vertrauensankers alleine gibt dann nicht notwendigerweise Aufschluss darauf, ob auch ein bestimmtes Identitätsdokument den korrespondierenden zweiten Vertrauensanker besitzt. Die Einholung dieser Information kann aber wie vorgestellt durch die Kontrolleinheit initiiert werden. Nach manchen Ausführungsformen werden im Zuge der Generierung der Vertrauensanker auch die korrespondierenden Authentifizierungsdaten neu generiert und in dem ersten oder zweiten Speicher gespeichert. Authentifizierungsdaten zum Nachweis der Vertrauenswürdigkeit des Identitätsdokuments gegenüber der Kontrolleinheit werden beispielsweise im zweiten Speicher gespeichert und/oder Authentifizierungsdaten zum Nachweis der Vertrauenswürdigkeit der Kontrolleinheit gegenüber einem Identitätsdokument werden beispielsweise im ersten Speicher gespeichert.

Der erste und/oder zweite Vertrauensanker kann in seiner Gültigkeit jeweils beschränkt sein. Die gegenseitige Authentifizierung von Kontrolleinheit und Identitätsdokument wird nach Ausführungsformen als erfolglos abgebrochen, falls eine durch die Kontrolleinheit und/oder durch das Identitätsdokument vorgenommene Prüfung der Gültigkeit des ersten und/oder zweiten Vertrauensankers ergibt, dass der erste und/oder zweite Vertrauensanker ungültig ist. Das Identitätsdokument kann z.B. in diesem Fall den aktuellen Authentifizierungsversuch beenden, so dass der elektronische Identifikator nicht aus dem Identitätsdokument ausgelesen werden kann und dem Nutzer kein Zugriff auf die Sicherungsanlage gewährt wird. Dadurch wird die Sicherheit weiter erhöht, denn das Vorliegen des ersten und zweiten Vertrauensankers allein reicht nicht aus, um eine gegenseitige Authentifizierung zu ermöglichen.

Vielmehr müssen weitere sicherheitsrelevante Kriterien erfüllt sein, damit der erste und zweite Vertrauensanker auch als gültig angesehen werden.

Nach Ausführungsformen umfasst die Prüfung durch die Kontrolleinheit, ob der erste und/oder zweite Vertrauensanker gespeichert vorliegt, eine Prüfung des ersten und/oder zweiten Vertrauensankers auf deren jeweilige Gültigkeit. Ein ungültiger erster Vertrauensanker wird von der Kontrolleinheit bei der Gültigkeitsprüfung als ein nicht gespeichert vorliegender erster Vertrauensanker behandelt.

Ein ungültiger zweiter Vertrauensanker wird von dem Identitätsdokument bei der Gültigkeitsprüfung als ein nicht gespeichert vorliegender zweiter Vertrauensanker behandelt. Dies kann vorteilhaft sein, da dadurch eine automatische Neugenerierung und Verteilung der ersten und zweiten Vertrauensanker bewirkt wird.

Die Möglichkeit, dass sowohl das Identitätsdokument als auch die Kontrolleinheit eine Gültigkeitsprüfung vornehmen können ist vorteilhaft, da dies den Einsatz zweier unterschiedlicher Dokumententypen bzw. Typen von Paaren von ersten und zweiten Vertrauensankern erlaubt: Bei Ausführungsformen, in welchen für jedes Paar an Identitätsdokument und Kontrolleinheit genau ein spezifisches Paar eines ersten und zweiten Vertrauensankers erstellt wird, reicht die Ungültigkeit eines der beiden Vertrauensankern aus, um implizit auch die Ungültigkeit des anderen, korrespondierenden Vertrauensankers zu bedingen. Beide Vertrauensanker müssen neu ausgestellt werden. Das Identitätsdokument entspricht dabei genau einem Nutzer, dem es zugeordnet ist, und jede Kontrolleinheit entspricht dabei genau einer Sicherungsanlage. In diesen Szenarien ist ein Gültigkeitstest durch die Kontrolleinheit, die zumeist über größere Rechenkapazitäten verfügt als das Identitätsdokument, vorzuziehen.
Falls aber der gleiche erste Vertrauensanker für eine Vielzahl von Identitätsdokumenten verwendet wird und diese Vielzahl an Dokumenten den gleichen zweiten Vertrauensanker gespeichert haben (bzw. speichern sollen), der zu dem einen ersten Vertrauensanker der Kontrolleinheit korrespondiert, ist es vorteilhaft, dass auch das Identitätsdokument auf Veranlassung durch die Kontrolleinheit hin den Gültigkeitstest durchführen kann: die Kontrolleinheit kann in diesem Fall ganz auf die Verwaltung von Nutzer-IDs und deren Speicherung in Verknüpfung mit dem ersten Vertrauensanker verzichten. Die Kontrolleinheit hat z.B. keine Nutzer-IDs gespeichert und führt ausschließlich eine Gültigkeitsprüfung evtl. bestehender Vertrauensanker dadurch durch, dass sie eine Gültigkeitsprüfung evtl. bereits vorliegender zweiter Vertrauensanker durch das Identitätsdokument des Nutzers, der Zugriff begehrt, initiiert. Da das Identitätsdokument (und nicht die Kontrolleinheit) "weiß", ob es für eine bestimmte Kontrolleinheit einen zweiten Vertrauensanker gespeichert hat, und kann dessen Vorhandensein und dessen Gültigkeit testen und der Kontrolleinheit mitteilen. Eine Speicherung von Nutzer-IDs durch die Kontrolleinheit wird dadurch überflüssig. Dies verhindert das Erstellen von Bewegungsprofilen, wenn sich der Nutzer beispielsweise im Laufe der Zeit an vielen verschiedenen Terminals Zugriff auf die Sicherungsanlage begehrt. Somit wird der Datenschutz erhöht.

Nach einer weiteren Ausführungsform führt die Kontrolleinheit folgende Schritte durch, falls sie feststellt, dass der erste und zweite Vertrauensanker nicht mehr gültig sind und der zweite Vertrauensanker ein Zertifikat, z.B. ein von einer Zertifizierungsstelle ("CA" für "certifying authority") ausgestelltes Zertifikat zur Prüfung der Validität eines Signaturprüfschlüssels, umfasst: Übermittlung einer Kennung, die für das Paar aus dem ersten und zweiten Vertrauensanker spezifisch ist, an einen Server, der eine Revozierungsliste über ein Netzwerk, z.B. das Internet, zur Verfügung stellt. Eine Revozierungsliste ist eine Liste von öffentlichen Schlüsseln, die zurückgezogen wurden und nicht mehr gültig sind, etwa, weil der Schlüssel bzw. das diesen Schlüssel beinhaltende Zertifikat kompromittiert wurde bzw. der Verdacht besteht, dass der Schlüssel nicht mehr sicher ist. Bei den besagten Schlüsseln kann es sich um öffentliche Signaturprüfschlüssel handeln, die mit einer Signatur einer CA verknüpft sind. Die Revozierung beinhaltet das Bekanntmachen der Ungültigkeit des Schlüssels und die Aufnahme des revozierten Schlüssels in eine von einer Zertifizierungsstelle verwalteten Zertifikatsperrliste (CRL), die zur Gültigkeitsprüfung öffentlich einsehbar ist. Der besagte Server ermittelt anhand der Kennung den öffentlichen Schlüssel und das Zertifikat, das der Kennung zugeordnet ist und das den zweiten Vertrauensanker bildet, und veröffentlicht dieses Zertifikat auf der Revozierungsliste. Die Kontrolleinheit prüft im Zuge der Authentifizierung des Identitätsdokuments gegenüber der Kontrolleinheit die Gültigkeit des zweiten Vertrauensankers (z.B. eines vom Identitätsdokument erhaltenen öffentlichen Signaturprüfschlüssels) durch Abgleich des zweiten Vertrauensankers mit der Revozierungsliste und bricht den Authentifizierungsversuch ab, sollte sich der zweite Vertrauensanker unter den auf der Revozierungsliste genannten Zertifikaten bzw. öffentlichen Schlüsseln befinden.

Sollte die Ausführungsform die Verwendung des gleichen Paares von erstem und zweitem Vertrauensanker für eine Vielzahl von Identitätsdokumenten, z.B. Identitätskarten, vorsehen, und sollte eines der Identitätsdokumente feststellen, dass sie für die Kontrolleinheit/den ersten Vertrauensanker noch keinen "korrespondierenden" zweiten Vertrauensanker besitzt, ist nach manchen Ausführungsformen die Initiierung der Generierung lediglich des zweiten Vertrauensankers und die Speicherung desselben auf dem zweiten Speicher ausreichend, der erste Vertrauensanker muss nicht neu generiert werden. Falls der erste Vertrauensanker dennoch neu generiert wird, hat dies den Vorteil, dass dieser mit einer aktuelleren Zeitangabe versehen sein kann, die von manchen Ausführungsformen zur Gültigkeitsprüfung herangezogen werden kann.

Nach Ausführungsformen umfasst die Prüfung des zweiten Vertrauensankers auf dessen Gültigkeit durch das Identitätsdokument die folgenden Schritte: nach jeder erfolgreichen gegenseitigen Authentifizierung von Kontrolleinheit und Identitätsdokument mittels des ersten und zweiten Vertrauensankers, Erhöhung eines Zählers, der in dem Identitätsdokument gespeichert ist, wobei der zweite Vertrauensanker als ungültig gilt, falls der Zähler einen Maximalwert erreicht hat. Das Identitätsdokument kann auch mehrere Zähler gespeichert haben, falls das gleiche Identitätsdokument zur Authentifizierung des Nutzers gegenüber mehreren unterschiedlichen Sicherungsanlagen und deren jeweiligen Kontrolleinheiten verwendet wird.

Alternativ dazu ermittelt das Identitätsdokument eine vertrauenswürdige aktuelle Zeitangabe sowie eine mit dem zweiten Vertrauensanker verknüpft gespeicherte Zeitangabe. Das Identitätsdokument betrachtet den zweiten Vertrauensanker als ungültig, falls die verknüpft gespeicherte Zeitangabe ein maximales Alter relativ zu der vertrauenswürdigen aktuellen Zeitangabe überschreitet. Dies kann vorteilhaft sein, da dadurch sichergestellt wird, dass beispielsweise nach einer bestimmten Anzahl von Jahren, Monaten oder Tagen der zweite Vertrauensanker und damit implizit auch der erste Vertrauensanker automatisch als ungültig gelten und eine Authentifizierung des Nutzers gegenüber der Sicherungsanlage damit nicht mehr möglich ist. Dies stellt sicher, dass beispielsweise Mitarbeiter, die seit einiger Zeit aus einer Firma ausgeschieden sind und aufgrund eines Fehlers der Verwaltung nicht explizit als gesperrt gelten, nach einer gewissen Zeitspanne automatisch die Möglichkeit verlieren, sich Zugang zur Sicherungsanlage zu verschaffen.

Das Identitätsdokument kann die vertrauenswürdige aktuelle Zeitangabe dadurch ermitteln, dass es eine aktuelle vertrauenswürdigen Zeitangabe von einer vertrauenswürdigen Uhr innerhalb oder außerhalb des Identitätsdokuments empfängt. Eine vertrauenswürdige Uhr kann z.B. eine Uhr eines Authentifizierungsservers sein. Alternativ dazu kann das Identitätsdokument eine in dem Identitätsdokument geschützt gespeicherte weitere Zeitangabe als die vertrauenswürdige Zeitangabe verwenden. Die geschützt gespeicherte weitere Zeitangabe wird immer dann durch eine neue Zeitangabe ersetzt, wenn das Identitätsdokument einen weiteren Vertrauensanker mit einer in diesem enthaltenen Zeitangabe empfängt und wen die in dem weiteren Vertrauensanker enthaltene Zeitangabe jünger ist als die geschützt gespeicherte weitere Zeitangabe. Die in dem weiteren Vertrauensanker enthaltene Zeitangabe stellt in diesem Fall die neue Zeitangabe dar und ersetzt die bestehende weitere Zeitangabe älteren Datums. Die auf diese Weise aktualisierte, gespeicherte weitere Zeitangabe ist zwar nur näherungsweise aktuell, die beschriebene Herangehensweise ist jedoch vorteilhaft, weil sie auch für Identitätsdokumente verwendbar ist, die keine eigene Uhr besitzen.

Nach Ausführungsformen legt der Authentifizierungsserver die in dem weiteren Vertrauensanker enthaltene Zeitangabe im Zuge der Generierung des ersten und zweiten Vertrauensankers fest. Bei dieser Zeitangabe kann es sich also um das Datum (gegebenenfalls ergänzt durch die Uhrzeit) der Generierung des entsprechenden Vertrauensankers handeln. Falls der weitere Vertrauensanker ein Zertifikat ist, kann die in dem zweiten Vertrauensanker enthaltene Zeitangabe zum Beispiel eine Angabe über den Beginn oder das Ende der Gültigkeit des Zertifikats darstellen, wobei diese Informationen von dem Identitätsdokument im Zuge der Gültigkeitsprüfung ausgewertet werden können. Eine gegenseitige Authentifizierung von Kontrolleinheit und Identitätsdokument wird beispielsweise abgebrochen, falls zum Zeitpunkt des Authentifizierungsversuchs das Zertifikat, das den zweiten Vertrauensanker bildet, noch nicht oder nicht mehr gültig ist.

Alternativ oder zusätzlich zur Gültigkeitsprüfung durch das Identitätsdokument kann auch die Kontrolleinheit eine Gültigkeitsprüfung durchführen. Die Kontrolleinheit erhöht, um die Gültigkeitsprüfung des ersten Vertrauensankers zu ermöglichen, nach jeder erfolgreichen gegenseitigen Authentifizierung von Kontrolleinheit und Identitätsdokument mittels des ersten und zweiten Vertrauensankers einen Zähler, der in der Kontrolleinheit gespeichert ist. Der erste Vertrauensanker gilt als ungültig, falls der Zähler einen Maximalwert erreicht hat. Die Kontrolleinheit kann auch mehrere Zähler gespeichert haben, wobei jeder Zähler einem bestimmten Nutzer bzw. dessen Identitätsdokument entspricht.
Zusätzlich oder alternativ dazu ermittelt die Kontrolleinheit eine vertrauenswürdige aktuelle Zeitangabe und eine mit dem ersten Vertrauensanker verknüpft gespeicherte Zeitangabe, z.B. mittels einer Uhr der Kontrolleinheit. Die Kontrolleinheit betrachtet den ersten Vertrauensankers als ungültig, falls die verknüpft gespeicherte Zeitangabe ein maximales Alter relativ zu der vertrauenswürdigen aktuellen Zeitangabe überschreitet.

Falls die Gültigkeitsprüfung ergibt, dass der erste und/oder zweite Vertrauensanker ungültig sind, veranlasst die Kontrolleinheit die Generierung neuer erster und zweiter Vertrauensanker, um die ungültigen ersten und zweiten Vertrauensanker durch die neuen ersten und zweiten Vertrauensanker zu ersetzen. Nach dieser Ersetzung kann ein aktuell durchgeführter Authentifizierungsversuch mittels der neuen ersten und zweiten Vertrauensanker automatisch fortgesetzt werden. Dies kann vorteilhaft sein, da durch die automatische Überprüfung und gegebenenfalls Erneuerung der Vertrauensanker auf Initiative der Kontrolleinheit hin sichergestellt wird, dass die Identität des Nutzers bzw. des Identitätsdokuments nach wie vor gültig ist. Denn vorzugsweise erfordert die Generierung eines neuen ersten und zweiten Vertrauensankers eine erneute, an die Erbringung entsprechender Nachweise durch den Nutzer gesicherte, Authentifizierung des Nutzers gegenüber dem Authentifizierungsserver, der die Vertrauensanker neu berechnet. Da die Kontrolleinheit im Gegensatz zum Identitätsdokument meistens über hinreichend hohe Rechenkapazitäten verfügt, wird durch eine regelmäßige Prüfung der Gültigkeit vorhandener erster und zweiter Vertrauensanker das Verfahren bzw. Sicherungssystem auch nicht verlangsamt. Falls der erste Vertrauensanker aufgrund seines hohen Alters als nicht mehr gültig angesehen wird, wird automatisch auch der zweite Vertrauensanker als nicht gültig angesehen.

Nach Ausführungsformen umfasst das computerimplementierte Verfahren ferner eine Erzeugung des ersten und/oder zweiten Vertrauensankers auf Veranlassung durch die Kontrolleinheit. Die Übermittlung des ersten Vertrauensankers von dem Authentifizierungsserver in direktem oder indirektem Wege an die Kontrolleinheit und die Übermittlung des zweiten Vertrauensankers an das Identitätsdokument erfolgt jeweils über eine geschützte Verbindung. Die Erzeugung der Vertrauensanker kann je nach Ausführungsform durch den Authentifizierungsserver alleine oder in Zusammenarbeit von Authentifizierungsserver und Identitätsdokument erfolgen.

Der Generierung des ersten und/oder zweiten Vertrauensankers durch den Authentifizierungsserver kann ein Aufbau einer geschützten Datenübertragungsverbindung zwischen dem Identitätsdokument und dem Authentifizierungsserver vorausgehen. Dies kann z.B. eine optionale Nutzerauthentifikation (z.B. mittels PIN-Eingabe), eine Terminalauthentsierung und eine Chipkartenauthentisierung umfassen. Über diese geschützte Datenübertragungsverbindung kann der Authentifizierungsserver den zweiten Vertrauensanker zur Speicherung im zweiten Speicher übertragen und/oder Attribute aus dem Identitätsdokument auslesen. Beispielsweise kann das PACE Protokoll zur PIN-Verifikation nach der PIN-Eingabe eingesetzt werden. Nach erfolgreicher PIN-Verifikation folgt die Terminalauthentisierung und Chipkartenauthentisierung.

Beispielsweise kann die Generierung des ersten und zweiten Vertrauensankers darin bestehen, dass auf die Veranlassung durch den Authentifizierungsserver hin das Identitätsdokument einen Zufallswert (,nonce') generiert, diesen Zufallswert optional mit weiteren Daten verknüpft (z.B. konkateniert) und anschließend aus dem Zufallswert bzw. dem verknüpften Datenwert einen Hashwert berechnet. Eine Kopie des berechneten Hash-Werts wird vom Authentifizierungsserver empfangen und direkt oder indirekt an die Kontrolleinheit übertragen, wo diese Kopie im ersten Speicher als erster Vertrauensanker gespeichert wird. Die beiden Kopien des Hashwertes stellen also ein symmetrisches Schlüsselpaar dar, die jeweils als erster und zweiter Vertrauensanker fungieren.

Der Hashwert kann alternativ auch von der Kontrolleinheit berechnet und mit Hilfe des Authentifizierungsservers als Kopie an das Identitätsdokument übertragen werden.

Die weiteren Daten, mit welchen der Zufallswert verknüpft wird, können beispielsweise aus Zufallswerten bestehen, die ein weiterer Zufallsgenerator des Identitätsdokuments, der Kontrolleinheit oder des Authentifizierungsservers bereitstellt. Dies erhöht die Sicherheit durch Gewährleistung der "Zufälligkeit" des verknüpften Wertes, falls der Zufallsgenerator der die ,nonce' generiert kompromittiert sein sollte. Alternativ können die weiteren Daten, mit welchen der Zufallswert verknüpft wird, auch ein oder mehrere Werte einer früheren Sitzung zwischen Authentifizierungsservers und Identitätsdokument beinhalten, z.B. Sitzungsschlüssel. Dies erhöht die Sicherheit des Verfahrens weiter.

Anstelle der Übertragung einer Kopie des Hashwerts von dem Identitätsdokument durch den Authentifizierungsserver auf das Identitätsdokument kann auch ein Diffie-Hellman Schlüsselaustausch zur Vereinbarung eines gemeinsamen Geheimnisses zwischen Identitätsdokument und Authentifizierungsserver durchgeführt werden, wobei der Authentifizierungsserver anschließend eine Kopie dieses Geheimnisses an die Kontrolleinheit überträgt. Die beiden Kopien dieses Geheimnisses stellen nach Speicherung im ersten und zweiten Speicher den ersten und zweiten Vertrauensanker dar. Beispielsweise kann ein Diffie-Hellman-Schlüsselaustausch, insbesondere ein Elliptic-Curve-Diffie-Hellman-Schlüsselaustausch, verwendet werden.

Die geschützte Verbindung stellt sicher, dass die generierten Vertrauensanker vor dem Zugriff durch unberechtigte Dritte während der Übertragung geschützt sind. Die geschützte Übertragung des ersten Vertrauensankers von dem Authentifizierungsserver in indirektem Wege an die Kontrolleinheit kann z.B. dadurch erfolgen, dass der generierte erste Vertrauensanker über den Autorisierungsserver der Sicherungsanlage vorzugsweise in verschlüsselter Form gesendet wird, welcher den Vertrauensanker dann an die Kontrolleinheit weiterleitet. Beispielsweise kann der Autorisierungsserver den ersten Vertrauensanker entschlüsseln und in entschlüsselter Form an die Kontrolleinheit weiterleiten.

Nach einer Ausführungsform "a)" bilden der erste und der zweite Vertrauensanker ein symmetrisches kryptographisches Schlüsselpaar.
Ein vorteilhafter Aspekt von Ausführungsformen, deren erster und zweiter Vertrauensanker auf symmetrischen Schlüsseln beruhen, betrifft den Umstand, dass jeder der beiden Vertrauensanker sowohl zum Nachweis der Identität eines Objekts, z.B. der Kontrolleinheit oder dem Identitätsdokument, dient, als auch eine Prüfung der Vertrauenswürdigkeit des jeweils anderen Objekts erlaubt, also Vertrauensanker und Authentifizierungsdaten in einem einzigen, leicht zu verwaltenden Datenwert vereint sind.

Nach weiteren Ausführungsformen, die auf einem asymmetrischen kryptographischen Schlüsselpaar beruhen, umfasst gemäß einer Variante "b1)" der erste Vertrauensanker ein erstes Zertifikat. Das erste Zertifikat erlaubt eine Prüfung der Authentizität eines öffentlichen ersten Signaturprüfschlüssels, der von dem Identitätsdokument bereitgestellt wird, wobei dem öffentlichen ersten Signaturprüfschlüssel ein privater erster Signaturschlüssel zugeordnet ist. Beispielsweise kann der erste Signaturschlüssel in dem Identitätsdokument gespeichert sein und von diesem zur digitalen Signierung von Daten, die an die Kontrolleinheit übermittelt werden, verwendet werden.

Ein "Signaturschlüssel" ist ein privater Schlüssel, mit welchem Daten, z.B. Nachrichten, so "unterzeichnet" werden können, dass der Empfänger anhand einer Überprüfung mit einem dazugehörigen öffentlichen Schlüssel, der im Folgenden "Signaturprüfschlüssel" genannt wird, den Aussteller erkennen und damit die Authentizität der signierten Daten kontrollieren kann. Vorzugsweise geschieht die Signaturprüfung unter Rückgriff auf ein als vertrauenswürdig erachtetes Public-Key-System.
Die Zuordnung eines Signaturschlüssels zu einer natürlichen Person und dem dazugehören Signaturschlüssel wird von einer Zertifizierungsstelle ("CA") sichergestellt.

Alternativ oder zusätzlich umfasst nach Variante "b2)" der zweite Vertrauensanker ein zweites Zertifikat, wobei das zweite Zertifikat eine Prüfung der Authentizität eines öffentlichen zweiten Signaturprüfschlüssels, der von der Kontrolleinheit bereitgestellt wird, erlaubt. Dem öffentlichen zweiten Signaturprüfschlüssel ist ein privater zweiter Signaturschlüssel zugeordnet. Beispielsweise kann der zweite Signaturschlüssel in der Kontrolleinheit gespeichert sein und von dieser zur digitalen Signierung von Daten, die an das Identitätsdokument übermittelt werden, verwendet werden.

Vorzugsweise handelt es sich bei dem ersten Zertifikat um ein Zertifikat, das von der gleichen Zertifizierungsstelle ("CA") ausgestellt wurde, das auch schon den ersten öffentlichen Signaturprüfschlüssel signiert hat (z.B. in Form eines Zertifikats dieser CA, welches den ersten öffentlichen Signaturprüfschlüssel und eine Signatur der CA enthält). Vorzugsweise handelt es sich bei dem zweiten Zertifikat um ein Zertifikat, das von der gleichen CA ausgestellt wurde, die auch schon den zweiten öffentlichen Signaturprüfschlüssel signiert hat (z.B. in Form eines Zertifikats dieser CA, welches den zweiten öffentlichen Signaturprüfschlüssel und eine Signatur dieser CA enthält).

Bei beiden CAs, die das erste und zweite Zertifikat ausstellen, kann es sich auch um die gleiche CA handeln. Insbesondere kann der Authentifizierungsserver als CA fungieren und das zweite Zertifikat ausstellen und an das Identitätsdokument zur Speicherung in dem zweiten Speicher übertragen und/oder das erste Zertifikat ausstellen und (direkt oder mittels eines Autorisierungsservers) an die Kontrolleinheit zur Speicherung in dem ersten Speicher übertragen.

Der öffentliche Signaturprüfschlüssel erlaubt es, die Urheberschaft und Integrität der Nachricht, die die besagte Signatur enthält, zu prüfen. Die Signaturprüfschlüssel wurden vorzugsweise jeweils von einer vertrauenswürdigen CA ausgestellt und signiert. Ein von der besagten CA ausgestelltes Zertifikat, das als Bestandteil des ersten und/oder zweiten Vertrauensankers verwendet wird, erlaubt eine Prüfung der Signatur eines von dieser CA erzeugten Signaturprüfschlüssels, um festzustellen, ob eine mit einem zu dem Signaturprüfschlüssel korrespondierenden Signaturschlüssel erstellte Signatur mit hinreichender Sicherheit einer bestimmten Person oder Personengruppe zugeordnet werden kann.

Die ersten und/oder zweiten Zertifikate, die jeweils einen Verifikationsschlüssel zur Prüfung der Signaturen der Signaturen der Signaturprüfschlüssel umfassen, können als CV Zertifikate ("CV" für "Card Verifiable") ausgebildet sein.

Nach Ausführungsformen kann das erste und/oder das zweite Zertifikat jeweils nur temporär gültig sein, z.B. für eine vordefinierte Anzahl an Authentifizierungsversuchen und/oder bis zu einem maximalen Alter ab Ausstellung.
Das erste und/oder zweite Zertifikat kann jeweils eine Signatur des Authentifizierungsservers enthalten. Das erste und/oder zweite Zertifikat kann beispielsweise von einer PKI (Public-Key-Infrastructure) signiert worden sein, die der Kontrolleinheit bekannt ist und der Kontrolleinheit eine Signaturprüfung des Zertifikats im Zuge der Gültigkeitsprüfung der Vertrauensanker ermöglicht.

Die gegenseitige Authentifizierung von Kontrolleinheit und Identitätsdokument nach Ausführungsformen a) kann beispielsweise umfassen:
- Übermittlung einer Challenge von einem Sender an einen Empfänger;
- Signierung der Challenge mit dem im Speicher des Empfängers gespeicherten symmetrischen kryptographischen Schlüssel durch den Empfänger;
- Übermittlung der signierten Challenge von dem Empfänger an den Sender; und
- Prüfung der Signatur durch den Sender mit Hilfe des im Speicher des Senders gespeicherten symmetrischen kryptographischen Schlüssels des Senders.

Bei der Authentifizierung der Kontrolleinheit gegenüber dem Identitätsdokument fungiert das Identitätsdokument als Sender und die Kontrolleinheit als Empfänger. Bei der Authentifizierung des Identitätsdokuments gegenüber der Kontrolleinheit fungiert das Identitätsdokument als Empfänger und die Kontrolleinheit als Sender. Die Vertrauensbildung zwischen Kontrolleinheit und Identitätsdokument ist hier also implizit vorhanden, da der Authentifizierungsserver nur genau diesen beiden Parteien den symmetrischen Schlüssel ausgestellt hat. Die beiden symmetrischen Schlüssel selbst werden nicht ausgetauscht, sondern abgeleitete Werte.

Die Authentifizierung der Kontrolleinheit gegenüber dem Identitätsdokument bei der Variante "b2)" kann beispielsweise die folgenden Schritte umfassen:
- Übermittlung einer Challenge, also eines Zufallswertes, von dem Identitätsdokument an die Kontrolleinheit;
- Signieren der Challenge mit dem zweiten Signaturschlüssel durch die Kontrolleinheit;
- Übermittlung der signierten Challenge und des zweiten Signaturprüfschlüssels von der Kontrolleinheit an das Identitätsdokument; der zweite Signaturprüfschlüssel kann zusammen mit der signierten Challenge oder in einer separaten Nachricht übermittelt werden;
- Prüfung der Signatur der signierten Challenge durch das Identitätsdokument mit Hilfe des übermittelten zweiten Signaturprüfschlüssels und Prüfung einer Signatur des zweite Signaturprüfschlüssels durch das Identitätsdokument mit Hilfe des zweiten Zertifikats, wobei die Kontrolleinheit sich erfolgreich gegenüber dem Identitätsdokument authentifiziert wenn die Prüfungen ergeben, dass die beiden Signaturen (Signatur der Challenge und Signatur des übertragenen Signaturprüfschlüssels) valide sind, d.h., dass der private zweite Signaturschlüssel, der die Challenge signierte, zu dem (öffentlichen) zweiten Signaturprüfschlüssel korrespondiert und dass der zweite Signaturprüfschlüssel von einer vertrauenswürdigen CA ausgestellt wurde. Letzteres ist anhand der Signatur des zweiten Signaturprüfschlüssels prüfbar.

Die Authentifizierung des Identitätsdokuments gegenüber der Kontrolleinheit nach Variante "b1)" umfasst:
- Übermittlung einer Challenge von der Kontrolleinheit an das Identitätsdokument;
- Signieren der Challenge mit dem ersten Signaturschlüssel durch das Identitätsdokument;
- Übermittlung der signierten Challenge und des ersten Signaturprüfschlüssels, der die von dem ersten Signaturschlüssel erstellten Signaturen prüfen kann, von dem Identitätsdokument an die Kontrolleinheit;
- Prüfung der Signatur der signierten Challenge durch die Kontrolleinheit mit Hilfe des übermittelten ersten Signaturprüfschlüssels und Prüfung einer Signatur des ersten Signaturprüfschlüssels durch die Kontrolleinheit mit Hilfe des ersten Zertifikats, wobei das Identitätsdokument sich erfolgreich gegenüber der Kontrolleinheit authentifiziert wenn die Prüfungen ergeben dass beide Signaturen valide sind.
Die Merkmale der Varianten b1) und b2) können beide in den gleichen Ausführungsformen realisiert sein. Identitätsdokument und Kontrolleinheit können sich gegenseitig authentifizieren. In diesem Fall wirkt das erste, auf dem ersten Speicher gespeicherte Zertifikat als erster Vertrauensanker und das zweite, auf dem zweiten Speicher gespeicherte Zertifikat als zweiter Vertrauensanker. Die von dem ersten Signaturschlüssel signierte Challenge stellt Authentifizierungsdaten des Identitätsdokuments dar, die mittels des ersten Vertrauensankers prüfbar sind, und die von dem zweiten Signaturschlüssel signierte Challenge stellt Authentifizierungsdaten der Kontrolleinheit dar, die mittels des zweiten Vertrauensankers prüfbar sind.
Die Beziehung nach Varianten b1) und b2) zwischen Kontrolleinheit und Identitätsdokument ist explizit vorhanden, da beide Parteien jeweils einen Vertrauensbeweis in Form einer prüfbaren Signatur bereitstellen und austauschen.

Nach weiteren Ausführungsformen authentifiziert sich das Identitätsdokument gegenüber der Kontrolleinheit mit Hilfe des ersten und zweiten Vertrauensankers unter Verwendung eines Chip Authentication Protokolls. Ein solches ist beispielsweise im Einzelnen in der Richtlinie BSI TR-03110 beschrieben.

Der korrespondierende Teil des ersten Vertrauensankers der Kontrolleinheit umfasst, wie oben beschrieben, ein erstes Zertifikat mit einem entsprechenden Verifikationsschlüssel, welcher eine Prüfung einer Signatur des ersten Signaturprüfschlüssels erlaubt.

Die Generierung des ersten Vertrauensankers durch den Authentifizierungsserver kann also die folgenden durch den Authentifizierungsserver auszuführenden Schritte beinhalten: Ausstellung des ersten Zertifikats, das einen ersten Verifikationsschlüssel enthält; Generierung eines öffentlichen ersten Signaturprüfschlüssels, der selbst wiederum eine Signatur enthält, die durch den ersten Verifikationsschlüssel prüfbar ist. Generierung eines privaten ersten Signaturschlüssels, dessen generierte Signaturen durch den öffentlichen ersten Signaturprüfschlüssel prüfbar sind; Das erste Zertifikat wird als erster Vertrauensanker an die Kontrolleinheit zur Speicherung im ersten Speicher übertragen, während der öffentliche erste Signaturprüfschlüssel und der erste private Signaturschlüssel an das Identitätsdokument zur Speicherung im zweiten Speicher übertragen werden. Der öffentliche erste Signaturprüfschlüssel kann also weitere Daten darstellen, deren Vertrauenswürdigkeit durch das erste Zertifikat als ersten Vertrauensanker prüfbar ist.

Die Generierung des zweiten Vertrauensankers durch den Authentifizierungsserver kann also die folgenden durch den Authentifizierungsserver auszuführenden Schritte beinhalten: Ausstellung des zweiten Zertifikats, das einen zweiten Verifikationsschlüssel enthält; Generierung eines öffentlichen zweiten Signaturprüfschlüssels, der selbst wiederum eine Signatur enthält, die durch den zweiten Verifikationsschlüssel prüfbar ist. Generierung eines privaten zweiten Signaturschlüssels, dessen generierte Signaturen durch den öffentlichen zweiten Signaturprüfschlüssel prüfbar ist; Das zweite Zertifikat wird als zweiter Vertrauensanker an das Identitätsdokument zur Speicherung im zweiten Speicher übertragen, während der öffentliche zweite Signaturprüfschlüssel und der zweiten private Signaturschlüssel an die Kontrolleinheit zur Speicherung im ersten Speicher übertragen werden. Der öffentliche zweite Signaturprüfschlüssel kann also weitere Daten darstellen, deren Vertrauenswürdigkeit durch das zweite Zertifikat als zweiten Vertrauensanker prüfbar ist.

Bei auf symmetrischer Kryptographie beruhenden Vertrauensankern muss der Authentifizierungsserver lediglich ein symmetrisches kryptographisches Schlüsselpaar erzeugen und je ein Element dieses Schlüsselpaares an die Kontrolleinheit bzw. das Identitätsdokument zur Speicherung übertragen.

Vorzugsweise hat nach der oben genannten Generierung der Vertrauensanker und zugehörigen Authentifizierungsdaten bzw. Mittel zur Erzeugung der Authentifizierungsdaten (Signaturschlüssel) die Kontrolleinheit den privaten zweiten Signaturschlüssel und den zugehörigen öffentlichen zweiten Signaturprüfschlüssel gespeichert. Das Identitätsdokument hat das zweites Zertifikat mit dem entsprechenden zweiten Verifikationsschlüssel, welcher eine Prüfung einer Signatur des zweiten Signaturprüfschlüssels erlaubt, im zweiten Speicher gespeichert. Das erste und/oder zweite Zertifikat kann in seiner Gültigkeit jeweils begrenzt sein, z.B. durch ein von der ausstellenden CA festgelegtes maximales Gültigkeitsdatum.

Vorzugsweise sind die ersten und zweiten Zertifikate und ersten und zweiten Signierschlüssel und Signaturprüfschlüssel permanent, d.h., für eine Vielzahl von Authentifizierungsversuchen, gespeichert, nachdem sie bei einem initialen Authentifizierungsversuch oder nach Ablauf der Gültigkeit des ersten oder zweiten Vertrauensankers mit Hilfe des Authentifizierungsservers generiert wurden.

Nach Ausführungsformen wird nach einer erfolgreichen gegenseitigen Authentifikation von Identitätsdokument und Kontrolleinheit nach b1) in Kombination mit b2) folgendes Verfahren zwischen der Kontrolleinheit und dem Identitätsdokument durchgeführt, um symmetrische Sitzungsschlüssel abzuleiten und mit diesen Sitzungsschlüsseln den Aufbau einer geschützten Datenübertragungsverbindung zwischen Identitätsdokument und Kontrolleinheit zu ermöglichen:
- Vereinbarung von Domänenparametern zwischen Kontrolleinheit und Identitätsdokument; Diese Vereinbarung kann vor, bei oder nach der gegenseitigen Authentifizierung erfolgen; die Domänenparameter können auch schon ab Herstellung oder Personalisierung des Identitätsdokuments auf diesem Gespeichert sein;
- Generierung eines ersten ephemeralen (d.h., temporären, nur für eine Sitzung gültigen) asymmetrischen Schlüsselpaares durch das Identitätsdokument unter Verwendung der vereinbarten Domänenparameter; das erste ephemerale asymmetrische Schlüsselpaar beinhaltet einen öffentlichen Diffie-Hellman (DH) Schlüssel (also den öffentlichen ersten ephemeralen Schlüssel) und einen privaten DH-Schlüssel (also den privaten ersten ephemeralen Schlüssel);
- Signierung des ersten ephemeralen öffentlichen Schlüssels mit dem privaten ersten Signaturschlüssel des Identitätsdokuments;
- Übertragung des signierten öffentlichen ersten ephemeralen Schlüssels an die Kontrolleinheit;
- Generierung eines zweiten ephemeralen asymmetrischen Schlüsselpaares durch die Kontrolleinheit unter Verwendung der vereinbarten Domänenparameter; das zweiten ephemerale asymmetrische Schlüsselpaar beinhaltet einen öffentlichen Diffie-Hellman (DH) Schlüssel (also den öffentlichen zweiten ephemeralen Schlüssel) und einen privaten DH-Schlüssel (also den privaten zweiten ephemeralen Schlüssel);
- Signatur des zweiten ephemeralen öffentlichen Schlüssels mit dem privaten zweiten Signaturschlüssel durch die Kontrolleinheit;
- Übertragung des signierten zweiten ephemeralen öffentlichen Schlüssels an das Identitätsdokument;
- Prüfung der Signatur des zweiten ephemeralen öffentlichen Schlüssels durch das Identitätsdokument mit Hilfe des Verifikationsschlüssels des zweiten Zertifikats;
- Berechnung eines Sitzungsschlüssels durch das Identitätsdokument durch eine Schlüsselableitung aus dem privaten ersten ephemeralen Schlüssel und dem öffentlichen zweiten ephemeralen Schlüssel; Die Schlüsselableitung kann z.B. in einer Konkatenierung des privaten ersten ephemeralen Schlüssels und des öffentlichen zweiten ephemeralen Schlüssels bestehen;
- Prüfung der Signatur des ersten ephemeralen öffentlichen Schlüssels durch die Kontrolleinheit mit Hilfe des Verifikationsschlüssels des ersten Zertifikats;
- Berechnung einer Kopie des Sitzungsschlüssels durch die Kontrolleinheit durch eine Schlüsselableitung aus dem privaten zweiten ephemeralen Schlüssel und dem öffentlichen ersten ephemeralen Schlüssel; Die Schlüsselableitung kann z.B. in einer Konkatenierung des privaten zweiten ephemeralen Schlüssels und des öffentlichen ersten ephemeralen Schlüssels bestehen..
Dies kann vorteilhaft sein, da mittels der Vertrauensanker und der Domänenparameter eine DH-Schlüsselvereinbarung zur Ableitung von Sitzungsschlüsseln durchgeführt werden kann. Die Sitzungsschlüssel erlauben den Aufbau einer geschützten Datenübertragungsverbindung zwischen der Kontrolleinheit und dem Identitätsdokument, über welchen vertrauliche Daten geschützt übertragen werden können.

Alternativ kann der Nachweis der Authentizität der Kontrolleinheit und des Identitätsdokuments sowie Schlüsselableitung innerhalb des gleichen Verfahrens folgendermaßen durchgeführt werden:
- Senden des öffentlichen zweiten Signaturprüfschlüssels an das Identitätsdokument;
   der öffentliche zweite Signaturprüfschlüssel kann auch in einem Zertifikat enthalten sein. Das Zertifikat kann auch zusammen mit weiteren Zertifikaten, sog. "Zwischenzertifikaten", die eine Zertifikatskettenprüfung erlauben, von der Kontrolleinheit an das Identitätsdokument gesendet werden; Am Anfang der Kette steht beispielsweise ein Zertifikat, dessen öffentlicher Schlüssel (z.B. der zweiter öffentliche Signaturprüfschlüssel) von dem Verifikationsschlüssel des zweiten Zertifikats des Identitätsdokuments prüfbar ist. Am Ende der Kette steht das besagte Zertifikat der Kontrolleinheit, das den öffentlichen zweiten Signaturprüfschlüssel enthält;
- Prüfung der Signatur des öffentlichen zweiten Signaturprüfschlüssels durch den zweiten Vertrauensanker (also durch den Verifikationsschlüssel des zweiten Zertifikats, das auf dem zweiten Speicher gespeichert ist); Hierdurch verifiziert das Identitätsdokument die Vertrauenswürdigkeit der Kontrolleinheit, d.h., die Kontrolleinheit authentifiziert sich gegenüber dem Identitätsdokument;
- Festlegung von Domänenparametern durch das Identitätsdokument und Übermittlung der Domänenparameter an die Kontrolleinheit;
- Berechnung eines ersten ephemeralen Schlüsselpaares, bestehend aus einem ersten privaten ephemeralen Schlüssel und einem ersten öffentlichen ephemeralen Schlüssel; privater und öffentlicher erster ephemeraler Schlüssel bilden ein asymmetrisches kryptographisches Schlüsselpaar;
- Senden des ersten öffentlichen ephemeralen Schlüssels an das Identitätsdokument durch die Kontrolleinheit;
- Berechnung eines Zufallswerts (,nonce') durch das Identitätsdokument;
- Senden des Zufallswerts von dem Identitätsdokument an die Kontrolleinheit;
- Signieren des Zufallswerts und des ersten öffentlichen ephemeralen Schlüssels durch die Kontrolleinheit mittels des privaten zweiten Signaturschlüssels; Die Generierung und Signierung des Zufallswerts zusätzlich zu der Generierung und Signierung des ersten öffentlichen ephemeralen Schlüssel kann vorteilhaft sein, da dem Identitätsdokument dadurch eine Prüfung ermöglicht wird, zu prüfen, ob für die aktuell aufzubauende Sitzung auch ein neuer Sitzungsschlüssel generiert wurde; Dies erhöht die Sicherheit gegenüber dem oben beschriebenen Verfahren zur Generierung der Sitzungsschlüssel, da das Abfangen der Sitzungsschlüssel von einem Dritten und die Verwendung derselben zu manipulativen Zwecken ausgeschlossen wird; Die Sitzungsschlüssel beruhen immer auf einem frisch erstellten Zufallswert und die Kontrolleinheit kann sich sicher sein, dass der Sitzungsschlüssel nicht aus einer früheren Sitzung stammt;
- Senden des signierten Zufallswerts und des signierten ersten öffentlichen ephemeralen Schlüssels durch die Kontrolleinheit an das Identitätsdokument;
- Prüfung der Signaturen des signierten Zufallswerts und des signierten ersten öffentlichen ephemeralen Schlüssels durch das Identitätsdokument mittels des zweiten öffentlichen Signaturprüfschlüssels;
- Senden des öffentlichen ersten Signaturprüfschlüssel an die Kontrolleinheit;
- Prüfung der Signatur des öffentlichen ersten Signaturprüfschlüssels durch den zweiten Vertrauensanker, also durch das erste Zertifikat der Kontrolleinheit;
- Durchführung einer ersten Schlüsselableitung durch die Kontrolleinheit mittels des von dem Identitätsdokument erhaltenen, öffentlichen ersten Signaturprüfschlüssels und des ersten privaten ephemeralen Schlüssels, den die Kontrolleinheit zuvor berechnet hat; Die Ableitung kann z.B. in einer Konkatenation bestehen; Das Ergebnis der Ableitung ist ein erster Sitzungsschlüssel;
   der öffentliche erste Signaturprüfschlüssel, der von dem Identitätsdokument empfangen wurde, fungiert als ein öffentlicher DH-Schlüssel eines ersten DH-Schlüsselpaares; Der öffentliche erste Signaturprüfschlüssel fungiert hier in diesem Schritt also nicht als Signaturprüfschlüssel. In struktureller Hinsicht ist dies aber dasselbe: DH-Schlüsselpaare sind, wie auch Paare aus Signatur- und Signaturprüfschlüssel, asymmetrische Schlüsselpaare; Die Terminologie "Signaturprüfschlüssel" wird daher für dieses Verfahren beibehalten, da die Generierung und Speicherung der Signaturschlüssel und "Signaturprüfschlüssel" identisch ist wie oben z.B. für b1) und b2) beschrieben;
- Berechnung eines ersten Authentisierungstokens durch die Kontrolleinheit durch Verschlüsselung des ersten öffentlichen Signaturprüfschlüssels mit dem Sitzungsschlüssel;
- Senden des ersten Authentisierungstoken durch die Kontrolleinheit an das Identitätsdokument;
- Durchführung einer zweiten Schlüsselableitung durch das Identitätsdokument mittels des von der Kontrolleinheit erhaltenen, öffentlichen zweiten Signaturprüfschlüssels und des privaten zweiten Signaturschlüssels der Kontrolleinheit; der öffentliche zweite Signaturprüfschlüssel, der von der Kontrolleinheit empfangen wurde, fungiert also als zweiter öffentlicher ephemeralen Schlüssel eines zweiten ephemeralen Schlüsselpaares; Das Ergebnis dieser zweiten Schlüsselableitung ist ein zweiter Sitzungsschlüssel;
- Prüfung des ersten Authentisierungstokens durch das Identitätsdokument mit Hilfe des zweiten Sitzungsschlüssels;
- Senden des zweiten Authentisierungstoken durch das Identitätsdokument an die Kontrolleinheit, wobei das weitere Authentisierungstoken mit dem zweiten abgeleiteten Schlüssel verschlüsselt ist.
- Die Kontrolleinheit verifiziert das zweite Authentisierungstoken mit dem in der ersten Schlüsselableitung erzeugten Sitzungsschlüssels; falls die Kontrolleinheit das zweite Authentifizierungstoken mittels ihres ersten Sitzungsschlüssels entschlüsseln kann, "weiß" die Kontrolleinheit, dass erfolgreich eine Vereinbarung symmetrischer Sitzungsschlüssel durch die erste und zweite Schlüsselableitung durchgeführt wurde; die Kontrolleinheit weiß auch, dass die Schlüsselvereinbarung mit einem Identitätsdokument durchgeführt wurde, dessen erster öffentlicher Signaturprüfschlüssel von einer vertrauenswürdigen Zertifizierungsstelle erstellt wurde;

Im Ergebnis werden also auch bei dieser Variante zwei symmetrische Sitzungsschlüssel vereinbart, die dem Aufbau einer geschützten Datenübertragungsverbindung dienen. Das Identitätsdokument authentisiert sich dadurch, dass es mit seinem ersten privaten Signaturschlüssel die DH-Schlüsselvereinbarung durchführen kann. Die Kontrolleinheit weiß, dass der private Schlüssel der Karte genutzt wurde um den Schlüssel zu vereinbaren.

Nach Ausführungsformen umfasst die Prüfung, ob zumindest der erste Vertrauensanker in dem ersten Speicher der Kontrolleinheit gespeichert vorliegt, den Empfang einer Dokumentenkennung des Identitätsdokuments durch die Kontrolleinheit. Unter einer Dokumentenkennung wird im Folgenden jeder Datenwert verstanden, welcher für das Identitätsdokument eindeutig ist und eine Identifizierung des Dokuments ermöglicht. Die Kontrolleinheit durchsucht ein erstes Register, das mit der Kontrolleinheit operativ verbunden ist (also zum Beispiel in dem ersten Speicher gespeichert ist). Das erste Register dient zur verknüpften Speicherung von Dokumentenkennungen und ersten Vertrauensankern. Das Paar aus erstem und zweitem Vertrauensanker kann dabei zum Beispiel dokumentspezifisch gebildet worden sein. Falls das erste Register einen mit der empfangenen Dokumentenkennung verknüpft gespeicherten ersten Vertrauensanker enthält, verwendet die Kontrolleinheit den in dem ersten Register enthaltenen ersten Vertrauensanker für die Authentifizierung der Kontrolleinheit gegenüber dem Identitätsdokument. Falls das erste Register keinen mit der empfangenen Dokumentenkennung verknüpft gespeicherten ersten Vertrauensanker enthält, veranlasst die Kontrolleinheit wie oben bereits beschrieben die Erzeugung des ersten und zweiten Vertrauensankers durch Interoperation der Kontrolleinheit mit einem Authentifizierungsserver. Die Speicherung des hierdurch erzeugten ersten Vertrauensankers in dem ersten Speicher erfolgt dadurch, dass die Kontrolleinheit den erzeugten ersten Vertrauensanker in dem ersten Register verknüpft mit der Dokumentenkennung speichert. Da für jeden Nutzer ein anderes Paar aus erstem und zweitem Vertrauensanker erzeugt und gespeichert wird, ist das Verfahren besonders sicher.

Bei Ausführungsformen, in welchen für jedes Paar von Identitätsdokument-Kontrolleinheit genau ein erster und ein zweiter Vertrauensanker generiert wird, müssen z.B. für eine Anzahl von n Identitätsdokumenten n zweite Vertrauensanker im zweiten Speicher und n erste Vertrauensanker in ersten Speicher gespeichert sein. Zum Beispiel kann es sich bei jedem der Paare aus erstem und zweiten Vertrauensanker um ein nutzerspezifisch erstelltes symmetrisches kryptographisches Schlüsselpaar handeln, wobei jeder der symmetrischen Schlüssel die Funktion des Vertrauensankers und der Funktion der Authentifizierungsdaten, die durch den Vertrauensanker des jeweils anderen Objekts (Identitätsdokument oder Kontrolleinheit) prüfbar sind, in sich vereint . Es ist auch möglich, dass das gleiche Identitätsdokument zur Authentifizierung eines Nutzers gegenüber einer Vielzahl m verschiedener Sicherungsanlagen, welchen jeweils eine eigene Kontrolleinheit entspricht, dient. In diesem Fall enthält der zweite Speicher jedes Identitätsdokuments m zweite Schlüssel, damit das Identitätsdokument die Authentifizierungsdaten jeder der m Kontrolleinheiten prüfen kann.

Nach manchen Ausführungsformen ist im ersten Speicher der Kontrolleinheit nur ein einziger erster Vertrauensanker gespeichert. Eine Vielzahl von Identitätsdokumenten von Nutzern, die sich bei der Sicherungsanlage registriert haben, stellen im Zuge ihrer Authentifizierung Authentifizierungsdaten zur Verfügung, die zu diesem ersten Vertrauensanker korrespondierenden. Die Authentifizierungsdaten dieser Identitätsdokumente können identisch sein. Auch die zweiten Vertrauensanker der besagten Identitätsdokumente können identisch sein. Es genügt also ein einziger erster Vertrauensanker, um der Kontrolleinheit die Prüfung von Authentifizierungsdaten einer Vielzahl von Identitätsdokumenten zu ermöglichen. Dieses kann vorteilhaft sein, weil eine nutzerspezifische Generierung, Speicherung und Verwaltung von einer Vielzahl von vertrauenswürdigen Authentifizierungsdaten nicht erforderlich ist. Vorzugsweise handelt es sich bei den ersten und zweiten Vertrauensankern um Zertifikate, welche durch eine Zertifizierungsstelle innerhalb einer vertrauenswürdigen PKI ausgestellt wurde und mittels von der selben CA ausgestellten Zertifikaten überprüfbar sind. Bei den Authentifizierungsdaten handelt es sich um Signaturprüfschlüssel, die jeweils mit einer Signatur verknüpft sind, die von besagter CA generiert wurde.

Nach anderen Ausführungsformen übermittelt die Kontrolleinheit eine Kontrolleinheit-Kennung an das Identitätsdokument. Die Kontrolleinheitskennung ist für die Kontrolleinheit einzigartig und erlaubt eine Identifizierung der Kontrolleinheit bzw. der Sicherungsanlage, welche diese Kontrolleinheit enthält. Das Identitätsdokument durchsucht ein zweites Register, das beispielsweise in dem zweiten Speicher des Identitätsdokuments gespeichert sein kann. Das zweite Register dient der verknüpften Speicherung von Kontrolleinheitskennungen und kontrolleinheitspezifisch erstellten zweiten Vertrauensankern. Das Identitätsdokument speichert also die übermittelte Kontrolleinheit-Kennung in Verknüpfung mit dem zweiten Vertrauensanker, der in Kombination mit dem entsprechenden ersten Vertrauensanker der Kontrolleinheit eine gegenseitige Authentifikation von Kontrolleinheit und Identitätsdokument ermöglicht. Falls die Durchsuchung ergibt, dass das zweite Register bereits einen mit der empfangenen Kontrolleinheitskennung verknüpft gespeicherten zweiten Vertrauensanker enthält, sendet das Identitätsdokument eine Nachricht, dass das Identitätsdokument über einen zweiten Vertrauensanker für die Authentifizierung der Kontrolleinheit verfügt, an die Kontrolleinheit. Schließlich verwendet das Identitätsdokument den in dem zweiten Register gespeicherte zweiten Vertrauensanker für die gegenseitige Authentifizierung von Kontrolleinheit und Identitätsdokument. Falls das zweite Register keinen mit der empfangenen Kontrolleinheitskennung verknüpft gespeicherten zweiten Vertrauensanker enthält, sendet das Identitätsdokument eine Nachricht, dass das Identitätsdokument über keinen zweiten Vertrauensanker für die gegenseitige Authentifizierung von Kontrolleinheit und Identitätsdokument verfügt, an die Kontrolleinheit. Die Kontrolleinheit veranlasst, wie oben beschrieben, die Erzeugung des ersten und zweiten Vertrauensankers durch Interoperation der Kontrolleinheit mit dem Authentifizierungsserver. Die Speicherung des erzeugten zweiten Vertrauensankers in dem zweiten Speicher erfolgt durch Speicherung des zweiten Vertrauensankers in dem zweiten Register verknüpft mit der Kontrolleinheitskennung.

Nach weiteren Ausführungsformen gewährt die Kontrolleinheit einer Vielzahl von Nutzern, welchen jeweils ein Identitätsdokument zugeordnet ist, Zugriff zu der Sicherungsanlage nach entsprechender Authentifizierung. Die Kontrolleinheit beinhaltet ein drittes Register, in welchem Nutzergruppenkennungen mit ersten Vertrauensankern verknüpft gespeichert sind. Die Nutzergruppenkennungen sind für disjunkte Gruppen von Nutzern ausgestellt und sind auf den Identitätsdokumenten der Nutzer entsprechend deren Gruppenzugehörigkeit gespeichert. Die Prüfung, ob zumindest der erste Vertrauensanker in dem ersten Speicher der Kontrolleinheit gespeichert vorliegt, umfasst den Empfang einer Nutzergruppenkennung von dem Identitätsdokument eines Nutzers durch die Kontrolleinheit. Die Nutzergruppenkennung ist dabei für die Nutzergruppe, der der Nutzer des Identitätsdokuments angehört, einzigartig und erlaubt eine Identifizierung dieser Nutzergruppe. Die Kontrolleinheit durchsucht das dritte Register nach der empfangenen Nutzergruppenkennung. Falls die Durchsuchung ergibt, dass das dritte Register einen mit der empfangenen Nutzergruppenkennung verknüpft gespeicherten ersten Vertrauensanker enthält, verwendet die Kontrolleinheit diesen in dem dritten Register enthaltenen ersten Vertrauensanker im Zuge der gegenseitigen Authentifizierung von Kontrolleinheit und Identitätsdokument. Falls die Durchsuchung ergibt, dass das dritte Register keinen mit der empfangenen Nutzergruppenkennung verknüpft gespeicherten ersten Vertrauensanker enthält, veranlasst die Kontrolleinheit wie oben beschrieben die Erzeugung des ersten und zweiten Vertrauensankers durch Interoperation mit dem Authentifizierungsserver. Die Speicherung des erzeugten ersten Vertrauensankers in dem ersten Speicher erfolgt durch Speicherung des ersten Vertrauensankers in dem dritten Register verknüpft mit der Nutzergruppenkennung.
Die Verwendung von Nutzergruppenkennungen anstatt nutzerspezifischer bzw. dokumentspezifischer Kennungen hat den Vorteil, dass eine Anonymisierung des einzelnen Nutzers erfolgt. Bewegungsprofile können allenfalls noch für die Gesamtheit der Mitglieder einer Gruppe, nicht aber mehr für einzelne Personen erstellt werden.

Auf Veranlassung der Kontrolleinheit können folgende Schritte durchgeführt werden:
- Generierung des ersten und zweiten Vertrauensankers durch den Authentifizierungsserver, alleine oder in Interoperation mit dem Identitätsdokument;
- Authentifizierung des Authentifizierungsservers gegenüber dem Identitätsdokument;
- Authentifizierung des Nutzers gegenüber dem Identitätsdokument;
- Im Falle der erfolgreichen Authentifizierung des Nutzers und des Authentifizierungsservers gegenüber dem Identitätsdokument, Aufbau einer gesicherten Verbindung, z.B. einer Ende-zu-Ende verschlüsselten Verbindung, zwischen dem Authentifizierungsserver und dem Identitätsdokument;
- Übertragung des generierten zweiten Vertrauensankers über die gesicherte Verbindung von dem Authentifizierungsserver an das Identitätsdokument zur Speicherung in dem zweiten Speicher;
- Übertragung der elektronischen Identifikation an den Autorisierungsserver. Die Übertragung kann auf zweierlei unterschiedlichen Verfahren i) oder ii) beruhen.
- Schließlich wertet der Autorisierungsserver die nach i) oder ii) übertragene elektronische Identifikation zur Authentifizierung des Nutzers aus.
   Verfahren i) umfasst:
      - Auslesen der elektronischen Identifikation durch den Authentifizierungsserver über die geschützte Verbindung aus dem Identitätsdokument; die ausgelesene elektronische Identifikation kann z.B. aus ein oder mehreren in dem Identitätsdokument gespeicherten Attributen wie etwa Alter, Name, Geburtstag etc. bestehen. Das Auslesen der elektronischen Identifikation kann Auslesen von Attributen gemäß einer Attributspezifikation umfassen. Attributspezifikation kann z.B. in verschlüsselter Form von dem Autorisierungsserver über die Kontrolleinheit an den Authentifizierungsserver übertragen werden;
      - Übertragung der ausgelesenen elektronischen Identifikation und des ersten Vertrauensankers von dem Authentifizierungsserver an den Autorisierungsserver, wobei die Übertragung in geschützter Weise erfolgt;
      - Weiterleitung des ersten Vertrauensankers von dem Autorisierungsserver an die Kontrolleinheit zur Speicherung im ersten Speicher.
   Verfahren ii) umfasst:
      - Übertragung des ersten Vertrauensankers von dem Authentifizierungsserver an den Autorisierungsserver, wobei die Übertragung in geschützter Weise erfolgt;
      - Weiterleitung des ersten Vertrauensankers von dem Autorisierungsserver an die Kontrolleinheit zur Speicherung im ersten Speicher;
      - Verwendung des gespeicherten ersten Vertrauensankers und des zweiten Vertrauensankers zur gegenseitigen Authentifizierung von Kontrolleinheit und Identitätsdokument;
      - Im Falle der erfolgreichen gegenseitigen Authentifizierung, Übermittlung der in dem Identitätsdokument gespeicherten elektronischen Identifikation durch die Kontrolleinheit von dem Identitätsdokument an den Autorisierungsserver;
      Dies ist vorteilhaft, da die beiden Vertrauensanker und die Identifikation in einer Form übertragen werden, die vor Manipulation schützt.

Die Veranlassung der Generierung des ersten und zweiten Vertrauensankers durch den Authentifizierungsserver kann insbesondere folgende Schritte umfassen:
- Senden einer ersten Anfrage, ob der Nutzer des Identitätsdokuments als zugriffsberechtigt anzusehen ist, an einen Autorisierungsserver;
- Generierung einer zweiten Anfrage, die an den Authentifizierungsserver gerichtet ist, durch den Autorisierungsserver, wobei die zweite Anfrage eine Attributspezifikation beinhaltet;
- Verschlüsselung der generierten zweiten Anfrage mit einem öffentlichen Schlüssel des Authentifizierungsservers;
- Senden der verschlüsselten zweiten Anfrage von dem Autorisierungsserver an den Authentifizierungsserver;
- Entschlüsseln der zweiten Anfrage durch den Authentifizierungsserver.
Dieses Verfahren kann vorteilhaft sein, da der zum Schutz der übertragenen Daten verwendeten öffentlichen Schlüssel des Authentifizierungsservers keine spezielle Vertrauensbeziehung zwischen Autorisierungsserver und Authentifizierungsserver erfordert. Öffentliche Schlüssel erlauben eine Absicherung der Kommunikation mit jedermann, auch ohne vorhergehende explizite Vertrauensvereinbarung durch den Austausch von Geheimnissen. Es kann also ggf. ohne größere Änderungen auf einen anderen Authentifizierungsserver zurückgegriffen werden.

Die Übertragung der ausgelesenen elektronischen Identifikation und des ersten Vertrauensankers von dem Authentifizierungsserver an den Autorisierungsserver nach i) kann folgende Schritte umfassen, um die Sicherheit der übertragenen Daten zu gewährleisten:
- Berechnung einer Nachricht durch den Authentifizierungsserver, die die ausgelesene elektronische Identifikation und den ersten Vertrauensanker in verschlüsselter Form enthält, wobei zur Verschlüsselung ein vom Autorisierungsserver bereitgestellter öffentlicher Schlüssel verwendet wird;
- Übertragung der Nachricht von dem Authentifizierungsserver an den Autorisierungsserver;
- Entschlüsselung der Nachricht durch den Autorisierungsserver zur Übertragung des durch Entschlüsselung der Nachricht gewonnenen ersten Vertrauensankers von dem Autorisierungsserver an die Kontrolleinheit.

Der erste Speicher kann als ein sicherer Schlüsselspeicher der Kontrolleinheit ausgebildet sein. Der sichere Schlüsselspeicher kann vorzugsweise aus einem Hardware Storage Module (HSM), einem Secure Access Module (SAM), einem Trusted Platform Module (TPM) oder einem Secure Element bestehen. Zusätzlich oder in Alternative dazu kann auch der zweite Speicher des Identitätsdokuments als sicherer Schlüsselspeicher ausgebildet sein. Der sichere Schlüsselspeicher des Identitätsdokuments besteht vorzugsweise aus einem Secure Access Module (SAM) oder einem Secure Element. Diese Maßnahmen gewähren eine sichere Speicherung der Vertrauensanker in einer Weise, dass Dritte keine Möglichkeit haben, die Vertrauensanker unberechtigterweise auszulesen um sich beispielsweise Zugang zu der Sicherungsanlage zu verschaffen.

Die elektronische Identifikation umfasst beispielsweise ein oder mehrere Attribute, welche jeweils eine Eigenschaft des Nutzers, dem das Identitätsdokument zugeordnet ist, spezifizieren, z.B. Alter, Name, Zugehörigkeit zu einer Firma, etc. Dies hat den Vorteil, dass diese elektronische Identifikation auch von Anwendungen und Programmen der Kontrolleinheit ausgewertet werden können, die weitere Angaben benötigen, die über den bloßen Umstand, dass der Nutzer sich schon einmal mit bekannter Identität bei der Sicherungsanlage hat registrieren lassen, hinausgeht. So ist es beispielsweise möglich, eine bestimmte Funktion einer Sicherungsanlage, z.B. eine wirksame Bestellung über einen Online-Shop, erst dann freizugeben, wenn anhand der Attribute feststeht, dass der Käufer alt genug ist, um Verträge wirksam abschließen zu können.

Alternativ dazu wird die elektronische Identifikation durch das Identitätsdokument durch eine Verknüpfung eines privaten kryptographischen Schlüssels des Identitätsdokuments und eines öffentlichen kryptographischen Schlüssels des Authentifizierungsservers erzeugt. Die Verknüpfung kann z.B. in einer Multiplikation des besagten privaten kryptographischen Schlüssels mit dem öffentlichen kryptographischen Schlüssels des Authentifizierungsservers bestehen, die die elektronische Identifikation als numerischen Wert liefert. Die Verknüpfung kann aber auch aus komplexeren Ableitungsprotokollen bestehen. Der verknüpfte Wert wird dynamisch unmittelbar vor seiner Übertragung an die Kontrolleinheit oder den Authentifizierungsserver berechnet und vorzugsweise nicht auf einem Speicher des Identitätsdokuments gespeichert ist, was die Sicherheit erhöht.

Die elektronische Identifikation kann auch aus einer "Restricted Identification" (RI) des Identitätsdokumentes bestehen bzw. diese umfassen. Die RI ist ein Datenwert, der bei Durchführung des gleichnamigen Protokolls "Restricted Identification" zur Pseudonymerzeugung berechnet wird. Das Protokoll basiert auf einem Diffie-Hellman-Schlüsseltausch zwischen Identitätsdokument und Kontrolleinheit, wofür auf Seiten des Identitätsdokuments ein Berechtigungszertifikat, Domainparameter sowie ein für das Identitätsdokument eindeutiger Schlüssel, z.B. ein privater Signaturschlüssel, benötigt werden. Verschiedene Verfahren zur Erzeugung des RI sind im Stand der Technik bekannt. Der RI kann ein Pseudonym darstellen, das keinen Rückschluss auf Namen oder Adresse des Nutzers zulässt. Außerdem hat die Verwendung des IR als elektronische Identifikation des Nutzers den Vorteil, dass dieser Wert wie der oben genannte verknüpfte Wert dynamisch berechnet wird und somit nicht auf einem Speicher des Identitätsdokuments gespeichert ist, was die Sicherheit weiter erhöht.

In einem weiteren Aspekt betrifft die Erfindung ein computerimplementiertes Verfahren zur Kontrolle des Zugriffs eines Nutzers auf eine Sicherungsanlage. Dem Nutzer ist ein elektronisch auslesbares Identitätsdokument beinhaltend eine elektronische Identifikation des Nutzers zugeordnet. Die Sicherungsanlage umfasst eine Kontrolleinheit. Ein Autorisierungsserver, der Bestandteil der Sicherungsanlage oder an diese operativ gekoppelt ist, gewährt dem Nutzer in Abhängigkeit von dessen elektronischer Identifikation Zugriff zu der Sicherungsanlage. Die folgenden Schritte des computerimplementierten Verfahrens werden von einem Authentifizierungsserver durchgeführt:
- Empfang einer Anfrage zum Generieren eines ersten und/oder zweiten Vertrauensankers; die Anfrage wird z.B. im Zuge im Zuge eines initialen Zugriffsgesuchs des Nutzers mittels des Identitätsdokuments auf die Sicherungsanlage generiert und über die Kontrolleinheit an den Autorisierungsserver weitergeleitet;
- auf Empfang der Anfrage, Authentifizierung des Authentifizierungsservers gegenüber dem Identitätsdokument und Generierung eines ersten und zweiten Vertrauensankers;
- im Falle einer erfolgreichen gegenseitigen Authentifizierung von Authentifizierungsserver und Identitätsdokument, Aufbau einer sicheren Verbindung zwischen Authentifizierungsserver und Identitätsdokument;
- Übermittlung der Nachricht an den Autorisierungsserver zur Entschlüsselung der Nachricht und zur Weiterleitung des entschlüsselten ersten Vertrauensankers an die Kontrolleinheit, um eine automatische gegenseitige Authentifizierung von Identitätsdokument und Kontrolleinheit mittels des ersten und zweiten Vertrauensankers ohne Hilfe des Authentifizierungsservers bei zukünftigen Erlaubnisanfragen des Nutzers zu ermöglichen.

Für den Fall, dass alle Identitätsdokumente den gleichen zweiten Vertrauensanker teilen, ist es ausreichend, dass die generierte Nachricht lediglich den einen ersten Vertrauensanker enthält, welcher zusammen mit einem der zweiten Vertrauensanker eine gegenseitige Authentifizierung von Kommunikationseinheit und Identitätsdokument ermöglicht. In diesem Fall unterscheidet die Kontrolleinheit nicht zwischen individuellen Karten, sondern betrachtet jeden Inhaber als berechtigt, dessen Identitätsdokument den zweiten Vertrauensanker aufweist.

Die elektronische Identifikation zur Authentifizierung des Nutzers kann dadurch an den Autorisierungsserver übertragen werden, dass der Authentifizierungsserver die elektronische Identifikation über die sichere Verbindung ausliest und als Bestandteil der Nachricht an den Autorisierungsserver überträgt.

Alternativ dazu kann die Kontrolleinheit den generierten und übertragenen ersten Vertrauensanker und das Identitätsdokument den generierten und übertragenen zweiten Vertrauensankers zur gegenseitigen Authentifizierung verwenden, und die Kontrolleinheit nach besagter gegenseitiger Authentifizierung die elektronische Identifikation auslesen und an den Autorisierungsserver übertragen.

Die Übertragung der ausgelesenen elektronischen Identifikation an den Autorisierungsserver ermöglicht dem Autorisierungsserver einen Vergleich der elektronischen Identifikation mit einem Referenzwert. Dem Nutzer wird beispielsweise nur dann Zugriff auf die Sicherungsanlage gewährt, wenn die übertragene elektronische Identifikation mit dem Referenzwert übereinstimmt.

Nach anderen Ausführungsformen beinhaltet die vom Authentifizierungsserver erzeugte Nachricht ferner eine Nutzerkennung oder Nutzergruppenkennung, die an den Autorisierungsserver weitergeleitet wird und dem Autorisierungsserver einen Vergleich der elektronischen Identifikation mit einem dem Nutzer zugeordneten Referenzwert ermöglicht.

In einem weiteren Aspekt betrifft die Erfindung einen Authentifizierungsserver mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung des von dem Authentifizierungsserver gemäß einer der oben beschriebenen Ausführungsformen auszuführenden Verfahrens bewirken.

In einem weiteren Aspekt betrifft die Erfindung ein computerimplementiertes Verfahren zur Kontrolle des Zugriffs eines Nutzers auf eine Sicherungsanlage. Dem Nutzer ist ein elektronisch auslesbares Identitätsdokument beinhaltend eine elektronische Identifikation des Nutzers zugeordnet. Die Sicherungsanlage umfasst eine Kontrolleinheit. Die Kontrolleinheit ist dazu ausgebildet, das folgende Verfahren durchzuführen:
- Empfang einer Anfrage von einem Terminal, in dessen Leseschnittstelle das Identitätsdokument eingebracht wurde, dem Nutzer Zugriff auf die Sicherungsanlage zu gewähren;
- Auf Empfang der Anfrage, Prüfung ob zumindest ein erster Vertrauensanker in einem geschützten ersten Speicher der Kontrolleinheit gespeichert vorliegt;
- Falls der erste Vertrauensanker in dem ersten Speicher zum Zeitpunkt des Empfangs der Anfrage vorliegt, Verwendung des gespeicherten ersten Vertrauensankers und eines zweiten Vertrauensankers, der zum erwähnten Zeitpunkt auf einem geschützten zweiten Speicher des Identitätsdokuments gespeichert vorliegt, zur gegenseitigen Authentifizierung von Kontrolleinheit und Identitätsdokument;
- Falls der erste Vertrauensanker nicht in dem ersten Speicher gespeichert vorliegt, veranlasst die Kontrolleinheit, z.B. mittels des Autorisierungsservers, einen Authentifizierungsserver, den ersten und/oder zweiten Vertrauensanker zu erzeugen; Empfang des erzeugten ersten Vertrauensankers von dem Authentifizierungsserver; dies kann indirekt geschehen, z.B. über den Autorisierungsserver; Speicherung des empfangenen ersten Vertrauensanker in dem ersten Speicher. Optional kann die Kontrolleinheit den generierten und gespeicherten ersten Vertrauensanker verwenden, um sich gegenüber der Kontrolleinheit zu authentifizieren und die elektronischen Identifikation des Nutzers von dem Identitätsdokument auszulesen und an den Autorisierungsserver zu übertragen.

Nach Ausführungsformen wird die elektronische Identifikation zur Authentifizierung des Nutzers an den Autorisierungsserver dadurch übertragen, dass die Kontrolleinheit den generierten und übertragenen ersten Vertrauensanker zur Authentifizierung gegenüber dem Identitätsdokument verwendet. In analoger Weise kann das Identitätsdokument den generierten und übertragenen zweiten Vertrauensankers zur Authentifizierung gegenüber der Kontrolleinheit verwenden.
Nach gegenseitiger Authentifizierung der Kontrolleinheit und des Identitätsdokuments liest die Kontrolleinheit die elektronische Identifikation aus dem Identitätsdokument des Nutzers und überträgt die ausgelesene elektronische Identität an den Autorisierungsserver. Die Übertragung der ausgelesenen elektronischen Identifikation an den Autorisierungsserver ermöglicht es dem Autorisierungsserver, einen Vergleich der elektronischen Identifikation mit einem Referenzwert durchzuführen, wobei die Gewährung des Zugriffs des Nutzers auf die Sicherungsanlage nur bei Übereinstimmung der elektronischen Identifikation mit dem Referenzwert gewährt wird.

In einem weiteren Aspekt betrifft die Erfindung eine Kontrolleinheit mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung des von der Kontrolleinheit gemäß einer der oben beschriebenen Ausführungsformen auszuführenden Verfahrens bewirken.

In einem weiteren Aspekt betrifft die Erfindung ein Sicherheitssystem mit einer zugriffsbeschränkten Sicherungsanlage. Die Sicherungsanlage beinhaltet eine Kontrolleinheit nach einer der oben beschriebenen Ausführungsformen. Der Autorisierungsserver kann Bestandteil des Sicherheitssystems sein. Außerdem kann das Sicherheitssystem ein oder mehrere Identitätsdokumente umfassen, die jeweils einem Nutzer zugeordnet sind. Ferner kann das Sicherheitssystem mehrere Terminals umfassen, welche dem Nutzer ermöglichen, das ihm zugewiesene Identitätsdokument in den Empfangsbereich eines der Terminals einzuführen um sich gegenüber der Sicherungsanlage zu authentifizieren. Das Sicherungssystem kann auch einen Authentifizierungsserver umfassen.

Im Weiteren werden Ausführungsformen der Erfindung mit Bezugnahme auf die Zeichnungen näher erläutert. Es zeigen:
- Figur 1: eine Sicherungsanlage mit einer Kontrolleinheit, die über ein Netzwerk mit einem Authentifizierungsserver und einem Autorisierungsserver verbunden ist,
- Figur 2: den Inhalt des ersten und zweiten Speichers nach einer weiteren Ausführungsform;
- Figur 3: einen Ablauf einer initialen Authentifizierung eines Nutzers unter Rückgriff auf einen Authentifizierungsserver,
- Figur 4: einen Ablauf einer erneuten Authentifizierung eines Nutzers ohne Rückgriff auf den Authentifizierungsserver, und
- Figur 5: ein Flussdiagramm eines Authentifizierungsverfahrens, welches in Abhängigkeit von verfügbaren Vertrauensankern eine Interaktion von Kontrolleinheit und Authentifizierungsserver beinhaltet.

Elemente der nachfolgenden Ausführungsformen, die einander entsprechen oder gleichen, werden mit denselben Bezugszeichen gekennzeichnet.

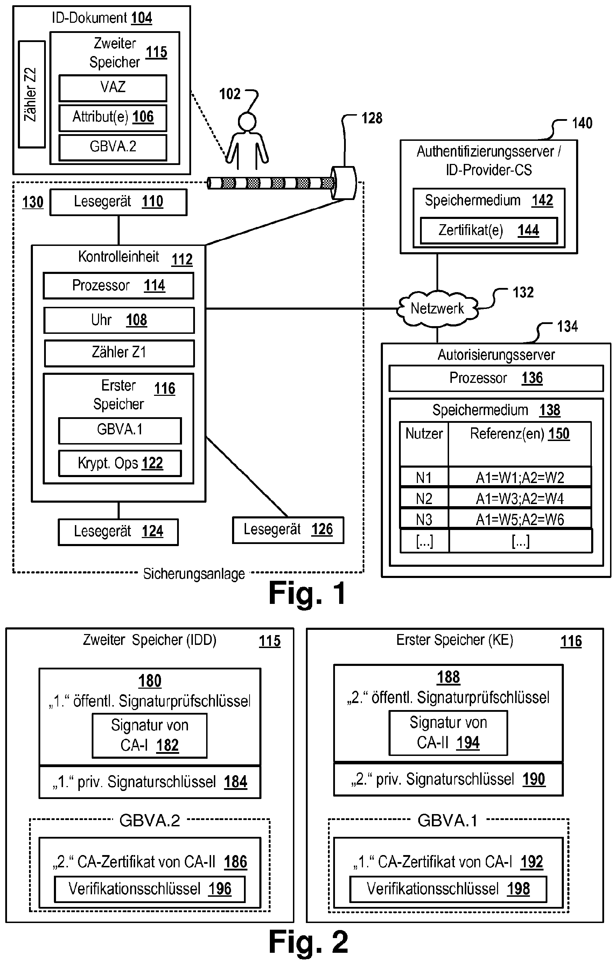

**Figur** 1 zeigt eine Sicherungsanlage 130, welche eine Kontrolleinheit 112 und mehrere Terminals 110, 124, 126 beinhaltet. Die Sicherungsanlage umfasst eine oder mehrere Verriegelungsanlagen 128, zum Beispiel eine Tür, eine Schranke oder dergleichen, welche einem Nutzer 102 Zugang zu einem geschützten Bereich der Sicherungsanlage gewährt, falls der Nutzer sich erfolgreich gegenüber einem Autorisierungsserver 134 und damit auch der Sicherungsanlage authentifiziert. Die Authentifizierung des Nutzers gegenüber dem Autorisierungsserver erfolgt dabei unter Zuhilfenahme eines Identitätsdokuments 104, das dem Nutzer 102 zugeordnet ist. Bei den Terminals kann es sich um kontaktlose oder kontaktbehaftete Kartenlesegeräte handeln. Durch Einbringen seines Identitätsdokuments 104 in den Empfangsbereich/in die Lese-Schnittstelle eines der Terminals kann der Nutzer 102 die Durchführung eines Authentifizierungsversuchs gegenüber dem Autorisierungsserver einleiten, um sich Zugriff auf geschützte Objekte der Sicherungsanlage 130 zu verschaffen.

Die Kontrolleinheit ist mit dem Autorisierungsserver 134 und mit einem Authentifizierungsserver 140 über ein Netzwerk 132, zum Beispiel das Internet, verbunden.

Die Kontrolleinheit 112 umfasst einen ersten Speicher 116, der zur geschützten Speicherung eines ersten, gültigkeitsbeschränkten Vertrauensankers GBVA.1 dient. Außerdem kann der erste Speicher kryptographische Schlüssel 188, 190 und/oder Programminstruktionen 122 zur Durchführung kryptographischer Operationen (Verschlüsselung, Entschlüsselung, Signierung, Zertifikatsprüfung etc.) beinhalten wie im Einzelnen in Fig. 2 ausgeführt. Diese Instruktionen können von einem Prozessor 114 der Kontrolleinheit ausgeführt werden. Außerdem kann die Kontrolleinheit eine Uhr 108 zur Bereitstellung einer aktuellen, vertrauenswürdigen Zeitangabe beinhalten. Alternativ oder zusätzlich zu dieser Uhr kann die Kontrolleinheit auch einen Zähler Z1 beinhalten, welcher eine Anzahl der durchgeführten gegenseitigen Authentifizierungen von Kontrolleinheit und Identitätsdokument mittels eines gegebenen Paares an ersten und zweiten Vertrauensankern widergibt. Die vertrauenswürdige Zeitangabe der Uhr 108 und/oder der Zählwert des Zählers Z1 können dafür verwendet werden, zu überprüfen, ob ein bestimmtes Paar aus erstem und zweitem Vertrauensanker, das eine gegenseitige Authentifikation von Identitätsdokument und Kontrolleinheit erlaubt, noch gültig ist.

Das Identitätsdokument umfasst einen zweiten Speicher 115 zur geschützten Speicherung eines zweiten Vertrauensankers GBVA.2 wie im Einzelnen beispielhaft in Fig. 2 ausgeführt. Das Identitätsdokument kann zudem einen Prozessor beinhalten. Auf dem zweiten Speicher können ein oder mehrere Attribute 106 des Nutzers 102 und/oder andere Datenwerte gespeichert sein, die die elektronische Identität des Nutzers bestimmen oder mitbestimmen und als 'elektronische Identifikation' des Nutzers bezeichnet werden. Bei den Attributen kann es sich zum Beispiel um Attribute wie Alter, Name, Adresse, Geschlecht, Firma, Abteilung etc. handeln. Auf dem zweiten Speicher kann außerdem eine vertrauenswürdige, näherungsweise aktuelle Zeitangabe VAZ gespeichert sein. Diese kann in unregelmäßigen Abständen aktualisiert werden, zum Beispiel wenn im Zuge eines Authentifizierungsprozesses ein vertrauenswürdiges Zertifikat 186 mit einer aktuelleren Zeitangabe VAZ_{jünger} von dem Identitätsdokument empfangen wird. In diesem Fall wird die veraltete Zeitangabe VAZₐₗₜ durch eine neuere, vertrauenswürdige Zeitangabe VAZ_{jünger}, ersetzt.

Der Autorisierungsserver 134 beinhaltet einen Prozessor 136 und ein Speichermedium 138, welches computerlesbare Programminstruktionen zur Ausführung durch den Prozessor 136 beinhaltet. Außerdem beinhaltet das Speichermedium eine Zuordnung von Nutzer-IDs N1, N2, N3 verschiedener Nutzer zu Referenzwerten 150. Bei den Referenzwerten kann es sich beispielsweise um die Attributwerte der Nutzer handeln, die sich bereits bei dem Autorisierungsserver bzw. der an dieses gekoppelten Sicherungsanlage registriert haben, also zum Beispiel Name und Adresse, Alter und Geschlecht, Arbeitgeber und Abteilung des betreffenden, registrierten Nutzers, oder davon abgeleitete Werte, z.B. Hashwerte. Zusätzlich oder anstatt der Nutzer-IDs N1, N2, ..., können auch Nutzergruppen-IDs gespeichert sein, welche mit gruppenspezifischen Referenzwerten verknüpft gespeichert sind. Art und Umfang der Zugriffsrechte können nutzergruppenspezifisch festgelegt werden.

Die Authentifizierung des Nutzers 102 gegenüber dem Autorisierungsserver beinhaltet, dass die elektronische Identifikation 106 des Nutzers aus dem Identitätsdokument 104 durch die Kontrolleinheit 112 über eine Leseschnittstelle des Terminals 110 ausgelesen wird. Die Kontrolleinheit wiederum leitet die elektronische Identifikation an den Autorisierungsserver 134 weiter, der die elektronische Identifikation mit einem für diesen Nutzer gespeicherten Referenzwert vergleicht. Falls der Vergleich ergibt, dass der Nutzer, von dem die elektronische Identifikation stammt, sich bereits bei dem Autorisierungsserver registriert hat und als vertrauenswürdig gilt, (etwa bei Identität der übermittelten elektronischen Identifikation mit dem für den Nutzer gespeicherten Referenzwert), sendet der Autorisierungsserver eine Nachricht an die Kontrolleinheit, dass der Nutzer als vertrauenswürdig anzusehen ist. Die Kontrolleinheit sendet daraufhin einen Steuerbefehl an einen Verriegelungsmechanismus 128 der Sicherungsanlage, der sich daraufhin öffnet und dem Nutzer Zugang zu der Sicherungsanlage gewährt. Der Verriegelungsmechanismus kann auch ein Modul eines Softwareprogramms sein, das dem Nutzer Zugriff auf bestimmte Daten und/oder Softwarefunktionen erlaubt.

Um zu gewährleisten, dass die elektronische Identifikation 106, die vertrauliche, persönliche Daten enthalten kann, nicht durch Unberechtigte ausgelesen werden kann, ist eine gegenseitige Authentifizierung des Identitätsdokuments 104 und der Kontrolleinheit 112 vor dem Auslesevorgang erforderlich. Falls auf dem ersten 116 und zweiten 115 Speicher der erste GBVA.1 und zweite GBVA.2 Vertrauensanker bereits gespeichert vorliegen, wenn der Nutzer sein Identitätsdokument in das Terminal 110 einführt und dadurch den Authentifizierungsprozess einleitet, und wenn diese Vertrauensanker zudem gültig sind, wird ein beschleunigtes Authentifizierungsverfahren ohne Rückgriff auf den Authentifizierungsserver 140 durchgeführt.

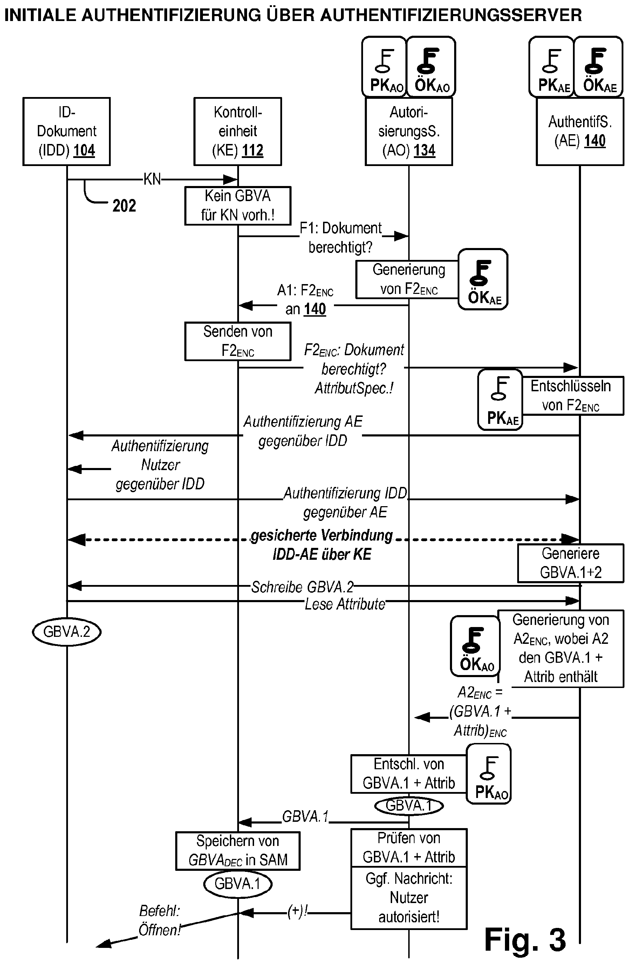

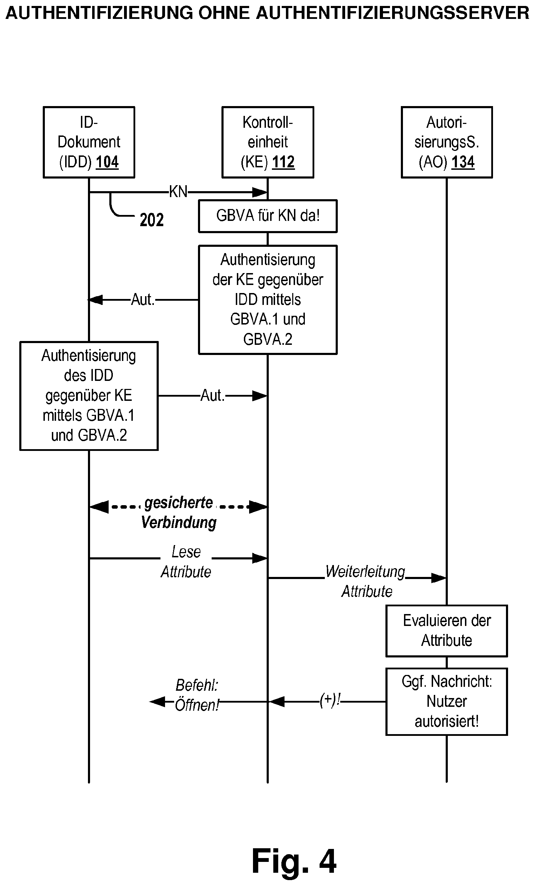

Dieses ist im Einzelnen in Figur 4 beispielhaft beschrieben. Falls zum Zeitpunkt des Empfangs der Erlaubnisanfrage in dem ersten und zweiten Speicher der erste und/oder zweite Vertrauensanker nicht gespeichert vorliegt oder einer der Vertrauensanker nicht mehr gültig ist, wird automatisch eine Erzeugung des ersten und zweiten Vertrauensankers durch den Authentifizierungsserver 140 eingeleitet und die erzeugten ersten und zweiten Vertrauensanker werden im ersten und zweiten Speicher gespeichert. Dort stehen sie dann für nachfolgende Authentifizierungsversuche dieses Nutzers bereit, ohne dass hierfür bei einem nachfolgenden Authentifizierungsversuch auf den Authentifizierungsserver zurückgegriffen werden muss. Dieses Verfahren ist im Einzelnen in Figur 3 beschrieben. Die Feststellung, ob ein Authentifizierungsverfahren gemäß Figur 3 oder gemäß Figur 4 durchzuführen ist, trifft die Kontrolleinheit voll automatisch in Abhängigkeit von der Verfügbarkeit und ggf. auch Gültigkeit des ersten und zweiten Vertrauensankers.

**Figur** 2 zeigt beispielhaft den Inhalt des ersten und zweiten Speichers bei auf asymmetrischer Kryptographie basierenden Vertrauensankern.

Der auf dem ersten Speichermedium 116 gespeicherte erste Vertrauensanker GBVA.1 umfasst ein erstes Zertifikat 192, welches von einer ersten Zertifizierungsstelle CA-I ausgestellt wurde und einen Verifikationsschlüssel 198 umfasst. Das Zertifikat 192 und Verifikationsschlüssel 198 erlauben es der Kontrolleinheit, die Authentizität eines ersten Signaturprüfschlüssels 180, der von dem Identitätsdokument an die Kontrolleinheit übermittelt wird, zu prüfen. Der erste Signaturprüfschlüssel kann zusammen mit einem vom korrespondierenden ersten Signaturschlüssel 184 signierten Datenwert ("Challenge") von dem Identitätsdokument an die Kontrolleinheit im Zuge eines Authentifizierungsversuchs des Identitätsdokuments gegenüber der Kontrolleinheit übermittelt werden.

Auf dem ersten Speicher 116 ist nach manchen Ausführungsformen auch ein privater zweiter Signaturschlüssel 190 und ein zugehöriger öffentlicher zweiter Signaturprüfschlüssel 188 gespeichert. Dieses Schlüsselpaar 188, 190 wurde von einer zweiten CA ("CA-II") ausgestellt. Der zweite Signaturprüfschlüssel 188 enthält eine von der CA-II ausgestellte Signatur 194. Der zweite Signaturschlüssel 190 und der zweite Signaturprüfschlüssel 188 dienen der Erzeugung einer signierten Challenge, oder der Signierung einer empfangenen Challenge, wobei die signierte Challenge, die zusammen mit dem zweiten Signaturprüfschlüssel 188 an das Identitätsdokument übermittelt werden kann, dem Nachweis der Identität und Vertrauenswürdigkeit der Kontrolleinheit gegenüber dem Identitätsdokument dient.

Der auf dem zweiten Speichermedium 115 gespeicherte zweite Vertrauensanker GBVA.2 umfasst ein zweites Zertifikat 186, welches von einer zweiten Zertifizierungsstelle CA-II ausgestellt wurde und einen Verifikationsschlüssel 196 umfasst. Das zweite Zertifikat 186 und der Verifikationsschlüssel 196 erlauben es dem Identitätsdokument, die Authentizität des zweiten Signaturprüfschlüssels 188 und damit die Vertrauenswürdigkeit der Kontrolleinheit 112 zu prüfen.

Die beiden CA-Zertifikate 186, 192 können selbst signierte Zertifikate sein. Vorzugsweise handelt es sich bei CA-I und CA-II um die gleiche Zertifizierungsstelle, wobei sowohl das zweite Zertifikat 186 als auch das erste Zertifikat 192 durch den Authentifizierungsserver innerhalb einer PKI erzeugt werden. Es ist jedoch auch möglich, dass CA-I und CA-II unterschiedliche Zertifizierungsstellen darstellen.

Falls eines der Zertifikate 186, 192 ablaufen sollte, wird gemäß mancher Ausführungsformen mit einem aktuellen, übergeordneten CA-Zertifikat 144 des Authentifizierungsservers ein Folge-Zertifikat signiert und, z.B. im Zuge eines gegenseitigen Authentifizierungsprozesses von Kontrolleinheit und Identitätsdokument von dem Authentifizierungsserver an den ersten und/oder zweiten Speicher zur Speicherung übertragen. Sollte eines der Zertifikate 186, 192 kompromittiert werden, bringt der Authentisierungsserver ein neues Zertifikat in das Identitätsdokument oder die Kontrolleinheit ein, das die Funktion des bisherigen kompromittierten Zertifikats übernimmt.
Der zweite Speicher umfasst ferner den privaten ersten Signaturschlüssel 184 und den zugehörigen öffentlichen ersten Signaturprüfschlüssel 180. Dieses Schlüsselpaar (180, 184) wurde von der ersten CA ("CA-I") ausgestellt. Der erste Signaturprüfschlüssel 180 enthält eine von der CA-I ausgestellte Signatur 182.

Nach Ausführungsformen wird eine Zertifikatskettenprüfung zur Authentifikation der Kontrolleinheit 112 gegenüber dem Dokument 104 durchgeführt. Beispielsweise kann der zweite öffentliche Signaturprüfschlüssel 188 Bestandteil eines im ersten Speicher 116 der Kontrolleinheit gespeicherten Zertifikats (insb. eines CV-Zertifikats), sein (nicht in Fig. 2 dargestellt). Dieses Zertifikat wird im Folgenden als Terminalzertifikat bezeichnet. Es beinhaltet neben dem zweiten öffentlichen Signaturprüfschlüssel 188 Metainformationen, die spezifizieren, auf welche Daten und Funktionen des Dokuments die Kontrolleinheit lesend, schreibend oder aufrufend zugreifen kann (z.B. Aufruf einer Signierfunktion des Dokuments 104). Die Metainformationen beinhalten außerdem eine ID der Kontrolleinheit, für welche das Terminalzertifikat ausgestellt wurde, und eine ID der das Terminalzertifikat ausstellenden Instanz. Die das Terminalzertifikat ausstellenden Instanz wird auch als "Certificate Authority" bezeichnet, die ID dieser Instanz kann als CAR ("certificate authority reference") ausgebildet sein. Beispielsweise kann die CAR des Terminalzertifikats auf die CA-II verweisen. Der zweite öffentliche Signaturprüfschlüssel wird vorzugsweise als Bestandteil von und zusammen mit dem Terminalzertifikat von der Kontrolleinheit an das Dokument 104 übertragen. Das Dokument wertet die in den Metadaten des Terminalzertifikats spezifizierte ID der Kontrolleinheit aus um festzustellen, ob für diese Kontrolleinheit ein entsprechendes zweites Zertifikat 186 in dem zweiten Speicher 115 gespeichert ist. Somit kann das zu der Kontrolleinheit korrespondierende zweite Zertifikat 186 ermittelt werden. Außerdem wertet das Dokument die CAR des übermittelten Terminalzertifikats aus und vergleicht diese mit einer in dem identifizierten zweiten Zertifikat 186 hinterlegten ID einer zertifikatsausstellenden Instanz, wobei diese ID als "certificate holder reference" ausgebildet sein kann. Im Falle der Identität der beiden verglichenen IDs steht fest, dass sowohl das zweite Zertifikat 186 als auch das Terminalzertifikat von der gleichen CA, hier CA-II, ausgestellt wurden. Die Zertifikatskettenprüfung kann z.B. nur zwei Elemente umfassen, nämlich das Terminalzertifikat, das den zweiten öffentlichen Signaturprüfschlüssel enthält, und das zweite Zertifikat 186.

Alternativ dazu kann auch eine Zertifikatskettenprüfung mit mehr als zwei Elementen erfolgen. Beispielsweise kann das Terminalzertifikat Bestandteil eines Zwischenzertifikats sein (nicht in Fig. 2 dargestellt), welches für eine andere CA, z.B. CA-III ausgestellt wurde. Das Zwischenzertifikat kann als Kreuzzertifikat ausgebildet sein, wobei CA-III eine untergeordnete Zertifizierungsstelle von CA-II sein kann und wobei das Zwischenzertifikat von beiden Zertifizierungsstellen CA-II, CA-III prüfbar ist. Die Zertifizierungsstelle CA-II kann somit die Zertifikatsausstellung an die untergeordneten Instanz CA-III delegieren. Dies kann die Flexibilität des Prozesses der Zertifikatsausstellung erhöhen und die CA-II entlasten. In diesem Fall würde die in den Metadaten des Terminalzertifikats enthaltene ID des Zertifikatsausstellers (z.B. die CAR- "certificate authority reference") auf die CA-III anstatt der CA-II verweisen. Das Dokument würde den öffentlichen Schlüssel des Zwischenzertifikats nutzen, um die Signatur 194 des zweiten öffentlichen Signaturprüfschlüssels 188 zu prüfen, und würde den Verifikationsschlüssel 196 nutzen um wiederum den öffentlichen Schlüssel des Zwischenzertifikats zu prüfen.

Nach manchen Ausführungsformen wird eine Zertifikatskettenprüfung zur Authentifikation des Dokuments 104 gegenüber der Kontrolleinheit 112 in analoger Weise durchgeführt. Beispielsweise kann der erste öffentliche Signaturprüfschlüssel 180 Bestandteil eines im zweiten Speicher 115 des Dokuments gespeicherten Datenobjekts (insb. eines CMS-Objekts- "cryptographic message syntax") sein (nicht in Fig. 2 dargestellt). Dieses Datenobjekt wird im Folgenden als "Dokumentzertifikat" bezeichnet. Es beinhaltet vorzugsweise folgende Daten: den ersten öffentlichen Signaturprüfschlüssel 180; eine Referenz zum Aussteller des Datenobjekt (z.B. CA-I) und optional noch Domänenparameter die von dem Dokument verwendet werden. Ferner enthält das Datenobjekt eine Signatur über die vorgenannten Daten, die von dem Aussteller des Datenobjekts (z.B. CA-I) erzeugt wird. Das Datenobjekt enthält die besagten Daten, die Signatur der Daten und eine ID des Dokuments, für welches das "Dokumentzertifikat" ausgestellt wurde, und eine ID der das Dokumentenzertifikat ausstellenden Instanz. Die das Dokumentzertifikat ausstellenden Instanz wird auch als "Certificate Authority" bezeichnet, die ID dieser Instanz kann als CAR ausgebildet sein und beispielsweise auf die CA-I verweisen. Der erste öffentliche Signaturprüfschlüssel wird vorzugsweise als Bestandteil von und zusammen mit dem "Dokumentzertifikat" von dem Dokument an die Kontrolleinheit übertragen. Die Kontrolleinheit wertet die in dem Dokumentzertifikat spezifizierte Dokument-ID aus um festzustellen, ob für dieses Dokument ein entsprechendes erstes Zertifikat 192 in dem ersten Speicher 116 gespeichert ist. Somit kann das zu dem Dokument korrespondierende erste Zertifikat 192 ermittelt werden. Außerdem wertet Die Kontrolleinheit die CAR des übermittelten Dokumentzertifikats aus und vergleicht diese mit einer in dem identifizierten ersten Zertifikat 192 hinterlegten ID einer zertifikatsausstellenden Instanz, wobei diese ID als "certificate holder reference" ausgebildet sein kann. Im Falle der Identität der beiden verglichenen IDs steht fest, dass sowohl das erste Zertifikat 192 als auch das Dokumentzertifikat von der gleichen CA, hier CA-I, ausgestellt wurden. Das erste Zertifikat 192 kann z.B. als X.509 Zertifikat ausgebildet sein.

Alternativ dazu kann auch eine Zertifikatskettenprüfung mit mehr als zwei Elementen erfolgen. Beispielsweise kann das "Dokumentzertifikat", also das Datenobjekt, weitere Daten in Form eines weiteren Zwischenzertifikats enthalten (nicht in Fig. 2 dargestellt), welches für eine andere CA, z.B. CA-IV ausgestellt wurde. Das Zwischenzertifikat kann als Kreuzzertifikat ausgebildet sein, wobei CA-IV eine untergeordnete Zertifizierungsstelle von CA-I sein kann und wobei das weitere Zwischenzertifikat von beiden Zertifizierungsstellen CA-I, CA-IV prüfbar ist. Die Zertifizierungsstelle CA-I kann somit die Zertifikatsausstellung an die untergeordneten Instanz CA-IV delegieren. Dies kann die Flexibilität des Prozesses der Zertifikatsausstellung erhöhen und die CA-I entlasten. In diesem Fall würde die in dem Dokumentzertifikat enthaltene ID des Zertifikatsausstellers (z.B. die CAR- "certificate authority reference") auf die CA-IV anstatt der CA-I verweisen. Die Kontrolleinheit würde den öffentlichen Schlüssel des weiteren Zwischenzertifikats nutzen, um die Signatur 182 des ersten öffentlichen Signaturprüfschlüssels 180 zu prüfen, und würde den Verifikationsschlüssel 192 nutzen um wiederum den öffentlichen Schlüssel des weiteren Zwischenzertifikats zu prüfen. Vorzugsweise wird das weitere Zwischenzertifikat nicht zusammen mit dem ersten öffentlichen Signaturprüfschlüssel 180 an die Kontrolleinheit übertragen, sondern ist bereits in der Kontrolleinheit vor Durchführung des Verfahrens gespeichert. Dies kann vorteilhaft sein, da das weitere Zwischenzertifikat, insbesondere wenn es als X.509 Zertifikat ausgebildet ist und aus einer Vielzahl weiterer Zwischenzertifikate besteht, die per Zertifikatskettenprüfung prüfbar sind, da solche Zertifikate sehr groß werden können und eine Übertragung solcher Zertifikate zur Laufzeit vermieden und das Verfahren dadurch beschleunigt wird.

Figur 3 zeigt einen Ablauf einer initialen Authentifizierung eines Nutzers 102 unter Rückgriff auf einen Authentifizierungsserver 140. Das Verfahren beginnt damit, dass der Nutzer sein Identitätsdokument 104, zum Beispiel eine Chipkarte, in das Feld eines Terminals 110 einbringt. In einem nächsten Schritt wird nun festgestellt, ob bereits gültige erste und zweite Vertrauensanker für das spezifische Paar aus Kontrolleinheit 112 und Identitätsdokument 104 vorliegen.

Die Feststellung kann zum Beispiel dadurch geschehen, wie in Fig. 3 dargestellt, dass das Terminal eine Kennung KN, die für den Nutzer, das Identitätsdokument oder eine Nutzergruppe spezifisch ist, von dem Identitätsdokument 104 ausliest und die Kennung an die Kontrolleinheit 112 überträgt. Die Kontrolleinheit führt einen Lesezugriff auf den ersten Speicher 116 durch um festzustellen, ob dieser einen ersten Vertrauensanker GBVA.1 verknüpft mit der Kennung KN gespeichert hat. Falls dies nicht der Fall ist, stellt die Kontrolleinheit automatisch fest, dass die zur gegenseitigen Authentifizierung von Identitätsdokument und Kontrolleinheit erforderlichen ersten und zweiten Vertrauensanker nicht verfügbar sind. Alternativ könnte es auch sein, dass der erste Vertrauensanker zwar gespeichert vorliegt, aber eine von dem Kontrollelement und/oder dem Identitätsdokument durchgeführte Gültigkeitsprüfung ergibt, dass der erste oder zweite Vertrauensanker nicht mehr gültig ist und dass somit auch das Paar aus erstem und zweitem Vertrauensanker nicht mehr gültig ist. Das Nichtvorliegen des ersten Vertrauensankers auf dem ersten Speicher bzw. dessen Ungültigkeit impliziert in manchen Implementierungsvarianten automatisch die Nichtverfügbarkeit oder Ungültigkeit des korrespondierenden zweiten Vertrauensankers.

Alternativ dazu kann die Feststellung dadurch geschehen, dass der Kontrolleinheit eine eindeutige Kennung zugeordnet ist und in dem zweiten Speicher ein zweiter Vertrauensanker GBVA.2 in Verknüpfung mit der Kennung der Kontrolleinheit gespeichert ist. Das Terminal kann beispielsweise, nachdem das Identitätsdokument in seinen Empfangsbereich eingeführt wurde, eine Anfrage an die Kontrolleinheit senden und in Antwort darauf eine Kennung der Kontrolleinheit von der Kontrolleinheit empfangen und an das Identitätsdokument weiterleiten. Das Identitätsdokument stellt fest, ob in dem zweiten Speicher ein zweiter Vertrauensanker in Verknüpfung mit der Kennung der Kontrolleinheit gespeichert ist. Gegebenenfalls kann außerdem eine Gültigkeitsprüfung des zweiten Vertrauensankers wie oben beschrieben durch das Identitätsdokument durchgeführt werden. Falls kein zweiter Vertrauensanker oder kein gültiger zweiter Vertrauensanker GBVA.2 vorliegt, wird eine Nachricht von dem Identitätsdokument an die Kontrolleinheit gesendet. Die Nachricht beinhaltet, dass für dieses spezifische Paar aus Identitätsdokument und Kontrolleinheit kein (gültiges) Paar aus erstem und zweiten Vertrauensanker vorliegt, das eine gegenseitige Authentifikation erlaubt. Das Nichtvorliegen des zweiten Vertrauensankers auf dem zweiten Speicher bzw. dessen Ungültigkeit kann in manchen Implementierungsvarianten automatisch die Nichtverfügbarkeit bzw. Ungültigkeit des korrespondierenden ersten Vertrauensankers implizieren.

Nachdem also die Kontrolleinheit über eines der oben beschriebenen Verfahren festgestellt hat, dass kein (gültiges) Paar aus erstem und zweitem Vertrauensanker für das Identitätsdokument 104 und die Kontrolleinheit 112 vorliegt, sendet die Kontrolleinheit 112 eine Anfrage F1 an den Autorisierungsserver 134, ob der Nutzer des Identitätsdokuments berechtigt ist, auf die Sicherungsanlage zuzugreifen. Da sich Kontrolleinheit und Identitätsdokument ohne die ersten und zweiten Vertrauensanker nicht gegenseitig authentifizieren konnten, konnte die Kontrolleinheit die Identifikation nicht auslesen und die Anfrage F1 enthält nicht die in dem Identitätsdokument gespeicherte elektronische Identifikation 106 des Nutzers. Der Autorisierungsserver 134 leitet die Anfrage F1 in modifizierter Form F2 an einen Authentifizierungsserver 140 weiter. Die Modifikation kann beispielsweise darin bestehen, dass der Anfrage eine Liste von Attributen, eine so genannte Attribut-Spezifizierung, beigefügt wird, welche diejenigen Attribute des Nutzers an gibt, die der Autorisierungsserver bei der Authentifizierung benötigt, um diese mit für den betreffenden Nutzer gespeicherten Referenzwerten zu vergleichen. Dies dient dem Datenschutz, da nur diejenigen Attributwerte aus dem Identitätsdokument ausgelesen und zur Authentifizierung des Nutzers gegenüber der Sicherungsanlagen verwendet werden, die vom Autorisierungsserver auch wirklich geprüft werden. Anfrage F2 wird durch den Autorisierungsserver mit einem öffentlichen Schlüssel ÖK_{AE} des Authentifizierungsservers 140 verschlüsselt, um eine verschlüsselte Anfrage F2_{ENC} zu generieren. Die Anfrage F2_{ENc} kann zum Beispiel als SAML-Request spezifiziert sein.

Der Autorisierungsserver sendet die Anfrage F2_{ENC} an den Authentifizierungsserver, wo die Anfrage F2_{ENC} durch einen privaten Schlüssel PK_{AE} des Authentifizierungsservers entschlüsselt wird. PK_{AE} und ÖK_{AE} bilden zusammen ein asymmetrisches kryptographisches Schlüsselpaar. Der Authentifizierungsserver und der Nutzer authentifizieren sich gegenüber dem Identitätsdokument und das Identitätsdokument authentifiziert sich gegenüber dem Authentifizierungsserver 140. Für die gegenseitige Authentifizierung von Identitätsdokument und Authentifizierungsserver können verschiedene, im Stand der Technik zur gegenseitigen Authentifizierung von eID-Provider-Computersystemen und Sicherheitsdokumenten bekannte Protokolle wie z.B. das in Richtlinie TR-03110 beschriebene PACE Protokoll.

Die Authentifizierung des Nutzers gegenüber dem Identitätsdokument kann beispielsweise durch die Eingabe einer PIN an der Kontrolleinheit erfolgen, wobei die Kontrolleinheit die PIN an das Identitätsdokument übermittelt. Alternativ dazu kann die eingegebene PIN an den Authentifizierungsserver gesendet werden, der die PIN an das Identitätsdokument weiterleitet um dadurch eine Authentifikation des Nutzers gegenüber dem Identitätsdokument zu bewirken.

Nach erfolgreicher gegenseitiger Authentifizierung von Authentifizierungsserver und Identitätsdokument und nach erfolgreicher Authentifizierung des Nutzers gegenüber dem Identitätsdokument wird eine gesicherte Verbindung zwischen dem Identitätsdokument und dem Authentifizierungsserver über die Kontrolleinheit 112 aufgebaut. Die gesicherte Verbindung besteht vorzugsweise aus einer Ende-zu-Ende Verschlüsselung. Der Authentifizierungsserver generiert nach der Entschlüsselung der Anfrage F2_{ENC}, vorzugsweise nach Aufbau der gesicherten Verbindung, den ersten GBVA.1 und zweiten GBVA.2 Vertrauensanker. Der zweite Vertrauensanker wird direkt über die gesicherte Verbindung von dem Authentifizierungsserver auf den zweiten Speicher 115 des Identitätsdokuments 104 geschrieben.
Außerdem kann die elektronische Identifikation 106 des Nutzers 102 durch den Authentifizierungsserver über die sichere Verbindung von dem Identitätsdokument ausgelesen werden. Falls F2 eine Attributspezifikation des Autorisierungsservers 134 enthalten haben sollte, werden genau diejenigen Attributwerte aus dem Identitätsdokument ausgelesen, die in der Attributspezifikation aufgelistet sind. Da sowohl das Schreiben des zweiten Vertrauensankers als auch das Lesen der elektronische Identifikation 106 über die gesicherte Verbindung erfolgt, sind die übertragenen Daten vor dem Zugriff unberechtigter Dritter geschützt. Der erste Vertrauensanker GBVA.1 wird zusammen mit der ausgelesenen elektronischen Identifikation 106 vom Authentifizierungsserver verwendet um eine Antwort A2 zu generieren. Die Antwort A2 wird mit einem öffentlichen Schlüssel des Autorisierungsservers ÖK_{AO} durch den Authentifizierungsserver verschlüsselt und in verschlüsselter Form A2_{ENC} an den Autorisierungsserver übertragen. Die Antwort A2_{ENC} kann zum Beispiel als SAML-Response spezifiziert sein.

Der Autorisierungsserver entschlüsselt mit seinem privaten Schlüssel PK_{AO} die Antwort A2_{ENC}. Der öffentliche ÖK_{AO} und private PK_{AO} Schlüssel des Autorisierungsservers bilden zusammen ein kryptographisches asymmetrisches Schlüsselpaar. Der Autorisierungsserver überträgt den ersten Vertrauensanker GBVA.1 an die Kontrolleinheit, wo der erste Vertrauensanker in dem ersten Speichermedium, zum Beispiel in Verbindung mit einer Kennung KN des Identitätsdokuments, gespeichert wird. Die in der Antwort A2_{ENC} enthaltene, entschlüsselte elektronische Identifikation wird von dem Autorisierungsserver zur Authentifizierung des Nutzers verwendet. Die Netzwerkverbindung zwischen Autorisierungsserver 134 und der Kontrolleinheit kann aus einer geschützten Netzwerkverbindung bestehen, zum Beispiel einem Intranet eines Sicherheitssystems, das die Sicherungsanlage und in manchen Ausführungsvarianten auch dem Autorisierungsserver enthält. Die Sicherungsanlage kann auch ein oder mehrere Terminals und/oder ein oder mehrere Identitätsdokumente umfassen.
Alternativ kann die Antwort A2_{ENC} auch nur den ersten Vertrauensanker beinhalten. Nach Übertragung des generierten ersten und zweiten Vertrauensankers authentifizieren sich Kontrolleinheit und Identitätsdokument gegenseitig, die Kontrolleinheit liest die elektronische Identifikation von dem Identitätsdokument aus und überträgt sie an den Autorisierungsserver.
Schließlich vergleicht der Autorisierungsserver die von dem Authentifizierungsserver oder von der Kontrolleinheit empfangene elektronische Identifikation mit entsprechenden Referenzwerten 150. Bei Übereinstimmung sendet der Autorisierungsserver eine Nachricht an die Kontrolleinheit, die beinhaltet, dass das Identitätsdokument 104 einem Nutzer 102 zugeordnet ist, der als vertrauenswürdig gilt. Auf Erhalt dieser Nachricht sendet die Kontrolleinheit einen Steuerbefehl an die Schließanlage 128, der die Öffnung der Schließanlage veranlasst und dem Nutzer 102 Zugriff auf geschützte Objekte der Sicherungsanlage gewährt.

**Figur 4** ist eine schematische Darstellung des Ablaufs einer erneuten Authentifizierung eines Nutzers gegenüber einer Sicherungsanlage ohne Rückgriff auf den Authentifizierungsserver.

Auch dieses Verfahren beginnt damit, dass der Nutzer 102 sein Identitätsdokument 104 in eine kontaktbehaftete oder kontaktlose Datenübertragungsschnittstelle eines Terminals 110 einführt.

Im nächsten Schritt wird, wie bereits für Fig. 3 beschrieben, durch die Kontrolleinheit und/oder das Identitätsdokument überprüft, ob für das Paar aus dem Identitätsdokument des Nutzers, der sich authentifizieren möchte, und der Kontrolleinheit ein entsprechendes Paar an (gültiger) erster und zweiter Vertrauensanker existiert und auf dem ersten 116 bzw. zweiten 115 Speicher gespeichert ist. In diesem Fall werden erster und zweiter Vertrauensanker unmittelbar und ohne Rückgriff auf den Authentifizierungsserver von der Kontrolleinheit und dem Identitätsdokument verwendet, um sich gegenseitig unter Verwendung von zu den Vertrauensankern jeweils korrespondierender Authentifizierungsdaten zu authentifizieren. Die Kontrolleinheit liest, nach erfolgreicher gegenseitiger Authentifizierung, die elektronische Identifikation 106 direkt aus einem geschützten Speicher des Identitätsdokuments aus und leitet die ausgelesene Identifikation an den Autorisierungsserver 134 weiter. Die Verbindung zwischen der Kontrolleinheit und dem Autorisierungsserver ist in der Regel besonders geschützt, zum Beispiel durch SSH-Verschlüsselung, und es besteht ein implizites, d.h. bereits seit Herstellung und/oder Installation der Sicherungsanlage bestehendes Vertrauensverhältnis zwischen der Kontrolleinheit und dem Autorisierungsserver.

Der Autorisierungsserver vergleicht die von der Kontrolleinheit 112 ausgelesene elektronische Identifikation 106, zum Beispiel eine Liste mehrere Attributwerte des Nutzers, mit den bei der Registrierung des Nutzers 102 bei dem Autorisierungsserver gespeicherten Referenzwerten 150 um dem Nutzer in Abhängigkeit vom Ergebnis des Vergleiches Zugriff auf geschützte Objekte der Sicherungsanlage zu verschaffen oder zu verwehren. Falls der Nutzer als berechtigt angesehen wird, sendet der Autorisierungsserver eine Nachricht an die Kontrolleinheit, welche die Kontrolleinheit veranlasst, ein Steuersignal an einen Verriegelungsmechanismus oder ein funktional vergleichbares Modul zu senden, um dem Nutzer Zutritt zu gewähren.

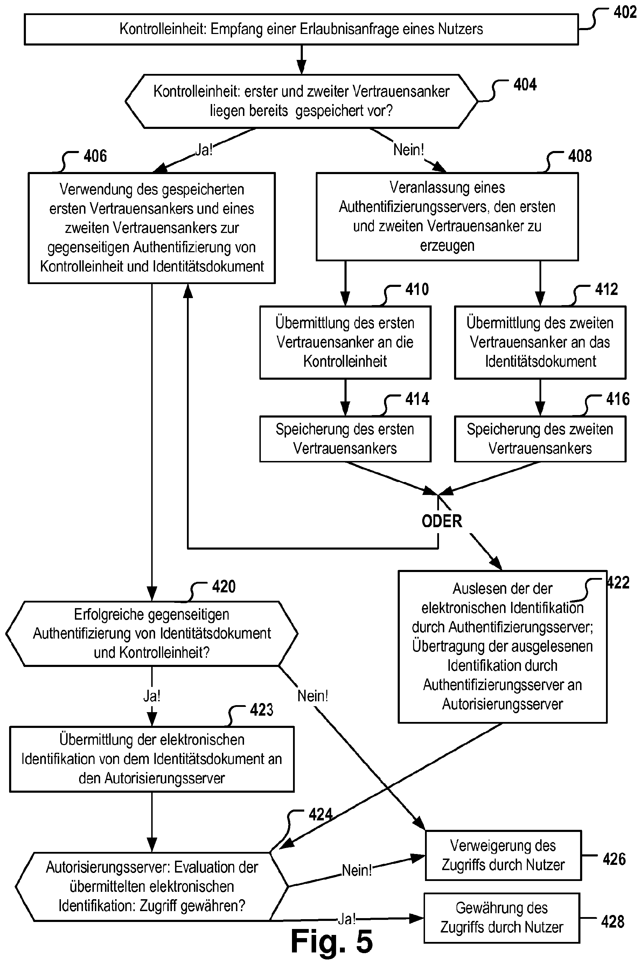

**Figur 5** zeigt ein Flussdiagramm eines Authentifizierungsverfahrens, welches in Abhängigkeit von der Verfügbarkeit eines ersten GBVA.1 und zweiten GBVA.2 Vertrauensankers eine Interaktion von Kontrolleinheit und Authentifizierungsserver beinhaltet.

In Schritt 402 empfängt eine Kontrolleinheit eine Erlaubnisanfrage zum Zugriff auf geschützte Objekte einer Sicherungsanlage 130 durch einen Nutzer.

In Schritt 404 prüft die Kontrolleinheit, ob der erste und zweite Vertrauensanker bereits gespeichert und damit sofort verfügbar vorliegen. Dies kann dadurch geschehen, dass die Kontrolleinheit prüft, ob in einem ersten Speicher 116 der Kontrolleinheit ein erster Vertrauensanker GBVA.1 bereits beim Zeitpunkt des Empfangs der Erlaubnisanfrage gespeichert vorliegt. Falls dies nicht der Fall ist, geht die Kontrolleinheit automatisch davon aus, dass auch ein entsprechender zweiter Vertrauensanker GBVA.2 nicht auf einem zweiten Speicher 115 des Identitätsdokuments gespeichert vorliegt. In manchen Ausführungsformen umfasst der Schritt 404 auch eine Prüfung auf Gültigkeit des ersten Vertrauensankers. Falls der erste Vertrauensanker nicht mehr gültig ist, wird das Verfahren so fortgesetzt, als sei der erste Vertrauensanker gar nicht vorhanden.
Alternativ kann Schritt 404 dadurch geschehen, dass die Kontrolleinheit eine Nachricht an das Identitätsdokument sendet, welche das Identitätsdokument veranlasst, zu überprüfen, ob in dem zweiten Speicher 115 des Identitätsdokuments ein zweiter Vertrauensanker GBVA.2 verknüpft mit einer Kennung der Kontrolleinheit gespeichert ist wie bereits beschrieben. Auch hier wird also die Überprüfung des Vorhandenseins des ersten und zweiten Vertrauensankers durch die Kontrolleinheit initiiert. Das Identitätsdokument kann im Zuge von Schritt 404 eine Prüfung eines vorhandenen zweiten Vertrauensankers auf Gültigkeit vornehmen, und falls der zweite Vertrauensanker ungültig ist, der Kontrolleinheit eine entsprechende Nachricht senden, dass kein (gültiger) zweiter Vertrauensanker für die gegenseitige Authentifikation von Kontrolleinheit und Identitätsdokument vorhanden ist.

Für den Fall, dass ein (gültiges) Paar aus einem ersten und zweiten Vertrauensanker auf dem ersten bzw. zweiten Speicher gespeichert ist, werden der erste und zweite Vertrauensanker in Schritt 406 zur gegenseitigen Authentifizierung von Identitätsdokument und Kontrolleinheit verwendet. Wird in Schritt 420 festgestellt, dass eine erfolgreiche gegenseitige Authentifikation mittels der bereits gespeicherten ersten und zweiten Vertrauensanker erfolgte, liest in Schritt 423 die authentifizierte Kontrolleinheit die elektronische Identifikation aus dem Identitätsdokument aus und übermittelt diese an den Autorisierungsserver.

Andernfalls sendet die Kontrolleinheit in Schritt 408 eine Nachricht an einen Authentifizierungsserver, die den Authentifizierungsserver dazu veranlasst, den ersten und zweiten Vertrauensanker zu erzeugen. Die Nachricht kann direkt oder indirekt, zum Beispiel über einen Autorisierungsserver, an den Authentifizierungsserver gesendet werden. In Schritt 410 übermittelt der Authentifizierungsserver den generierten ersten Vertrauensanker an die Kontrolleinheit und die Kontrolleinheit gespeichert in Schritt 414 den ersten Vertrauensanker GBVA.1 im ersten Speicher 116. Außerdem übermittelt der Authentifizierungsserver 140 den zweiten Vertrauensanker GBVA.2 in Schritt 412 an das Identitätsdokument 104, zum Beispiel über eine sichere Ende-zu-Ende-verschlüsselte Verbindung. In Schritt 416 speichert das Identitätsdokument den zweiten Vertrauensanker zweiten Speicher 115.

In Schritt 422 liest nach gegenseitiger Authentifizierung von Authentifizierungsserver und Identitätsdokument der Authentifizierungsserver 140 die elektronische Identifikation vom Identitätsdokument 104 aus und übermittelt diese an den Autorisierungsserver. Schritt 422 kann auch zusammen mit Schritt 412 ausgeführt werden, so dass die Identifikation zusammen mit dem ersten Vertrauensanker an die Kontrolleinheit gesendet werden, die dann die Identifikation an den Autorisierungsserver weiterleitet. Anstatt Schritt 422 durchzuführen, kann alternativ auch Schritt 406 durchgeführt werden.

Nachdem also die elektronische Identifikation 106 des Nutzers 102 an den Autorisierungsserver 134 gelangt ist, findet in Schritt 424 eine Evaluation der übermittelten elektronischen Identifikation durch den Autorisierungsserver 134 statt. Zum Beispiel werden Attributwerte, die in der elektronischen Identifikation enthalten sind, mit Referenzwerten 150 verglichen. Ergibt die Evaluation, dass der Nutzer, dem das Identitätsdokument zugeordnet ist, zum Zugriff berechtigt ist, zum Beispiel weil die Referenzwerte 150 des Nutzer mit den übermittelten Attributwerten übereinstimmen, veranlasst der Autorisierungsserver in Schritt 428 eine Zugriffsgewährung an den Nutzer auf geschützte Objekte der Sicherungsanlage. Andernfalls verweigert der Autorisierungsserver in Schritt 426 dem Nutzer 102 den Zugriff.

### Bezugszeichenliste

- 102: Nutzer
- 104: Identitätsdokument
- 106: elektronische Identifikation
- 108: Uhr
- 110: Terminal
- 112: Kontrolleinheit
- 114: Prozessor
- 115: zweiter Speicher
- 116: erster Speicher
- 122: kryptographisches Modul
- 124: Terminal
- 126: Terminal
- 128: Verriegelungsanlage
- 130: Sicherungsanlage
- 132: Netzwerk
- 134: Autorisierungsserver
- 136: Prozessor
- 138: Speichermedium
- 140: Authentifizierungsserver
- 142: Speichermedium
- 144: Zertifikat
- 150: Referenzwerte
- 180: öffentlicher Signaturprüfschlüssel des Identitätsdokuments
- 182: Signatur einer ersten CA
- 184: privater Signaturschlüssel Identitätsdokument
- 186: Zertifikat einer zweiten CA
- 188: öffentlicher Signaturprüfschlüssel der Kontrolleinheit
- 190: privater Signaturschlüssel Kontrolleinheit
- 192: Zertifikat der CA des Identitätsdokuments
- 194: Signatur der zweiten CA
- 196: Verifikationsschlüssel
- 198: Verifikationsschlüssel
- 202: Erlaubnisanfrage
- Z1: Zähler der Kontrolleinheit
- Z2: Zähler des Identitätsdokuments
- GBVA.1: erster Vertrauensanker
- GBVA. 2: zweiter Vertrauensanker
- VAZ: aktuelle vertrauenswürdige Zeit
- PK_{IDD}: privater Schlüssel Identitätsdokument
- ÖK_{IDD}: öffentlicher Schlüssel Identitätsdokument
- PK_{KE}: privater Schlüssel Kontrolleinheit
- ÖK_{KE}: öffentlicher Schlüssel Kontrolleinheit
- PK_{AO}: privater Schlüssel Autorisierungsserver
- ÖK_{AO}: öffentlicher Schlüssel Autorisierungsserver
- PK_{AE}: privater Schlüssel Authentifizierungsserver
- ÖK_{AE}: öffentlicher Schlüssel Authentifizierungsserver
- 402-428: Schritte

## Patentansprüche

1. Computerimplementiertes Verfahren zur Kontrolle des Zugriffs eines Nutzers (102) auf eine Sicherungsanlage (130), wobei dem Nutzer ein elektronisch auslesbares Identitätsdokument (104) beinhaltend eine elektronische Identifikation (106) des Nutzers zugeordnet ist, wobei die Sicherungsanlage eine Kontrolleinheit (112) umfasst, mit:
- Empfang (402) einer Erlaubnisanfrage (202) zum Zugriff des Nutzers auf die Sicherungsanlage, wobei die Erlaubnisanfrage durch die Kontrolleinheit empfangen wird;
- Auf Empfang der Erlaubnisanfrage, Prüfung (404), durch die Kontrolleinheit, ob ein erster Vertrauensanker (GBVA.1) in einem geschützten ersten Speicher (116) der Kontrolleinheit gespeichert vorliegt, und ob ein zweiter Vertrauensanker (GBVA.2) in einem geschützten zweiten Speicher (115) des Identitätsdokuments gespeichert vorliegt;
- Falls bei Empfang der Erlaubnisanfrage der erste und der zweite Vertrauensanker gespeichert vorliegen, Verwendung (406) des gespeicherten ersten Vertrauensankers und des zweiten Vertrauensankers (GBVA.2), zur gegenseitigen Authentifizierung von Kontrolleinheit und Identitätsdokument;
- Im Falle (420) der erfolgreichen gegenseitigen Authentifizierung des Identitätsdokuments und der Kontrolleinheit (112), Übermittlung (423) der in dem Identitätsdokument gespeicherten elektronischen Identifikation (106) des Nutzers durch die Kontrolleinheit an einen Autorisierungsserver (134);
- Falls der erste Vertrauensanker nicht in dem ersten Speicher gespeichert vorliegt und/oder der zweite Vertrauensanker nicht in dem zweiten Speicher gespeichert vorliegt, Veranlassung (408) eines Authentifizierungsservers (140) durch die Kontrolleinheit, den ersten Vertrauensanker zu erzeugen und an die Kontrolleinheit zu übermitteln (410) und den zweiten Vertrauensanker zu erzeugen und an das Identitätsdokument zu übermitteln (412); Speicherung (414) des übermittelten ersten Vertrauensankers durch die Kontrolleinheit in dem ersten Speicher und Speicherung (416) des übermittelten zweiten Vertrauensankers durch das Identitätsdokument in dem zweiten Speicher; und Übermittlung (422) der in dem Identitätsdokument gespeicherten elektronischen Identifikation (106) des Nutzers an den Autorisierungsserver (134), wobei die Übermittlung (422) durch den Authentifizierungsserver bewirkt oder ermöglicht wird;
- Gewährung (428) oder Verweigerung (426) des Zugriffs des Nutzers auf die Sicherungsanlage durch den Autorisierungsserver in Abhängigkeit (424) von der übermittelten (422, 423) elektronischen Identifikation,
- wobei die Prüfung, Erzeugung und Übermittlung der ersten und zweiten Vertrauensanker vollautomatisch und ohne ein Warten auf eine Nutzereingabe erfolgt.

2. Computerimplementiertes Verfahren nach einem der vorigen Ansprüche, wobei der erste und zweite Vertrauensanker eine Gültigkeitsbeschränkung aufweisen, wobei die Prüfung (404) durch die Kontrolleinheit, ob der erste und/oder zweite Vertrauensanker gespeichert vorliegen, eine Prüfung des ersten und/oder zweiten Vertrauensankers auf deren jeweilige Gültigkeit umfasst, wobei ein ungültiger erster Vertrauensanker von der Kontrolleinheit bei der Prüfung (404) als ein nicht gespeichert vorliegender erster Vertrauensanker behandelt wird und wobei ein ungültiger zweiter Vertrauensanker von dem Identitätsdokument bei der Prüfung (404) als ein nicht gespeichert vorliegender zweiter Vertrauensanker behandelt wird, wobei die Prüfung des ersten Vertrauensankers auf dessen Gültigkeit durch die Kontrolleinheit umfasst:
- nach jeder erfolgreichen gegenseitigen Authentifizierung von Kontrolleinheit und Identitätsdokument mittels des ersten und zweiten Vertrauensankers, Erhöhung eines Zählers (Z1), der in der Kontrolleinheit gespeichert ist, wobei der erste Vertrauensanker als ungültig gilt, falls der Zähler (Z1) einen Maximalwert erreicht hat.

3. Computerimplementiertes Verfahren nach einem der vorigen Ansprüche, umfassend:
- Erzeugung des ersten und/oder zweiten Vertrauensankers auf Veranlassung (408) der Kontrolleinheit, wobei die Erzeugung durch den Authentifizierungsserver alleine oder durch den Authentifizierungsserver in Zusammenarbeit mit dem Identitätsdokument durchgeführt wird;
- wobei die Übermittlung (410) des ersten Vertrauensankers an die Kontrolleinheit und die Übermittlung (412) des zweiten Vertrauensankers an das Identitätsdokument jeweils in geschützter Form erfolgt.

4. Computerimplementiertes Verfahren nach einem der vorigen Ansprüche, wobei:
a) der erste (GBVA.1) und zweite (GBVA.2) Vertrauensanker ein symmetrisches kryptographisches Schlüsselpaar bilden; oder
b1) der erste (GBVA.1) Vertrauensanker ein erstes Zertifikat (192) umfasst, wobei das erste Zertifikat (192) eine Prüfung der Authentizität eines öffentlichen ersten Signaturprüfschlüssels (180), der von dem Identitätsdokument bereitgestellt wird, erlaubt, wobei dem öffentlichen ersten Signaturprüfschlüssel ein privater erster Signaturschlüssel (184) zugeordnet ist; und/oder
b2) der zweite (GBVA.2) Vertrauensanker ein zweites Zertifikat (186) umfasst, wobei das zweite Zertifikat (186) eine Prüfung der Authentizität eines öffentlichen zweiten Signaturprüfschlüssels (188), der von der Kontrolleinheit bereitgestellt wird, erlaubt, wobei dem öffentlichen zweiten Signaturprüfschlüssel ein privater zweiter Signaturschlüssel (190) zugeordnet ist.

5. Computerimplementiertes Verfahren nach Anspruch 4,
wobei die gegenseitige Authentifizierung von Kontrolleinheit und Identitätsdokument nach a) jeweils umfasst:
- Übermittlung einer Challenge von einem Sender an einen Empfänger;
- Signierung der Challenge mit dem im Speicher (116, 115) des Empfängers gespeicherten symmetrischen kryptographischen Schlüssel (GBVA.1, GBVA.2) durch den Empfänger;
- Übermittlung der signierten Challenge von dem Empfänger an den Sender;
- Prüfung der Signatur durch den Sender mit Hilfe des im Speicher (115, 116) des Senders gespeicherten symmetrischen kryptographischen Schlüssels (GBVA.2, GBVA.1) des Senders,
- wobei bei der Authentifizierung der Kontrolleinheit gegenüber dem Identitätsdokument das Identitätsdokument als Sender fungiert und die Kontrolleinheit als Empfänger fungiert;
- wobei bei der Authentifizierung des Identitätsdokuments gegenüber der Kontrolleinheit das Identitätsdokument als Empfänger fungiert und die Kontrolleinheit als Sender fungiert;
oder wobei die Authentifizierung der Kontrolleinheit gegenüber dem Identitätsdokument nach b2) umfasst:
- Übermittlung einer Challenge von dem Identitätsdokument an die Kontrolleinheit;
- Signieren der Challenge mit dem zweiten Signaturschlüssel (190);
- Übermittlung der signierten Challenge und des zweiten Signaturprüfschlüssels (188) von der Kontrolleinheit an das Identitätsdokument;
- Prüfung der Signatur der signierten Challenge durch das Identitätsdokument mit Hilfe des übermittelten zweiten Signaturprüfschlüssels (188) und Prüfung einer Signatur (194) des zweiten Signaturprüfschlüssels (188) durch das Identitätsdokument mit Hilfe des zweiten Zertifikats (186), wobei die Kontrolleinheit sich erfolgreich gegenüber dem Identitätsdokument authentifiziert wenn die Prüfungen ergeben dass beide Signaturen valide sind; und/oder
wobei die Authentifizierung des Identitätsdokuments gegenüber der Kontrolleinheit nach b1) umfasst:
- Übermittlung einer Challenge von der Kontrolleinheit an das Identitätsdokument;
- Signieren der Challenge mit dem ersten Signaturschlüssel (184);
- Übermittlung der signierten Challenge und des ersten Signaturprüfschlüssels (180) von dem Identitätsdokument an die Kontrolleinheit (112);
- Prüfung der Signatur der signierten Challenge durch die Kontrolleinheit mit Hilfe des übermittelten ersten Signaturprüfschlüssels (180) und Prüfung einer Signatur (182) des ersten Signaturprüfschlüssels (180) durch die Kontrolleinheit mit Hilfe des ersten Zertifikats (192), wobei das Identitätsdokument sich erfolgreich gegenüber der Kontrolleinheit authentifiziert wenn die Prüfungen ergeben dass beide Signaturen valide sind.

6. Computerimplementiertes Verfahren nach einem der vorigen Ansprüche, wobei die Prüfung (404), ob zumindest der erste Vertrauensanker (GBVA.1) in dem ersten Speicher (116) der Kontrolleinheit gespeichert vorliegt, umfasst:
- Empfang einer Dokumentenkennung (KN) des Identitätsdokuments durch die Kontrolleinheit;
- Durchsuchen eines ersten Registers der Kontrolleinheit, welches zur verknüpften Speicherung von Dokumentenkennungen und ersten Vertrauensankern dient, durch die Kontrolleinheit;
- falls das erste Register einen mit der empfangenen Dokumentenkennung verknüpft gespeicherten ersten Vertrauensanker enthält, Verwenden des in dem ersten Register enthaltenen ersten Vertrauensankers für die gegenseitige Authentifizierung von Kontrolleinheit und Identitätsdokument;
- falls das erste Register keinen mit der empfangenen Dokumentenkennung verknüpft gespeicherten ersten Vertrauensanker enthält, Durchführung der Veranlassung der Erzeugung des ersten und zweiten Vertrauensankers durch Interoperation der Kontrolleinheit mit einem Authentifizierungsserver (140); wobei die Speicherung des erzeugten ersten Vertrauensankers in dem ersten Speicher erfolgt durch Speicherung des erzeugten ersten Vertrauensankers in dem ersten Register verknüpft mit der Dokumentenkennung.

7. Computerimplementiertes Verfahren nach einem der vorigen Ansprüche 1-6, umfassend:
- Übermittlung einer Kontrolleinheitskennung von der Kontrolleinheit an das Identitätsdokument;
- Durchsuchen eines zweiten Registers des Identitätsdokumentes, welches zur verknüpften Speicherung von Kontrolleinheitskennungen und kontrolleinheitspezifisch erstellten zweiten Vertrauensankern dient, nach der übermittelten Kontrolleinheitskennung durch das Identitätsdokument;
- falls das zweite Register gemäß der Durchsuchung einen mit der empfangenen Kontrolleinheitskennung verknüpft gespeicherten zweiten Vertrauensanker enthält, Senden einer Nachricht, dass das Identitätsdokument über einen zweiten Vertrauensanker für die Authentifizierung der Kontrolleinheit verfügt, von dem Identitätsdokument an die Kontrolleinheit; und Verwenden des in dem zweiten Register enthaltenen zweiten Vertrauensankers für die gegenseitige Authentifizierung von Kontrolleinheit und Identitätsdokument;
- falls das zweite Register keinen mit der empfangenen Kontrolleinheitskennung verknüpft gespeicherten zweiten Vertrauensanker enthält, Senden einer Nachricht, dass das Identitätsdokument über keinen zweiten Vertrauensanker für die gegenseitige Authentifizierung von Kontrolleinheit und Identitätsdokument verfügt, von dem Identitätsdokument an die Kontrolleinheit; Durchführung der Veranlassung der Erzeugung des ersten und zweiten Vertrauensankers durch Interoperation der Kontrolleinheit mit dem Authentifizierungsserver, wobei die Speicherung des erzeugten zweiten Vertrauensankers in dem zweiten Speicher erfolgt durch Speicherung des zweiten Vertrauensankers in dem zweiten Register verknüpft mit der Kontrolleinheitskennung .

8. Computerimplementiertes Verfahren nach einem der vorigen Ansprüche 1-7, mit:
- Generierung des ersten und/oder zweiten Vertrauensankers durch den Authentifizierungsserver auf Veranlassung der Kontrolleinheit;
- Authentifizierung des Authentifizierungsservers gegenüber dem Identitätsdokument;
- Authentifizierung des Nutzers gegenüber dem Identitätsdokument;
- Im Falle der erfolgreichen Authentifizierung des Nutzers und des Authentifizierungsservers gegenüber dem Identitätsdokument, Aufbau einer gesicherten Verbindung zwischen dem Authentifizierungsserver und dem Identitätsdokument;
- Übertragung des generierten zweiten Vertrauensankers über die gesicherte Verbindung von dem Authentifizierungsserver an das Identitätsdokument zur Speicherung in dem zweiten Speicher;
- Übertragung der elektronischen Identifikation (106) an den Autorisierungsserver durch Übertragungsverfahren i) oder ii),
wobei Verfahren i) umfasst:
• Auslesen der elektronischen Identifikation (106) durch den Authentifizierungsserver über die geschützte Verbindung aus dem Identitätsdokument;
• Übertragung der ausgelesenen elektronischen Identifikation und des ersten Vertrauensankers von dem Authentifizierungsserver an den Autorisierungsserver, wobei die Übertragung in geschützter Weise erfolgt;
• Weiterleitung des ersten Vertrauensankers von dem Autorisierungsserver an die Kontrolleinheit zur Speicherung im ersten Speicher;
wobei Verfahren ii) umfasst:
• Übertragung des ersten Vertrauensankers von dem Authentifizierungsserver an den Autorisierungsserver, wobei die Übertragung in geschützter Weise erfolgt;
• Weiterleitung des ersten Vertrauensankers von dem Autorisierungsserver an die Kontrolleinheit zur Speicherung im ersten Speicher;
• Verwendung des gespeicherten ersten Vertrauensankers und des zweiten Vertrauensankers zur gegenseitigen Authentifizierung von Kontrolleinheit und Identitätsdokument;
• Im Falle der erfolgreichen gegenseitigen Authentifizierung, Übermittlung der in dem Identitätsdokument gespeicherten elektronischen Identifikation (106) durch die Kontrolleinheit von dem Identitätsdokument an den Autorisierungsserver;
- wobei der Autorisierungsserver die nach i) oder ii) übertragene elektronische Identifikation zur Authentifizierung des Nutzers auswertet.

9. Computerimplementiertes Verfahren nach Anspruch 8, wobei die Übertragung der ausgelesenen elektronischen Identifikation und des ersten Vertrauensankers von dem Authentifizierungsserver an den Autorisierungsserver nach i) umfasst:
- Berechnung einer Nachricht (A2_{ENC}) durch den Authentifizierungsserver, die die ausgelesene elektronische Identifikation (106) und den ersten Vertrauensanker (GBVA.1) in verschlüsselter Form enthält, wobei zur Verschlüsselung ein vom Autorisierungsserver bereitgestellter öffentlicher Schlüssel (ÖK_{AO}) verwendet wird;
- Übertragung der Nachricht (A2_{ENC}) von dem Authentifizierungsserver an den Autorisierungsserver;
- Entschlüsselung der Nachricht durch den Autorisierungsserver zur Übertragung des durch Entschlüsselung der Nachricht gewonnenen ersten Vertrauensankers von dem Autorisierungsserver an die Kontrolleinheit.

10. Computerimplementiertes Verfahren zur Kontrolle des Zugriffs eines Nutzers (102) auf eine Sicherungsanlage (130), wobei dem Nutzer ein elektronisch auslesbares Identitätsdokument (104) beinhaltend eine elektronische Identifikation (106) des Nutzers zugeordnet ist, wobei die Sicherungsanlage eine Kontrolleinheit (112) umfasst, wobei ein Autorisierungsserver (134) dem Nutzer in Abhängigkeit von dessen elektronischen Identifikation Zugriff zu der Sicherungsanlage gewährt, wobei das Verfahren von einem Authentifizierungsserver (140) durchgeführt wird und umfasst:
- Empfang einer Anfrage (F2_{ENC}) zum Generieren eines ersten und zweiten Vertrauensankers (GBVA.1, GBVA.2) von der Kontrolleinheit durch den Authentifizierungsserver;
- auf Empfang der Anfrage, Authentifizierung des Authentifizierungsservers gegenüber dem Identitätsdokument und Generierung eines ersten (GBVA.1) und zweiten (GBVA.2) Vertrauensankers, wobei der erste und der zweite Vertrauensanker dazu ausgebildet sind, zur gegenseitigen Authentifizierung von Kontrolleinheit und Identitätsdokument verwendbar zu sein;
- im Falle einer erfolgreichen gegenseitigen Authentifizierung von Authentifizierungsserver und Identitätsdokument, Aufbau einer sicheren Verbindung zwischen Authentifizierungsserver und Identitätsdokument;
- Übermittlung des zweiten Vertrauensankers (GBVA.2) über die sichere Verbindung an das Identitätsdokument zur Speicherung in einem geschützten Speicher des Identitätsdokuments;
- Generierung einer Nachricht (A2_{ENC}), welche den ersten Vertrauensanker (GBVA.1) in verschlüsselter Form enthält, wobei zur Verschlüsselung ein öffentlicher Schlüssel des Autorisierungsservers (134) verwendet wird;
- Übermittlung der Nachricht (A2_{ENC}) an den Autorisierungsserver (134) zur Entschlüsselung der Nachricht und zur Weiterleitung des entschlüsselten ersten Vertrauensankers an die Kontrolleinheit (112);
- wobei die Erzeugung und Übermittlung der ersten und zweiten Vertrauensanker vollautomatisch und ohne ein Warten auf eine Nutzereingabe erfolgt,
wobei das Verfahren ferner umfasst:
- Bewirkung oder Ermöglichung einer Übermittlung (422) der in dem Identitätsdokument gespeicherten elektronischen Identifikation (106) des Nutzers an den Autorisierungsserver (134) durch den Authentifizierungsserver (140), sodass der Autorisierungsserver in Abhängigkeit (424) von der übermittelten (422, 423) elektronischen Identifikation den Zugriff des Nutzers auf die Sicherungsanlage gewähren (428) oder verweigern (426) kann.

11. Computerimplementiertes Verfahren nach Anspruch 10, wobei die elektronische Identifikation zur Authentifizierung des Nutzers an den Autorisierungsserver übertragen wird dadurch, dass:
- der Authentifizierungsserver die elektronische Identifikation über die sichere Verbindung ausliest und als Bestandteil der Nachricht (A2_{ENC}) an den Autorisierungsserver überträgt.

12. Authentifizierungsserver (140) mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung eines Verfahrens nach einem der Ansprüche 10-11 bewirken.

13. Computerimplementiertes Verfahren zur Kontrolle des Zugriffs eines Nutzers (102) auf eine Sicherungsanlage (130), wobei dem Nutzer ein elektronisch auslesbares Identitätsdokument (104) beinhaltend eine elektronische Identifikation (106) des Nutzers zugeordnet ist, wobei die Sicherungsanlage eine Kontrolleinheit (112) umfasst, wobei das Verfahren von der Kontrolleinheit durchgeführt wird und umfasst:
- Empfang einer Anfrage von einem Terminal (110, 124, 126), in dessen Leseschnittstelle das Identitätsdokument eingebracht wurde, zur Gewährung des Zugriffs auf die Sicherungsanlage an den Nutzer;
- Auf Empfang der Anfrage, Prüfung ob ein erster Vertrauensanker (GBVA.1) in einem geschützten ersten Speicher (116) der Kontrolleinheit gespeichert vorliegt und ob ein zweiter Vertrauensanker (GBVA.2) in einem geschützten zweiten Speicher (115) des Identitätsdokuments gespeichert vorliegt;
- Falls der erste Vertrauensanker in dem ersten Speicher bei Empfang der Anfrage vorliegt, und falls zweite Vertrauensanker (GBVA.2) in dem zweiten Speicher (115) des Identitätsdokuments gespeichert vorliegt, Verwendung des gespeicherten ersten Vertrauensankers und des zweiten Vertrauensankers (GBVA.2) zur gegenseitigen Authentifizierung von Kontrolleinheit und Identitätsdokument;
- Im Falle der erfolgreichen gegenseitigen Authentifizierung, Übermittlung der in dem Identitätsdokument gespeicherten elektronischen Identifikation (106) des Nutzers von dem Identitätsdokument an einen Autorisierungsserver (134) um dem Nutzer Zugriff auf die Sicherungsanlage in Abhängigkeit von der übermittelten elektronischen Identifikation zu ermöglichen;
- Falls der erste Vertrauensanker nicht in dem ersten Speicher gespeichert vorliegt und/oder der zweite Vertrauensanker nicht in dem zweiten Speicher gespeichert vorliegt, Veranlassung eines Authentifizierungsservers (140), den ersten und zweiten Vertrauensanker zu erzeugen; Empfang des erzeugten ersten Vertrauensankers von dem Authentifizierungsserver über den Autorisierungsserver; Speicherung des empfangenen ersten Vertrauensankers in dem ersten Speicher;
wobei die Veranlassung der Erzeugung, der Empfang und die Speicherung der ersten und zweiten Vertrauensanker vollautomatisch und ohne ein Warten auf eine Nutzereingabe erfolgt.

14. Computerimplementiertes Verfahren nach Anspruch 13, wobei die elektronische Identifikation zur Authentifizierung des Nutzers an den Autorisierungsserver übertragen wird dadurch, dass:
- die Kontrolleinheit den generierten und übertragenen ersten Vertrauensanker zur Authentifizierung gegenüber dem Identitätsdokument verwendet; und die Kontrolleinheit nach einer gegenseitigen Authentifizierung von der Kontrolleinheit und dem Identitätsdokument die elektronische Identifikation ausliest und an den Autorisierungsserver überträgt;
wobei die Übertragung der ausgelesenen elektronischen Identifikation an den Autorisierungsserver dem Autorisierungsserver einen Vergleich der elektronischen Identifikation mit einem Referenzwert (150) ermöglicht, wobei die Gewährung (426) des Zugriffs des Nutzers auf die Sicherungsanlage nur bei Übereinstimmung der elektronischen Identifikation mit dem Referenzwert gewährt wird.

15. Kontrolleinheit (112) mit einer Kommunikationsschnittstelle, einem Prozessor und einem computerlesbaren Speichermedium, wobei das Speichermedium computerlesbare Instruktionen enthält, welche bei Ausführung durch den Prozessor die Durchführung eines Verfahrens nach Anspruch 13 oder 14 bewirken.

## Claims

1. Computer-implemented method for controlling access of a user (102) to a security system (130), wherein the user is assigned an electronically readable identification document (104) containing an electronic identification (106) of the user, wherein the security system comprises a control unit (112), the method having the steps of:
- receiving (402) a permission request (202) for access of the user to the security system, wherein the permission request is received by the control unit;
- upon receipt of the permission request, verifying (404), by the control unit, whether a first trust anchor (GBVA.1) is present in a protected first memory (116) of the control unit, and whether a second trust anchor (GBVA.2) is present in a protected second memory (115) of the identification document;
- in the case that the first and the second trust anchor are present in the memories when the permission request is received, using (406) the stored first trust anchor and the second trust anchor (GBVA.2) for mutual authentication of the control unit and the identification document;
- in the case (420) of the successful mutual authentication of the identification document and the control unit (112), transmitting (423) the electronic identification (106) of the user stored in the identification document to an authorisation server (134) by the control unit;
- in the case that the first trust anchor is not present in the first memory and/or the second trust anchor is not present in the second memory, prompting (408) an authentication server (140) by the control unit to generate the first trust anchor and to transmit it (410) to the control unit and to generate the second trust anchor and to transmit it (412) to the identification document; storing (414) the transmitted first trust anchor by the control unit in the first memory and storing (416) the transmitted second trust anchor by the identification document in the second memory; and transmitting (422) the electronic identification (106) of the user stored in the identification document to the authorisation server (134), wherein the transmission (422) is effected or enabled by the authentication server;
- granting (428) or denying (426) the access of the user to the security system by the authorisation server depending (424) on the transmitted (422, 423) electronic identification,
- wherein the verification, generation and transmission of the first and second trust anchor are performed fully automatically, without waiting for a user input.

2. Computer-implemented method according to one of the preceding claims, wherein the first and second trust anchor have a validity restriction, wherein the verification (404) by the control unit as to whether the first and/or second trust anchor are stored comprises a verification of the validity of the first and/or second trust anchor, wherein an invalid first trust anchor is treated by the control unit during the verification (404) as a first trust anchor not stored, and wherein an invalid second trust anchor is treated by the identification document during the verification (404) as a second trust anchor not stored, wherein the verification of the validity of the first trust anchor by the control unit comprises the steps of:
- following each successful mutual authentication of the control unit and identification document by means of the first and second trust anchor, increasing a counter (Z1), which is stored in the control unit, wherein the first trust anchor is deemed to be invalid if the counter (Z1) has reached a maximum value.

3. Computer-implemented method according to one of the preceding claims, comprising the steps of:
- generating the first and/or second trust anchor when prompted (408) by the control unit, wherein the generation is performed by an authentication server alone or by the authentication server in cooperation with the identification document;
- wherein the first trust anchor is transmitted (410) to the control unit and the second trust anchor is transmitted (412) to the identification document in each case in protected form.

4. Computer-implemented method according to one of the preceding claims, wherein:
a) the first trust anchor (GBVA.1) and the second trust anchor (GBVA.2) form a symmetric cryptographic key pair; or
b1) the first trust anchor (GBVA.1) comprises a first certificate (192), wherein the first certificate (192) allows a verification of the authenticity of a public first signature verification key (180), which is provided by the identification document, wherein a private first signature key (184) is assigned to the public first signature verification key; and/or
b2) the second trust anchor (GBVA.2) comprises a second certificate (186), wherein the second certificate (186) allows a verification of the authenticity of a public second signature verification key (188), which is provided by the control unit, wherein a private second signature key (190) is assigned to the public second signature verification key.

5. Computer-implemented method according to claim 4,
wherein the mutual authentication of the control unit and the identification document according to a) in each case comprises the steps of:
- transmitting a challenge from a sender to a receiver;
- signing the challenge, by the receiver, with the symmetric cryptographic key (GBVA.1, GBVA.2) stored in the memory (116, 115) of the receiver;
- transmitting the signed challenge from the receiver to the sender;
- verifying the signature by the sender with the aid of the symmetric cryptographic key (GBVA.1, GBVA.2) of the sender stored in the memory (115, 116) of the sender,
- wherein, for the authentication of the control unit to the identification document, the identification document functions as a sender and the control unit functions as a receiver;
- wherein, for the authentication of the identification document to the control unit, the identification document functions as a receiver and the control unit functions as a sender;
or wherein the authentication of the control unit to the identification document according to b2) comprises the steps of:
- transmitting a challenge from the identification document to the control unit;
- signing the challenge with the second signature key (190);
- transmitting the signed challenge and the second signature verification key (188) from the control unit to the identification document;
- verifying the signature of the signed challenge by the identification document with the aid of the transmitted second signature verification key (188) and verifying a signature (194) of the second signature verification key (188) by the identification document with the aid of the second certificate (186), wherein the control unit is successfully authenticated to the identification document if the verifications indicate that both signatures are valid; and/or
wherein the authentication of the identification document to the control unit according to b1) comprises the steps of:
- transmitting a challenge from the control unit to the identification document;
- signing the challenge with the first signature key (184);
- transmitting the signed challenge and the first signature verification key (180) from the identification document to the control unit (112);
- verifying the signature of the signed challenge by the control unit with the aid of the transmitted first signature verification key (180) and verifying a signature (182) of the first signature verification key (180) by the control unit with the aid of the first certificate (192), wherein the identification document is successfully authenticated to the control unit if the verifications indicate that both signatures are valid.

6. Computer-implemented method according to one of the preceding claims, wherein the verification (404) as to whether at least the first trust anchor (GBVA.1) is present in the first memory (116) of the control unit comprises the steps of:
- receiving a document identifier (KN) of the identification document by the control unit;
- searching, by the control unit, a first register of the control unit which is used to store documents identifiers and first trust anchors in linked fashion;
- if the first register contains a first trust anchor stored linked with the received document identifier, using the first trust anchor contained in the first register for the mutual authentication of the control unit and identification document;
- if the first register does not contain a first trust anchor stored linked with the received document identifier, executing the prompting of the generation of the first and second trust anchor by interoperation of the control unit with an authentication server (140); wherein the generated first trust anchor is stored in the first memory by storing the generated first trust anchor in the first register linked with the document identifier.

7. Computer-implemented method according to one of preceding claims 1-6, comprising the steps of:
- transmitting a control unit identifier from the control unit to the identification document;
- searching, by the identification document, a second register of the identification document, which is used to store, in linked fashion, control unit identifiers and second trust anchors created specifically for each control unit, for the transmitted control unit identifier;
- if the search reveals that the second register contains a second trust anchor stored linked with the received control unit identifier, sending a message from the identification document to the control unit that the identification document has a second trust anchor for the authentication of the control unit; and using the second trust anchor contained in the second register for the mutual authentication of the control unit and identification document;
- if the second register does not contain a second trust anchor stored linked with the received control unit identifier, sending a message from the identification document to the control unit that the identification document does not have a second trust anchor for the mutual authentication of the control unit and identification document; executing the prompting of the generation of the first and second trust anchor by inter-operation of the control unit with the authentication server, wherein the generated second trust anchor is stored in the second memory by storing the second trust anchor in the second register linked with the control unit identifier.

8. Computer-implemented method according to one of preceding claims 1-7, comprising the steps of:
- generating the first and/or second trust anchor by the authentication server when prompted by the control unit;
- authenticating the authentication server to the identification document;
- authenticating the user to the identification document;
- in the event of successful authentication of the user and of the authentication server to the identification document, establishing a secured link between the authentication server and the identification document;
- transmitting the generated second trust anchor via the secured link from the authentication server to the identification document for storing in the second memory;
- transmitting the electronic identification (106) to the authorisation server by transmission method i) or ii),
wherein method i) comprises the steps of:
• reading the electronic identification (106) from the identification document by the authentication server via the protected link;
• transmitting the read electronic identification and the first trust anchor from the authentication server to the authorisation server, wherein the transmission is performed in protected fashion;
• forwarding the first trust anchor from the authorisation server to the control unit for storage in the first memory;
wherein method ii) comprises the steps of:
• transmitting the first trust anchor from the authentication server to the authorisation server, wherein the transmission is performed in protected fashion;
• forwarding the first trust anchor from the authorisation server to the control unit for storage in the first memory;
• using the stored first trust anchor and the second trust anchor for mutual authentication of the control unit and identification document;
• in the case of successful mutual authentication, transmitting the electronic identification (106) stored in the identification document from the identification document to the authorisation server by the control unit;
- wherein the authorisation server evaluates the electronic identification transmitted in accordance with i) or ii) for authentication of the user.

9. Computer-implemented method according to claim 8, wherein the transmission of the read electronic identification and of the first trust anchor from the authentication server to the authorisation server according to i) comprises the steps of:
- calculating a message (A2_{ENC}) by the authentication server which contains the read electronic identification (106) and the first trust anchor (GBVA.1) in encrypted form, wherein a public key (ÖK_{AO}) provided by the authorisation server is used for the encryption;
- transmitting the message (A2_{ENC}) from the authentication server to the authorisation server;
- decrypting the message by the authorisation server for transmission of the first trust anchor obtained by decryption of the message from the authorisation server to the control unit.

10. Computer-implemented method for controlling the access of a user (102) to a security system (130), wherein the user is assigned an electronically readable identification document (104) containing an electronic identification (106) of the user, wherein the security system comprises a control unit (112), wherein an authorisation server (134) grants the user access to the security system depending on the electronic identification of the user, wherein the method is performed by an authentication server (140) and comprises the steps of:
- receiving a request (F2_{ENC}) from the control unit for generation of a first and second trust anchor (GBVA.1, GBVA.2) by the authentication server;
- upon receipt of the request, authenticating the authentication server to the identification document and generating a first trust anchor (GBVA.1) and second trust anchor (GBVA.2), wherein the first and the second trust anchor are designed to be usable for mutual authentication of the control unit and identification document;
- in the case of successful mutual authentication of the authentication server and identification document, establishing a secure link between the authentication server and identification document;
- transmitting the second trust anchor (GBVA.2) via the secure link to the identification document for storage in a protected memory of the identification document;
- generating a message (A2_{ENC}) which contains the first trust anchor (GBVA.1) in encrypted form, wherein a public key of the authorisation server (134) is used for the encryption;
- transmitting the message (A2_{ENC}) to the authorisation server (134) for decryption of the message and for forwarding of the decrypted first trust anchor to the control unit (112);
- wherein the generation and transmission of the first and second trust anchor are performed fully automatically, without waiting for a user input,
wherein the method also comprises the steps of:
- effecting or enabling a transmission (422) of the electronic identification (106) of the user stored in the identification document to the authorisation server (134) by the authentication server (140) so that the authorisation server may grant (428) or deny (426) the access of the user to the security system depending (424) on the transmitted (422, 423) electronic identification.

11. Computer-implemented method according to claim 10, wherein the electronic identification for authentication of the user is transmitted to the authorisation server in that:
- the authentication server reads the electronic identification via the secure link and transmits it as part of the message (A2_{ENC}) to the authorisation server.

12. Authentication server (140) with a communication interface, a processor, and a computer-readable storage medium, wherein the storage medium contains computer-readable instructions which, when run by the processor, cause a method according to one of claims 10-11 to be carried out.

13. Computer-implemented method for controlling the access of a user (102) to a security system (130), wherein the user is assigned an electronically readable identification document (104) containing an electronic identification (106) of the user, wherein the security system comprises a control unit (112), wherein the method is carried out by the control unit and comprises the steps of:
- receiving a request from a terminal (110, 124, 126), into whose reading interface the identification document has been introduced, to grant the user access to the security system;
- upon receipt of the request, verifying whether a first trust anchor (GBVA.1) is present in a protected first memory (116) of the control unit and whether a second trust anchor (GBVA.2) is present in a protected second memory (115) of the identification document;
- if the first trust anchor is present in the first memory when the request is received, and if the second trust anchor (GBVA.2) is present in the second memory (115) of the identification document, using the stored first trust anchor and the second trust anchor (GBVA.2) for mutual authentication of the control unit and identification document;
- in the case of successful mutual authentication, transmitting the electronic identification (106) of the user stored in the identification document from the identification document to an authorisation server (134) in order to allow the user access to the security system depending on the transmitted electronic identification;
- if the first trust anchor is not present in the first memory and/or the second trust anchor is not present in the second memory, prompting an authentication server (140) to generate the first and second trust anchor; receiving the generated first trust anchor from the authentication server via the authorisation server; storing the received first trust anchor in the first memory;
wherein the prompting of the generation, the receipt, and the storing of the first and second trust anchor are performed fully automatically, without waiting for a user input.

14. Computer-implemented method according to claim 13, wherein the electronic identification for authentication of the user is transmitted to the authorisation server in that:
- the control unit uses the generated and transmitted first trust anchor for authentication to the identification document; and the control unit, following mutual authentication of the control unit and the identification document, reads the electronic identification and transmits it to the authorisation server;
wherein the transmission of the read electronic identification to the authorisation server allows the authorisation server to perform a comparison of the electronic identification with a reference value (150), wherein the granting (426) of the access of the user to the security system is allowed only in the event that the electronic identification matches the reference value.

15. Control unit (112) with a communication interface, a processor, and a computer-readable storage medium, wherein the storage medium contains computer-readable instructions which, when run by the processor, cause a method according to claim 13 or 14 to be carried out.

## Revendications

1. Procédé mis en œuvre par ordinateur permettant le contrôle de l'accès d'un utilisateur (102) à un système de sécurité (130), dans lequel un document d'identité (104) lisible électroniquement contenant une identification (106) électronique de l'utilisateur est associé à l'utilisateur, dans lequel le système de sécurité comprend une unité de contrôle (112), avec :
- la réception (402) d'une demande d'autorisation (202) pour l'accès de l'utilisateur au système de sécurité, où la demande d'autorisation est reçue par l'unité de contrôle ;
- suite à la réception de la demande d'autorisation, la vérification (404), par l'unité de contrôle, si un premier certificat de confiance (GBVA.1) est présent stocké dans une première mémoire (116) sécurisée de l'unité de contrôle, et si un deuxième certificat de confiance (GBVA.2) est présent stocké dans une deuxième mémoire (115) sécurisée du document d'identité ;
- dans le cas où le premier et le deuxième certificat de confiance sont présents stockés lors de la réception de la demande d'autorisation, l'emploi (406) du premier certificat de confiance stocké et du deuxième certificat de confiance (GBVA.2) pour l'authentification réciproque de l'unité de contrôle et du document d'identité ;
- dans le cas (420) de l'authentification réciproque réussie du document d'identité et de l'unité de contrôle (112), la transmission (423) de l'identification (106) électronique de l'utilisateur stockée dans le document d'identité à un serveur d'autorisation (134) par l'unité de contrôle ;
- dans le cas où le premier certificat de confiance n'est pas présent dans la première mémoire, et/ou le deuxième certificat de confiance n'est pas présent stocké dans la deuxième mémoire, l'incitation (408) d'un serveur d'authentification (140), par l'unité de contrôle, à créer le premier certificat de confiance et à le transmettre (410) à l'unité de contrôle, et à créer le deuxième certificat de confiance et à le transmettre (412) au document d'identité ; le stockage (414) du premier certificat de confiance transmis par l'unité de contrôle dans la première mémoire et le stockage (416) du deuxième certificat de confiance transmis par le document d'identité dans la deuxième mémoire ; et la transmission (422) de l'identification (106) électronique de l'utilisateur stockée dans le document d'identité au serveur d'autorisation (134), où la transmission (422) est provoquée ou rendue possible par le serveur d'authentification ;
- l'accord (428) ou le refus (426) de l'accès de l'utilisateur au système de sécurité par le serveur d'autorisation en fonction (424) de l'identification électronique transmise (422, 423),
- où la vérification, la création et la transmission du premier et du deuxième certificat de confiance ont lieu de manière totalement automatique et sans attente d'une indication de l'utilisateur.

2. Procédé mis en œuvre par ordinateur selon l'une des revendications précédentes, dans lequel le premier et le deuxième certificat de confiance présentent une limitation de validité, dans lequel la vérification (404), par l'unité de contrôle, si le premier et/ou le deuxième certificat de confiance sont présents stockés, comprend une vérification du premier et/ou du deuxième certificat de confiance en ce qui concerne leur validité, dans lequel un premier certificat de confiance non valide est traité par l'unité de contrôle lors de la vérification (404) comme un premier certificat de confiance se situant non stocké et dans lequel un deuxième certificat de confiance non valide lors de la vérification (404) est traité par le document d'identité comme un deuxième certificat de confiance se situant non stocké, dans lequel la vérification du premier certificat de confiance concernant sa validité par l'unité de contrôle comprend :
- après chaque authentification réciproque réussie de l'unité de contrôle et du document d'identité au moyen du premier et du deuxième certificat de confiance, l'augmentation d'un compteur (Z1) qui est stocké dans l'unité de contrôle, dans lequel le premier certificat de confiance est considéré comme non valide dans le cas où le compteur (Z1) a atteint une valeur maximale.

3. Procédé mis en œuvre par ordinateur selon l'une des revendications précédentes, comprenant :
- la création du premier et/ou du deuxième certificat de confiance suite à l'incitation (408) de l'unité de contrôle, où la création est effectuée par le serveur d'authentification seul ou par le serveur d'authentification en collaboration avec le document d'identité ;
dans lequel la transmission (410) du premier certificat de confiance à l'unité de contrôle et la transmission (412) du deuxième certificat de confiance au document d'identité ont lieu respectivement sous forme sécurisée.

4. Procédé mis en œuvre par ordinateur selon l'une des revendications précédentes, dans lequel :
a) le premier (GBVA.1) et le deuxième (GBVA.2) certificat de confiance forment une paire de clés cryptographiques symétrique ; ou
b1) le premier (GBVA.1) certificat de confiance comprend un premier certificat (192), où le premier certificat (192) permet une vérification de l'authenticité d'une première clé de vérification de signature (180) publique qui est fournie par le document d'identité, où une première clé de signature (184) privée est associée à la première clé de vérification de signature publique ; et/ou
b2) le deuxième (GBVA.2) certificat de confiance comprend un deuxième certificat (186), où le deuxième certificat (186) permet une vérification de l'authenticité d'une deuxième clé de vérification de signature (188) publique qui est fournie par l'unité de contrôle, où une deuxième clé de signature (190) privée est associée à la deuxième clé de vérification de signature publique.

5. Procédé mis en œuvre par ordinateur selon la revendication 4,
dans lequel l'authentification réciproque de l'unité de contrôle et du document d'identité selon a) comprend respectivement :
- la transmission d'une problématique d'un émetteur à un récepteur ;
- la signature de la problématique avec la clé cryptographique symétrique (GBVA.1, GBVA.2) stockée dans la mémoire (116, 115) du récepteur par le récepteur ;
- la transmission de la problématique signée du récepteur à l'émetteur ;
- la vérification de la signature par l'émetteur à l'aide de la clé cryptographique symétrique (GBVA.1, GBVA.2) de l'émetteur stockée dans la mémoire (115, 116) de l'émetteur,
- où, lors de l'authentification de l'unité de contrôle vis-à-vis du document d'identité, le document d'identité fonctionne en tant qu'émetteur et l'unité de contrôle fonctionne en tant que récepteur ;
- où, lors de l'authentification du document d'identité vis-à-vis de l'unité de contrôle, le document d'identité fonctionne en tant que récepteur et l'unité de contrôle fonctionne en tant qu'émetteur ;
ou dans lequel l'authentification de l'unité de contrôle vis-à-vis du document d'identité selon b2) comprend :
- la transmission d'une problématique du document d'identité à l'unité de contrôle ;
- la signature de la problématique avec la deuxième clé de signature (190) ;
- la transmission de la problématique signée et de la deuxième clé de vérification de signature (188) de l'unité de contrôle au document d'identité ;
- la vérification de la signature de la problématique signée par le document d'identité à l'aide de la deuxième clé de vérification de signature (188) transmise et la vérification d'une signature (194) de la deuxième clé de vérification de signature (188) par le document d'identité à l'aide du deuxième certificat (186), où l'unité de contrôle s'authentifie avec succès vis-à-vis du document d'identité lorsque les vérifications ont pour résultat que les deux signatures sont valides ; et/ou
ou dans lequel l'authentification du document d'identité vis-à-vis de l'unité de contrôle selon b1) comprend :
- la transmission d'une problématique de l'unité de contrôle au document d'identité ;
- la signature de la problématique avec la première clé de signature (184) ;
- la transmission de la problématique signée et de la première clé de vérification de signature (180) du document d'identité à l'unité de contrôle (112) ;
- la vérification de la signature de la problématique signée par l'unité de contrôle à l'aide de la première clé de vérification de signature (180) transmise et la vérification d'une signature (182) de la première clé de vérification de signature (180) par l'unité de contrôle à l'aide du premier certificat (192), où le document d'identité s'authentifie avec succès vis-à-vis de l'unité de contrôle lorsque les vérifications ont pour résultat que les deux signatures sont valides.

6. Procédé mis en œuvre par ordinateur selon l'une des revendications précédentes, dans lequel la vérification (404) si au moins le premier certificat de confiance (GBVA.1) est présent stocké dans la première mémoire (116) de l'unité de contrôle comprend :
- la réception d'un identifiant de document (KN) du document d'identité par l'unité de contrôle ;
- l'exploration d'un premier registre de l'unité de contrôle, lequel sert pour le stockage à l'état associé d'identifiants de documents et de premiers certificats de confiance par l'unité de contrôle ;
- dans le cas où le premier registre contient un premier certificat de confiance stocké en association avec l'identifiant de document reçu, l'emploi du premier certificat de confiance contenu dans le premier registre pour l'authentification réciproque de l'unité de contrôle et du document d'identité ;
- dans le cas où le premier registre ne contient aucun premier certificat de confiance stocké en association avec l'identifiant de document reçu, l'exécution de l'incitation à la création du premier et du deuxième certificat de confiance par une interopération de l'unité de contrôle avec un serveur d'authentification (140) ; où le stockage du premier certificat de confiance créé a lieu dans la première mémoire par le stockage du premier certificat de confiance créé dans un premier registre en association avec l'identifiant de document.

7. Procédé mis en œuvre par ordinateur selon l'une des revendications précédentes 1 à 6, comprenant :
- la transmission d'un identifiant d'unité de contrôle de l'unité de contrôle au document d'identité ;
- l'exploration d'un deuxième registre du document d'identité, lequel sert pour le stockage en association d'identifiants d'unité de contrôle et de deuxièmes certificats de confiance établis de manière spécifique pour l'unité de contrôle d'après l'identifiant d'unité de contrôle transmis par le document d'identité ;
- dans le cas où le deuxième registre contient un deuxième certificat de confiance stocké en association avec l'identifiant d'unité de contrôle reçu conformément à l'exploration, l'envoi d'un message que le document d'identité dispose d'un deuxième certificat de confiance pour l'authentification de l'unité de contrôle, à partir du document d'identité à l'unité de contrôle ; et
l'utilisation du deuxième certificat de confiance contenu dans le deuxième registre pour l'authentification réciproque de l'unité de contrôle et du document d'identité ;
- dans le cas où le deuxième registre ne contient pas de deuxième certificat de confiance stocké en association avec l'identifiant d'unité de contrôle reçu, l'envoi d'un message que le document d'identité ne dispose pas d'un deuxième certificat de confiance pour l'authentification réciproque de l'unité de contrôle et du document d'identité, à partir du document d'identité à l'unité de contrôle ; l'exécution de l'incitation à la création du premier et du deuxième certificat de confiance par une interopération de l'unité de contrôle avec le serveur d'authentification, où le stockage du deuxième certificat de confiance créé a lieu dans la deuxième mémoire par le stockage du deuxième certificat de confiance en association avec l'identifiant d'unité de contrôle dans le deuxième registre.

8. Procédé mis en œuvre par ordinateur selon l'une des revendications précédentes 1 à 7, avec :
- la génération du premier et/ou du deuxième certificat de confiance par le serveur d'authentification suite à l'incitation par l'unité de contrôle ;
- l'authentification de l'utilisateur vis-à-vis du document d'identité ;
- dans le cas de l'authentification de l'utilisateur et du serveur d'authentification vis-à-vis du document d'identité réussie, l'établissement d'une connexion sécurisée entre le serveur d'authentification et le document d'identité ;
- la transmission du deuxième certificat de confiance généré du serveur d'authentification au document d'identité par le biais de la connexion sécurisée pour le stockage dans la deuxième mémoire ;
- la transmission de l'identification (106) électronique au serveur d'autorisation par le procédé de transmission i) ou ii),
où le procédé i) comprend :
• la lecture de l'identification (106) électronique par le serveur d'authentification à partir du document d'identité par le biais de la connexion sécurisée ;
• la transmission de l'identification électronique lue et du premier certificat de confiance du serveur d'authentification au serveur d'autorisation, où la transmission a lieu de manière sécurisée ;
• la retransmission du premier certificat de confiance du serveur d'autorisation à l'unité de contrôle pour le stockage dans la première mémoire ;
où le procédé ii) comprend :
• la transmission du premier certificat de confiance du serveur d'authentification au serveur d'autorisation, où la transmission a lieu de manière sécurisée ;
• la retransmission du premier certificat de confiance du serveur d'autorisation à l'unité de contrôle pour le stockage dans la première mémoire ;
• l'emploi du premier certificat de confiance stocké et du deuxième certificat de confiance pour l'authentification réciproque de l'unité de contrôle et du document d'identité ;
• dans le cas de l'authentification réciproque réussie, la transmission de l'identification (106) électronique stockée dans le document d'identité par l'unité de contrôle du document d'identité au serveur d'autorisation ;
- où le serveur d'autorisation évalue l'identification électronique transmise selon i) ou ii) pour l'authentification de l'utilisateur.

9. Procédé mis en œuvre par ordinateur selon la revendication 8, dans lequel la transmission de l'identification électronique lue et du premier certificat de confiance du serveur d'authentification au serveur d'autorisation selon i) comprend :
- le calcul d'un message (A2_{ENC}), par le serveur d'authentification, qui contient l'identification (106) électronique lue et le premier certificat de confiance (GBVA.1) sous forme cryptée, où une clé publique (ÖK_{AO}) fournie par le serveur d'autorisation est employée pour le cryptage,
- la transmission du message (A2_{ENC}) du serveur d'authentification au serveur d'autorisation ;
- le décryptage du message par le serveur d'autorisation pour la transmission du premier certificat de confiance produit par le décryptage du message du serveur d'autorisation à l'unité de contrôle.

10. Procédé mis en œuvre par ordinateur pour le contrôle d'un accès d'un utilisateur (102) à un système de sécurité (130), dans lequel un document d'identité (104) lisible électroniquement contenant une identification (106) électronique de l'utilisateur est associé à l'utilisateur, dans lequel le système de sécurité comprend une unité de contrôle (112), dans lequel un serveur d'autorisation (134) accorde à l'utilisateur, en fonction de son identification électronique, un accès au système de sécurité, où le procédé est exécuté par un serveur d'authentification (140) et comprend :
- la réception d'une demande (F2_{ENC}) pour la génération d'un premier et d'un deuxième certificat de confiance (GBVA.1, GBVA.2) de l'unité de contrôle par le serveur d'authentification ;
- suite à la réception de la demande, l'authentification du serveur d'authentification vis-à-vis du document d'identité et la génération d'un premier (GBVA.1) et d'un deuxième (GBVA.2) certificat de confiance, où le premier et le deuxième certificat de confiance sont conçus pour pouvoir être employés pour l'authentification réciproque de l'unité de contrôle et du document d'identité ;
- dans le cas d'une authentification réciproque du serveur d'authentification et du document d'identité réussie, l'établissement d'une connexion sécurisée entre le serveur d'authentification et le document d'identité ;
- la transmission du deuxième certificat de confiance (GBVA.2) au document d'identité par le biais de la connexion sécurisée pour le stockage dans une mémoire sécurisée du document d'identité ;
- la génération d'un message (A2_{ENC}), lequel contient le premier certificat de confiance (GBVA.1) sous forme cryptée, où une clé publique du serveur d'autorisation (134) est employée pour le cryptage ;
- la transmission du message (A2_{ENC}) au serveur d'autorisation (134) pour le décryptage du message et pour la retransmission du premier certificat de confiance décrypté à l'unité de contrôle (112) ;
- où la création et la transmission du premier et du deuxième certificat de confiance ont lieu de manière totalement automatique et sans l'attente d'une indication d'utilisateur,
où le procédé comprend en outre :
- l'incitation ou le fait de rendre possible une transmission (422) de l'identification (106) électronique de l'utilisateur stockée dans le document d'identité au serveur d'autorisation (134) par le serveur d'authentification (140), de sorte que le serveur d'autorisation puisse accorder (428) ou refuser (426) l'accès de l'utilisateur au système de sécurité en fonction (424) de l'identification électronique transmise (422, 423).

11. Procédé mis en œuvre par ordinateur selon la revendication 10, dans lequel l'identification électronique pour l'authentification de l'utilisateur est transmise au serveur d'autorisation en ce que :
- le serveur d'authentification lit l'identification électronique par le biais de la connexion sécurisée et la transmet en tant que composante du message (A2_{ENC}) au serveur d'autorisation.

12. Serveur d'authentification (140) avec une interface de communication, un processeur et un support de stockage lisible par ordinateur, dans lequel le support de stockage contient des instructions lisibles par ordinateur, lesquelles, lors de l'exécution par le processeur, provoquent la réalisation d'un procédé selon l'une des revendications 10 et 11.

13. Procédé mis en œuvre par ordinateur pour le contrôle de l'accès d'un utilisateur (102) à un système de sécurité (130), dans lequel un document d'identité (104) lisible électroniquement contenant une identification (106) électronique de l'utilisateur est associé à l'utilisateur, dans lequel le système de sécurité comprend une unité de contrôle (112), où le procédé est exécuté par l'unité de contrôle et comprend :
- la réception d'une demande, par un terminal (110, 124, 126), dans l'interface de lecture duquel un document d'identité a été incorporé, pour l'accord de l'accès au système de sécurité à l'utilisateur ;
- suite à la réception de la demande, la vérification si un premier certificat de confiance (GBVA.1) est présent stocké dans une première mémoire (116) sécurisée de l'unité de contrôle, et si un deuxième certificat de confiance (GBVA.2) est présent stocké dans une deuxième mémoire (115) sécurisée du document d'identité ;
- dans le cas où le premier certificat de confiance est présent dans la première mémoire lors de la réception de la demande, et dans le cas où le deuxième certificat de confiance (GBVA.2) est présent stocké dans la deuxième mémoire (115) du document d'identité, l'emploi du premier certificat de confiance stocké et du deuxième certificat de confiance (GBVA.2) pour l'authentification réciproque de l'unité de contrôle et du document d'identité ;
- dans le cas de l'authentification réciproque réussie, la transmission de l'identification (106) électronique de l'utilisateur stockée dans le document d'identité du document d'identité à un serveur d'autorisation (134), afin de permettre à l'utilisateur un accès au système de sécurité en fonction de l'identification électronique transmise,
- dans le cas où le premier certificat de confiance n'est pas présent dans la première mémoire, et/ou le deuxième certificat de confiance n'est pas présent stocké dans la deuxième mémoire, l'incitation d'un serveur d'authentification (140) à créer le premier et le deuxième certificat de confiance ; la réception du premier certificat de confiance créé par le serveur d'authentification par le biais du serveur d'autorisation ; le stockage du premier certificat de confiance reçu dans la première mémoire ;
- où l'incitation à la création, à la réception et au stockage du premier et du deuxième certificat de confiance ont lieu de manière totalement automatique et sans attente d'une indication de l'utilisateur.

14. Procédé mis en œuvre par ordinateur selon la revendication 13, dans lequel l'identification électronique pour l'authentification de l'utilisateur est transmise au serveur d'autorisation en ce que :
- l'unité de contrôle emploie le premier certificat de confiance généré et transmis pour l'authentification vis-à-vis du document d'identité ; et l'unité de contrôle lit l'identification électronique après l'authentification réciproque par l'unité de contrôle et le document d'identité et la transmet au serveur d'autorisation ;
dans lequel la transmission de l'identification électronique lue au serveur d'autorisation permet au serveur d'autorisation une comparaison de l'identification électronique avec une valeur de référence (150), où l'accord (426) pour l'accès de l'utilisateur au système de sécurité n'est accordé que pour une concordance de l'identification électronique et de la valeur de référence.

15. Unité de contrôle (112) dotée d'une interface de communication, d'un processeur et d'un support de stockage lisible par ordinateur, dans laquelle le support de stockage contient des instructions lisibles par ordinateur, lesquelles, lors de l'exécution par le processeur, provoquent la réalisation d'un procédé selon la revendication 13 ou la revendication 14.
